(19) Europäisches Patentamt
European Patent Office
Office européen des brevets

(11) EP 0 943 514 B1

(12) EUROPÄISCHE PATENTSCHRIFT

(45) Veröffentlichungstag und Bekanntmachung des Hinweises auf die Patenterteilung:
**18.05.2005 Patentblatt 2005/20**

(51) Int Cl.[7]: **B60T 8/24**

(21) Anmeldenummer: **99103834.0**

(22) Anmeldetag: **27.02.1999**

# (54) Verfahren und Einrichtung zur Fahrdynamik-Regelung an einem Strassenfahrzeug

Process and device for the drive-dynamism-regulation on a road-vehicle

Procédé et dispositif pour le règlement de dynamique de marche d'un véhicule de rue

(84) Benannte Vertragsstaaten:
**DE ES FR GB IT NL SE**

(30) Priorität: **20.03.1998 DE 19812237**

(43) Veröffentlichungstag der Anmeldung:
**22.09.1999 Patentblatt 1999/38**

(73) Patentinhaber: **DaimlerChrysler AG**
**70567 Stuttgart (DE)**

(72) Erfinder:
- **Boros, Imre**
  **72649 Wolfschlugen (DE)**
- **Hamann, Dieter Dr.**
  **71334 Waiblingen (DE)**
- **Maurath, Rudolf**
  **73728 Esslingen (DE)**
- **Pressel, Joachim**
  **70825 Korntal-Münchingen (DE)**
- **Reiner, Michael**
  **70736 Fellbach (DE)**

(56) Entgegenhaltungen:
**DE-A- 3 731 756** **DE-A- 4 026 626**

- **A. VAN ZANTEN ET AL.: "FDR - Die Fahrdynamik-regelung von Bosch" ATZ AUTOMOBILTECHNISCHE ZEITSCHRIFT, Bd. 96, Nr. 11, November 1994 (1994-11), Seiten 674-689, XP002900496**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 943 514 B1

## Beschreibung

Die Erfindung betrifft ein Verfahren zur Fahrdynamik-Regelung an einem als Sattelzug oder Gliederzug, der aus einem Zugfahrzeug und einem Anhängerfahrzeug besteht, ausgebildeten Straßenfahrzeug, wonach taktgesteuert in zeitlich aufeinanderfolgenden Zyklen vorgebbarer Dauer $T_K$ von z.B. 5 bis 10 ms mittels eines Simulationsrechners einer einen selbsttätigen Ablauf der Regelung vermittelnden elektronischen Steuereinheit auf der Basis eines das Straßenfahrzeug hinsichlich seiner konstruktiv bedingten Kenngrößen und seines Beladungszustandes sowie seiner Betriebsdaten repräsentierenden Modells aus gemessenen aktuellen Werten des Lenkwinkels $\delta$, der Fahrzeuggeschwindigkeit $v_x$ und ggf. der Querbeschleunigung $a_q$ Referenzgrößen für mindestens die Giergeschwindigkeit $\dot{\Psi}$ und den Schwimmwinkel $\beta$ des Straßenfahrzeugs generiert werden und aus einem Vergleich der Referenzgröße $\dot{\Psi}_{so}$ als Sollwert der Giergeschwindigkeit des Straßenfahrzeugs mit mittels einer Giergeschwindigkeits-Sensoreinrichtung fortlaufend erfaßten Ist-Werten $\dot{\Psi}_I$ der Giergeschwindigkeit des Straßenfahrzeugs Ansteuersignale zu einer Abweichungen des jeweiligen Ist-Wertes vom jeweils maßgeblichen Sollwert kompensatorisch beeinflussenden Aktivierung mindestens einer Radbremse des Straßenfahrzeugs und/oder zur Reduzierung des Motor-Antriebsmoments erzeugt werden.

Für ein Einzelfahrzeug ist ein Fahrdynamik-Regelungsverfahren (FDR) dieser Art durch die ATZ Automobiltechnische Zeitschrift 96 (1994), Heft 11, Seiten 674 bis 689 bekannt.

Bei dem bekannten Verfahren wird unter Zugrundelegung des sogenannten Einspurmodells eines Fahrzeuges ein Sollwert $\dot{\Psi}_{so}$ gemäß der Beziehung

$$\dot{\Psi}_{SO} = \frac{v_x \cdot \delta}{(a + c)\left(1 + \frac{v_x^2}{v_{CH}^2}\right)}$$

gebildet, in der mit $v_{CH}$ die sogenannte charakteristische Geschwindigkeit des Fahrzeuges mit a der Abstand der Vorderachse vom Fahrzeugschwerpunkt und mit c der Abstand der Hinterachse vom Fahrzeugschwerpunkt bezeichnet sind.

Als charakteristische Geschwindigkeit" $v_{CH}$ ist diejenige - fahrzeugspezifische - Geschwindigkeit bezeichnet, die einem Maximum des Quotienten $\dot{\Psi}/\delta$ entspricht. Dies gilt für niedrige Querbeschleunigungen $a_q \leq 3ms^{-2}$. Die Fahrdynamik-Regelung ist als Zustandsregelung des Schwimmwinkels $\beta$ und der Giergeschwindigkeit realisiert, wobei der Schwimmwinkel $\beta$, der den Unterschied der Richtungen zwischen Fahrtrichtung und der Richtung der Fahrzeuglängsachse angibt, einen vorgegebenen Grenzwert nicht überschreiten soll.

Bei der insoweit erläuterten Fahrdynamik-Regelung ergibt sich aufgrund der Art der Generierung des Sollwertes für die Giergeschwindigkeit des Fahrzeuges, insbesondere dann, wenn der Fahrer in einem "hastigen" Lenkmanöver eine rasche Änderung des Lenkwinkels einsteuert, eine drastische Abweichung des Istwertes der Giergeschwindigkeit $\dot{\Psi}$ des Fahrzeuges vom Sollwert, der, aufgrund der erwähnten Abhängigkeit vom Lenkwinkel, dem Istwert der Giergeschwindigkeit des Fahrzeuges, der sich, bedingt durch die Trägheit des Fahrzeuges langsamer ändert, in jedem Falle vorauseilt. Spricht in diesem Falle die Regelung an, so erfolgt dies im Sinne eines Abbaues der Seitenführungskraft an der Hinterachse des Fahrzeuges, was in der angenommenen Situation jedoch unerwünscht wäre, da eine Übersteuerungstendenz in der falschen Richtung erzeugt wird, die zu einem späteren Zeitpunkt durch einen erneuten Regelungseingriff korrigiert werden müßte. Ein solches "Regelspiel" das nur deswegen zustande kommt, weil eine unrealistische Sollwert-Vorgabe möglich ist, stellt eine Situation potentieller Gefahr dar, die vermieden werden sollte.

Diesem Sachverhalt soll das erfindungsgemäße Verfahren dahingehend Rechnung tragen, als eine Sollwert-Vorgabe für die dynamischen Zustandsgrößen des Fahrzeuges erzielt wird, die einem realistisehen Bewegungsverhalten des Fahrzeuges entspricht. Entsprechendes gilt für eine zur Anwendung des Verfahrens geeignete Einrichtung.

In dem Buch von Adam Zomotor "Fahrwerktechnik: Fahrverhalten", VOGEL-Fachbuch Würzburg, ISBN 3-8023-0774-7, 1997, sind auf Seite 101 Bewegungsgleichungen für das Einspurmodell eines Einzelfahrzeuges angegeben. Bei diesem Fahrzeugmodell werden unter anderem als Parameter zum einen die Masse und das Gierträgheitsmoment des Fahrzeuges und zum anderen die wirksamen Steifigkeitskoeffizienten, d.h. die resultierenden Steifigkeiten aus Reifen-, Radaufhängungs- und Lenkungselastizität berücksichtigt. Durch Berücksichtigung dieser Parameter lassen sich die Nachteile, die vorstehend im Zusammenhang mit der Ermittlung des Sollwertes für die Giergeschwindigkeit unter Verwendung des Einspurmodells, wie es der in der ATZ Automobiltechnischen Zeitschrift erschienenen Veröffentlichung zu entnehmen ist, beheben. Die Auswirkungen der Trägheit des Fahrzeuges und die Auswirkungen der Beschaffenheit der Reifen und der Lenkung werden somit bei der Ermittlung des Sollwertes berücksichtigt.

Mit beiden vorstehend aufgeführten, aus dem Stand der Technik bekannten Fahrzeugmodellen lässt sich lediglich für ein Einzelfahrzeug der Sollwert für die Giergeschwindigkeit ermitteln. Die Ermittlung der entsprechenden

Sollwerte für ein aus einem Zugfahrzeug und einem Anhängerfahrzeug bestehenden Fahrzeuggespann ist mit diesen beiden Fahrzeugmodellen nicht möglich.

Vor diesem Hintergrund ergibt sich für den Fachmann folgende Aufgabe: Es sollen die bekannten Verfahren dahingehend verbessert werden, dass für ein aus einem Zugfahrzeug und einem Anhängerfahrzeug bestehendes Fahrzeuggespann Sollwert-Vorgaben für die dynamischen Zustandsgrößen des Fahrzeuggespannes, die einem realistischen Bewegungsverhalten des Fahrzeuggespannes entsprechen, ermittelt werden.

Diese Aufgabe wird hinsichtlich des Verfahrens erfindungsgemäß durch die Merkmale des Patentanspruchs 1 gelöst.

Zum einen erfolgt hiernach die Generierung von einem dynamisch stabilen Verhalten eines zweiachsigen Fahrzeuges, im Falle eines Sattelzuges oder Gliederzuges handelt es sich hierbei um das Zugfahrzeug, entsprechenden Soll-Werten $\dot{\Psi}_s$ der Giergeschwindigkeit und des Schwimmwinkels $\beta_s$ durch eine taktgesteuerte Auswertung der folgenden Beziehungen:

$$m_z \cdot v \cdot \dot{\beta} + \frac{1}{v}\left(m_z \cdot v^2 + C_v \cdot l_v - C_H \cdot l_H\right) \cdot \dot{\Psi} + \left(C_v + C_H\right) \cdot \beta - C_v \cdot \delta = 0$$

sowie

$$J_Z \cdot \ddot{\Psi} + \frac{1}{v}\left(C_v \cdot l_v^2 + C_H \cdot l_H^2\right) \cdot \dot{\Psi} - \left(C_H \cdot l_H - C_V \cdot l_V\right) \cdot \beta - C_V \cdot l_V \cdot \delta = 0$$

die unter den erfindungsgemäß als Stabilitätskriterien gewählten Bedingungen, daß zum einen die kurvenfahrtbedingten Querkräfte sowie die durch die Lenkwinkeleinstellung $\delta(t)$ sich aufbauenden Seitenführungskräfte ausgeglichen sein müssen, und zum anderen auch die am Zugfahrzeug wirksamen Dreh- und Giermomente ausgeglichen sein müssen, ein realistischeres Modell für das dynamische Verhalten des realen Zugfahrzeugs repräsentieren als die bei dem bekannten Verfahren ausgenutzte statische Beziehung für den Sollwert der Giergeschwindigkeit, da durch das erfindungsgemäß für das Zugfahrzeug genutzte Fahrzeugmodell auch das Trägheitsverhalten des Zugfahrzeugs adäquat berücksichtigt wird.

Die Auswertung dieser Beziehungen, die, ausgedrückt als Matrizengleichung in der Form

$$[P] \cdot \left(\dot{\bar{X}}\right) = [Q] \cdot \left(\bar{X}\right) + \left(\bar{C}\right) \cdot \delta(t) \qquad (I)$$

angebbar sind, in der [P] eine 4x4-Matrix mit Elementen $p_{ij}$ ($p_{ij}$ = 0,$m_2v$,0,0; 0,0,0,$J_Z$; 0,0,0,0:0,-1,0,0), [Q} eine 4x4-Matrix mit Elementen $q_{ij}$ ($q_{ij}$ = 0, $-C_v$ $-C_H$, 0, $-m_z$. v - ($C_V l_V$ - $C_H l_H$) /v; 0, $C_H l_H$ - $C_V l_V$, 0,

$$\left(-l_v^2 C_v - l_H^2 C_H\right)/v;$$

0, 0, 0, 0; 0, 0, 0, 1), $\bar{C}$ einen Vier-Komponenten-Spaltenvektor mit den Komponenten $c_i$ ($c_i = C_V$, $C_V l_V$. 0, 0), $\bar{X}$ einen aus den Zustandsgrößen $\beta_z$ und $\dot{\Psi}_z$ gebildeten 4-Komponenten-Spaltenvektor mit den Komponenten $x_i$ ($x_i$ = 0,$\beta_Z$,0, $\dot{\Psi}_Z$) und $\dot{\bar{x}}$ dessen zeitliche Ableitung $d\bar{X}/dt$ repräsentieren, erfolgt im Sinne einer Aktualisierung der fahrdynamischen Zustandsgrößen $\beta_Z(k-1)$ die zu einem Zeitpunkt t(k-1) ermittelt worden sind, auf den um die Taktzeitspanne $T_k$ späteren Zeitpunkt t(k) durch Auswertung der Beziehung

$$\bar{X}(k) = \left\{\frac{[P]}{T_k} - [Q]\right\}^{-1} \cdot \left\{\frac{[P]}{T_k} \cdot \bar{X}(k-1) + \bar{C} \cdot \delta(k)\right\}$$

mit auf den Zeitpuntk t(k) aktualisierten, d.h. zu diesem Zeitpunkt bestimmten Werten der Matrixelemente $p_{ij}$ und $q_{ij}$.

Die den zeitlichen Änderungen ($\ddot{\Psi}$ und $\beta$) der zu regelnden Zustandsgrößen ($\dot{\Psi}$ und $\beta$) zugeordnete Koeffizientenmatrix [P] der das Fahrzeug-Referenzmodell für das Zugfahrzeug repräsentierenden Matrizengleichung (I) enthält lediglich Matrixelemente, die entweder unabhängig von den Fahrzeugdaten "absolut" konstant sind oder fahrzeugspezifisch konstant, d.h. während einer Fahrt sich nicht verändern, oder fahrzeugspezifische Konstanten sind, die mit der Fahrzeuglängsgeschwindigkeit multipliziert oder durch diese dividiert sind, d.h. Größen, die bei unterstellbarer Kenntnis der fahrzeugspezifischen Werte, jederzeit anhand von Messungen der Fahrzeuglängsgeschwindigkeit mit entsprechender Genauigkeit ermittelt werden können.

Dasselbe gilt sinngemäß auch mit Bezug auf die Matrixelemente der den zu regelnden Zustandsgrößen ($\dot{\Psi}$ und $\beta$), dem "Zustandsvektor", zugeordneten Matrix [Q], so-weit diese zur Längsgeschwindigkeit des Straßenfahrzeugs proportionale und/oder umgekehrt proportionale Glieder enthalten und diese Glieder als Faktoren im übrigen fahrzeugspezifische Konstanten enthalten.

Die Schräglaufsteifigkeiten $C_V$ und $C_H$, die im Fahrzeug-Referenzmodell zur Beschreibung der Fahrzeugreaktion auf die Lenkwinkelvorgabe bei vorgegebener Fahrzeuggeschwindigkeit dienen, sind bei vorgegebener Achs- bzw. Radlastverteilung ebenfalls als fahrzeugspezifische Konstanten anzusehen und werden bei stationärer Kurvenfahrt ($\ddot{\Psi}$ = 0, $\dot{\beta}$ = 0, $\delta$=const., v=const.) durch Auswertung der Beziehungen

$$C_H = \frac{m_Z \cdot v \cdot l_v \cdot \dot{\Psi}}{\left(\frac{l_H \cdot l_v \cdot \dot{\psi}}{v} - \beta \cdot l_v - \beta \cdot l_H + \frac{l_H^2 \cdot \dot{\Psi}}{v}\right)}$$

und

$$C_v = \frac{m_Z \cdot v \cdot \dot{\Psi}}{\left(\frac{l_H \cdot l_v \cdot \dot{\psi}}{v} - \beta \cdot l_v - \beta \cdot l_H + \frac{l_A^2 \dot{\Psi}}{v}\right)} \cdot \frac{\left(l_H \cdot \beta - \frac{l_H^2 \dot{\Psi}}{v}\right)}{\left(\frac{l_v \dot{\Psi}}{v} + \beta - \delta\right)}$$

in adaptiven "Lern"-Vorgängen bestimmt.

Die für die Bestimmung der Schräglaufsteifigkeiten erforderliche Kenntnis des Schwimmwinkels $\beta_z$ ist für den Fall stationärer Kurvenfahrt und geringer Querbeschleunigung durch eine Auswertung der bekannten Beziehung $\beta_Z = l_H/R_S$ gewinnbar, in der mit $R_S$ der Bahnradius des Schwerpunktes des Zugfahrzeugs bezeichnet ist, wobei dieser Radius $R_S$ durch die Beziehung $R_S = (l_H^2 + R_H^2)^{1/2}$, in der mit $R_H$ der Mittelwert der Bahnradien der Hinterräder des Zugfahrzeugs bezeichnet ist, die sich bei Kenntnis der Spurweite der Hinterräder aus den Raddrehzahlen derselben nach bekannten Relationen ermitteln läßt.

Zum anderen wird bei dem erfindungsgemäßen Verfahren zur Generierung von dynamisch stabilem Bewegungsverhalten des Straßenfahrzeugs entsprechenden Soll-Werten für die Zustandsgrößen Giergeschwindigkeit und Schwimmwinkel als Einspurmodell das eines Sattelzuges mit einachsigem Auflieger benutzt, um den das zweiachsige Zugfahrzeug gleichsam ergänzt wird, wobei als Stabilitätskriterium wiederum das Kräfte- und Momentengleichgewicht an der Zugmaschine und am Auflieger gewählt ist, gemäß den Beziehungen

$$m_z \cdot v \cdot \left(\dot{\beta}_Z + \dot{\Psi}_Z\right) = F_v + F_H - F_G$$

$$J_z \ddot{\Psi}_Z = F_v \cdot l_v - F_H \cdot l_H + F_G \cdot l_G$$

$$m_A \cdot v \cdot (\dot{\beta}_A + \dot{\Psi}_A) = F_G + F_A$$

$$J_A \ddot{\Psi}_A = F_G \cdot l_{AV} - F_A \cdot l_{AH}$$

Die kinematische Kopplung, der Gleichheit der Geschwindigkeitsrichtung am Sattelgelenkpunkt von Zugfahrzeug und Auflieger entspricht, ist durch die Beziehung

$$\beta_Z - \frac{l_G}{v} \cdot \dot{\Psi}_Z + \Psi_Z = \beta_A + \frac{l_{AV}}{v} \cdot \dot{\Psi}_A + \Psi_A$$

berücksichtigt. In diesen Beziehungen sind mit $F_V$, $F_H$ und $F_G$ die an den Vorderrädern, den Hinterrädern und im Sattelpunkt angreifenden Querkräfte bezeichnet, mit $l_G$ der Abstand des Sattelpunktes vom Schwerpunkt des Zugfahrzeuges, mit $l_{AV}$ und $l_{AH}$ der Abstand des Aufliegerscherpunktes vom Sattelpunkt bzw. der Aufliegerachse und mit $F_A$ die an der Aufliegerachse wirksame Seitenkraft. In diesem sich insgesamt ergebenden Fahrzeugmodell ist der Auflieger gleichsam nur durch "additive" Größen implementiert, so daß es sowohl zur Sollwert-Generierung für das Zugfahrzeug allein als auch für den Sattelzug insgesamt geeignet ist. Es kann in sinngemäßer Abwandlung und Erläuterung auch zur Sollwert-Generierung für einen Gliederzug abgewandelt werden.

Alternativ oder ergänzend hierzu kann unter den Randbedingungen der Schwimmwinkel $\beta_Z$, wie gemäß Anspruch 2 vorgesehen, auch durch eine Auswertung der Beziehung

$$\beta_Z = \delta \cdot \frac{l_H}{l_Z}$$

ermittelt werden.

Demgegenüber hat die gemäß Anspruch 3 vorgesehene Art der Bestimmung des Schwimmwinkels $\beta_Z$ gemäß der Beziehung

$$\beta_z = \int_{t_0(\delta=0)}^{t_c(\delta=\delta_c)} \left(\frac{a_q}{v} - \dot{\Psi}\right) dt$$

in der mit $a_q$ die mit Beginn der Einstellung eines Lenkwinkels sich aufbauende Fahrzeug-Querbeschleunigung bezeichnet ist, den Vorteil, daß eine genaue Bestimmung des Schwimmwinkels auch bei relativ hohen Fahrzeug-Querbeschleunigungen und damit auch eine genauere Bestimmung der Schräglaufsteifigkeiten möglich ist, wobei diese Querbeschleunigung $a_q$ mittels eines Querbeschleunigungssensors gemessen werden kann oder auch rechnerisch aus dem Kurvenfahrt-Radius und der Fahrzeuggeschwindigkeit ermittelt werden kann.

In dem oben aufgeführten Sattelzugmodell erfolgt die Bestimmung des Schwimmwinkels $\beta_A$ des Aufliegers gemäß der Beziehung

$$\beta_A = \varphi + \beta_Z - \frac{\dot{\Psi}(l_G + l_{AV})}{v}$$

in der mit $\varphi$ der Knickwinkel bezeichnet ist, den die im Sattelgelenk sich schneidenden Längsmittelebenen des Zugfahrzeuges und des Aufliegers miteinander einschließen. Diese Relation gilt für den Fall der stationären Kurvenfahrt, in der das Zugfahrzeug und der Auflieger dieselbe Giergeschwindigkeit $\dot{\psi}$ haben.

Dieser Knickwinkel kann durch Messung bestimmt werden, alternativ oder ergänzend für den Fall stationärer Kurvenfahrt mit relativ geringem Wert der Querbeschleunigung auch gemäß den Merkmalen des Anspruchs 5, wenn

der Auflieger mit Raddrehzahlsensoren ausgerüstet ist.

Durch die Merkmale des Anspruchs 6 sind mittels einer elektronischen Verarbeitungseinheit rasch auswertbare Beziehungen für Schräglaufsteifigkeiten $C_V$, $C_H$ und $C_A$ angegeben, mit denen die an den Rädern wirksamen Reifenseitenkräfte durch die Beziehungen

$$F_v = -C_v \cdot \left(\beta_z - \delta + \frac{l_v}{v}\dot{\Psi}_Z\right)$$

$$F_H = -C_H \cdot \left(\beta_z - \frac{l_H}{v}\dot{\Psi}_Z\right)$$

$$F_A = -C_A \cdot \left(\beta_A - \frac{l_{AH}}{v}\dot{\Psi}_A\right)$$

verknüpft sind.

Bezüglich einer Einrichtung zur Fahrdynamik-Regelung an einem als Sattelzug oder Gliederzug, der aus einem Zugfahrzeug und einem Anhängerfahrzeug besteht, ausgebildeten Straßenfahrzeug wird die eingangs genannte Aufgabe, ausgehend von einer solchen Einrichtung gemäß dem Oberbegriff des Patentanspruchs 7 dadurch gelöst, daß durch eine elektronische Steuereinheit Routinen implementiert sind, die es ermöglichen, aus im Fahrbetrieb eines aus Zugfahrzeug und Anhängerfahrzeug bestehenden Zuges meßbaren Parametern mindestens die folgenden Größen adaptiv zu bestimmen und in einem Speicher abrufbar abzulegen:

a) Gesamtmasse $m_{ges}$ des Zuges,
b) die Masse $m_z$ des Zugfahrzeuges,
c) die Masse $m_A$ des Anhängerfahrzeuges,
d) den Radstand $l_z$ des Zugfahrzeuges,
e) Achslast-Verteilung $A/P_{HA}$ des Zugfahrzeuges,
f) Achslast-Verteilung des Zuges bzw. Hinterachslast $P_{HA}$ des Anhängerfahrzeuges sowie Routinen zur Abschätzung
g) des Trägheitsmoments $J_Z$ des Zugfahrzeuges um seine Hochachse und
h) des Trägheitsmoments $J_A$ des Anhängerfahrzeugs um seine Hochachse.

Durch die Implementierung dieser Routinen paßt sich das für die Referenzwertbildung dienende Fahrzeugmodell, mit dem das Straßenfahrzeug im Fahrbetrieb ständig verglichen wird, um fahrdynamisch instabile Zustände zu erkennen, ständig dem aktuellen Beladungszustand des Straßenfahrzeugs an, der bei Nutzfahrzeugen von Fahrt zu Fahrt sehr unterschiedlich sein kann. Die adaptive Bestimmung der genannten Größen hat auch den Vorteil, daß ein fahrzeug-spezifischer Programmierungsaufwand für die elektronische Steuereinheit der Fahrdynamik-Regelungseinrichtung weitestgehend entfällt, so daß keinerlei Fehl-Eingaben möglich sind, die im Betrieb des Straßenfahrzeugs zu Fehlfunktionen der Regelung führen könnten. Das Konzept der adaptiven Bestimmung praktisch aller Daten, die für eine effektive Fahrdynamik-Regelung von Bedeutung sind, ermöglicht es, die Regelungseinrichtung für die verschiedensten Fahrzeugtypen und -Größen einzusetzen und ist somit auch unter Gesichtspunkten einer preisgünstigen Herstellung und eines wirtschaftlichen Einsatzes der Regelungseinrichtung besonders vorteilhaft.

Bei der gemäß Anspruch 8 zur Bestimmung der Masse $m_z$ eines Zugfahrzeuges und ggf. der Gesamtmasse $m_{ges}$ eines Sattel- oder Gliederzuges vorgesehenen und auch zur Masse $m_A$ des Anhängerfahrzeuges geeigneten Routine werden aus der elektronischen Motorsteuerung her vorliegende Signale sowie die Ausgangssignale zur Brems- und Antriebs-Schlupfregelung vorgesehener Raddrehzahlsensoren ausgenutzt, die gemäß Anspruch 9 auch zur Bestimmung des Radstandes $l_z$ des Zugfahrzeuges genutzt werden können, der, alternativ oder zusätzlich, gemäß Anspruch 10 auch aus der Lenkwinkel-Information, der Giergeschwindigkeit und der Fahrzeuglängsgeschwindigkeit des Zugfahrzeuges ermittelbar ist.

Wenn bei einem Sattelzug ein Knickwinkelsensor vorgesehen ist, mittels dessen der Winkel φ erfaßbar ist, unter dem sich bei Kurvenfahrt die vertikalen Längsmittelebenen des Zugfahrzeuges und des Aufliegers in der Sattelgelenkachse schneiden und den Rädern des Aufliegers eigene Raddrehzahlsensoren zugeordnet sind, so sind gemäß den Merkmalen der Ansprüche 11 und 12 sowohl die Länge $l_A$ des Aufliegers als auch der Abstand $l_{SH}$ des Sattelpunktes von der Hinterachse des Zugfahrzeuges adaptiv bestimmbar.

Für eine adaptive Bestimmung der Achslast-Verteilung eines zweiachsigen (Zug)-Fahrzeuges ist es ausreichend, wenn dieses Fahrzeug mit einem einzigen Achslast-Sensor ausgerüstet ist, so daß, je nach Zuordnung dieses Achslast-Sensors zur Vorder- oder zur Hinterachse der Abstand $l_V$ seines Schwerpunktes von der Vorderachse entsprechend den alternativen Routinen des Anspruchs 14 bestimmbar ist.

Auf analoge Weise ist die Massenverteilung des Aufliegers eines Sattelzuges, d.h. der Abstand $l_{AV}$ seines Schwerpunktes vom Sattelgelenk gemäß den Merkmalen des Anspruchs 15 bestimmbar, wenn der Auflieger mit einem Achslastsensor für die über die Aufliegerachse auf der Fahrbahn abgestützte Last $P_{AHA}$ ausgerüstet ist, und gemäß den Merkmalen des Anspruchs 16, wenn das Zugfahrzeug mit einem Hinterachslast-Sensor ausgerüstet ist.

Alternativ oder zusätzlich ist der Abstand $l_{AV}$ des Auflieger-Schwerpunktes vom Sattelgelenk gemäß den Merkmalen des Anspruchs 17 - adaptiv - bestimmbar, wenn ein Last-Sensor vorgesehen ist, dessen Ausgangssignal ein Maß für den im Sattelgelenk am Zugfahrzeug abgestützten Massenanteil $m_{AS}$ des Aufliegers ist.

Gemäß den Merkmalen des Anspruchs 18 gebildete Schätzwerte für das Gier-Trägheitsmoment $J_Z$ eines Zugfahrzeuges, z.B. eines Lastwagens mit von Fahrt zu Fahrt variierendem Beladungszustand und/oder für das Gier-Trägheitsmoment $J_A$ eines ein- oder mehrachsigen Anhängerfahrzeuges sind für ein realistisches Fahrzeugmodell erfahrungsgemäß hinreichend genau.

Bei Fahrzeugen, die eine pneumatische Federung haben, ist eine Achslast-Sensorik auf einfache Weise durch Erfassung der Drücke in pneumatischen Radfedern implementierbar.

Sind keinerlei Achslastsensoren vorhanden, so ist eine Bestimmung der Hinterachslast $P_{HA}$ sowie der Vorderachslast $P_{VA}$ gemäß den Merkmalen der Ansprüche 20 und 21 durch Bremsversuche jedenfalls dann möglich, wenn reifenspezifische Konstanten $k_{HA}$ und $k_{VA}$ bekannt sind, die ihrerseits gemäß den Merkmalen des Anspruchs 22 radindividuell bestimmt werden können.

Unter Nutzung der hierfür durch die Merkmale des Anspruchs 23 angegebenen Routine ist eine gleichsam fortlaufende Erfassung der momentan gegebenen Beträge der Reifenkonstanten möglich, was besonders vorteilhaft ist, da diese Reifenkonstanten temperaturabhängig sein können und sich daher im Verlauf einer Fahrt ändern können.

Zum Zweck einer realitätsnahen Abschätzung der Reifenkostanten eines Fahrzeuges kann es auch ausreichend sein, achsbezogene Reifenkonstanten $k_{HA}$ und $k_{VA}$ für die angetriebenen Fahrzeugräder und die nicht angetriebenen Fahrzeugräder zu ermitteln, wie gemäß Anspruch 24 vorgesehen, wobei die Reifenkonstante für die angetriebenen Fahrzeugräder, z.B. die Hinterräder des Fahrzeuges, im Traktionsbetrieb des Zugfahrzeuges ermittelt wird und mit dem hiernach bekannten Wert dieser Reifenkonstante die Reifenkonstante für die nicht angetriebenen Fahrzeugräder im Bremsbetrieb des Fahrzeuges ermittelt wird.

Im Falle einer beliebigen Gestaltung eines Nutzfahrzeug-Zuges, sei es als Sattelzug oder als Gliederzug, ist es optimal, wenn sowohl das Zugfahrzeug als auch das Anhängerfahrzeug mit einem Gierwinkel-Sensor ausgerüstet sind, so daß ein dynamisch instabiler Zustand des Gesamtzuges aufgrund unterschiedlicher Giergeschwindigkeiten des Zugfahrzeuges und des Anhängerfahrzeuges schnell und zuverlässig erkennbar ist.

Weitere Einzelheiten des erfindungsgemäßen Verfahrens und einer zu seiner Anwendung geeigneten Einrichtung ergeben sich aus der nachfolgenden Beschreibung anhand der Zeichnung für den beispielhaften Anwendungsfall bei einem schweren Nutzfahrzeug. Es zeigen:

Fig. 1 ein als Sattelzug ausgebildetes Nutzfahrzeug in schematisch vereinfachter Seitenansicht zur Erläuterung fahrdynamisch relevanter fahrzeugspezifischer geometrischer Größen des Fahrzeuges insgesamt,

Fig. 2 eine schematisch vereinfachte Blockschaltbild-Darstellung einer für den Sattelzug gemäß Fig. 1 geeigneten Bremsanlage mit zur Implementierung einer Fahrdynamik-Regelung geeigneten Bremskraft-Stellgliedern und -Sensoren sowie einer elektronischen Steuereinheit für die Fahrdynamik-Regelung,

Fig. 3a eine Einspur-Modelldarstellung des Sattelzuges gemäß Fig. 1,

Fig. 3b eine Einspur-Modelldarstellung des Zugfahrzeuges des Sattelzuges gemäß Fig. 1 zur Erläuterung der Kurvenfahrt-Kinematik des Sattelzuges bzw. des Zugfahrzeuges gemäß Fig. 1,

Fig. 4 ein schematisch vereinfachtes Block-Diagramm zur Erläuterung der Funktion eines zur Gewinnung regelungstechnisch erforderlicher Referenzgrößen geeigneten, mittels der elektronischen Steuereinheit implementierbaren Luenberger Beobachters und

Fig. 5 ein $\mu/\lambda$-Diagramm zur Erläuterung der Bestimmung von Reifenkonstanten.

Für den in der Fig. 1 insgesamt mit 10 bezeichneten, ein zwei-achsiges Zugfahrzeug 11 und einen einachsigen Auflieger 12 umfassenden Sattelzug sei vorausgesetzt, daß er mit einer Einrichtung zur Fahrdynamik-Regelung ausgerüstet ist, die zusätzlich zu den Funktionen einer Antiblockierregelung (ABS-Funktion), die zu einem adhäsionsoptimierten Bremsverhalten sowohl des Zugfahrzeuges 11 als auch des Sattelzuges 10 insgesamt, führt und einer Antriebs-Schlupf-Regelung (ASR-Funktion), die eine optimale Nutzung der möglichen Vortriebskräfte vermittelt, auch die Möglichkeit bietet, die Radbremsen 13 bis 16 des Zugfahrzeuges 11 (Fig. 2) und die Radbremsen 17 und 18 des Anhängerfahrzeugs - Aufliegers 12 - einzeln oder zu mehreren, auch-unabhängig von einer steuernden Betätigung der insgesamt mit 20 bezeichneten Bremsanlage des Sattelzuges 10, zu aktivieren, um hierdurch, insbesondere in Kurvenfahrt- oder Bergabfahrt-Situationen ein dynamisch stabiles Fahrverhalten des Sattelzuges 10 zu gewährleisten.

Insoweit sind für die Bremsanlage 20 des Sattelzuges 10 lediglich die baulichen und funktionellen Eigenschaften einer bekannten elektropneumatischen Bremsanlage für Nutzfahrzeuge vorausgesetzt. Für die Fahrdynamik-Regelung (FDR-Funktion) ist zusätzlich auch ein Eingriff in die Motorsteuerung vorausgesetzt, z.B. derart, daß bremsende Schleppmomente, die im Schiebebetrieb des Motors 21 des Zugfahrzeuges auftreten können, teilweise oder völlig kompensierbar sind.

Demgemäß sind den Radbremsen 13 bis 18 des Zugfahrzeuges 11 bzw. des Aufliegers 12 einzeln zugeordnete pneumatische Aktuatoren $22_1$ bis $22_4$ bzw. $22_5$ und $22_6$ vorgesehen, die durch Ansteuerung von lediglich schematisch angedeuteten "Bremsdruck"-Regelventilen $23_1$ bis $23_6$ mit individuell einstellbaren "Brems"-Drücken beaufschlagbar sind, die mittels den Aktuatoren $22_1$ bis $22_6$ einzeln zugeordneter "Bremsdruck"-Sensoren $24_1$ bis $24_6$ individuell überwachbar sind.

Die Bremsdruck-Regelventile $23_1$ bis $23_6$ sind als elektrisch ansteuerbare Magnetventile ausgebildet, die durch Ausgangssignale einer elektronischen Steuereinheit 25 ansteuerbar sind, die nachfolgend noch mehr im einzelnen anhand ihrer Funktionen erläutert werden wird, deren Kenntnis als ausreichend dafür angesehen wird, daß sie durch einen Fachmann der elektronischen Schaltungstechnik realisierbar ist, ohne daß auf schaltungstechnische Einzelheiten dieser elektronischen Steuereinheit 25 im einzelnen eingegangen wird.

Die Bremsanlage 20 ist bei dem zur Erläuterung gewählten Ausführungsbeispiel als 3-Kreis-Bremsanlage ausgebildet, bei der die Vorderradbremsen 13 und 14 des Zugfahrzeuges 11 zu einem Bremskreis I, die Hinterradbremsen 15 und 16 des Zugfahrzeuges 11 zu einem Bremskreis II und die Radbremsen 17 und 18 des Auflegers 12 zu einem dritten Bremskreis III zusammengefaßt sind, zu deren "Brems"-Druckversorgung je ein eigener pneumatischer Druckspeicher $26_1$ und $26_2$ bzw. $26_3$ vorgesehen ist, die ihrerseits aus einer nicht dargestellten zentralen Druckluftquelle aufladbar sind, die einen vom Fahrzeugmotor 21 angetriebenen, ebenfalls nicht dargestellten Kompressor umfaßt.

Die Einsteuerung einer vom Fahrer gewünschten Fahrzeugverzögerung erfolgt durch Pedalbetätigung eines elektromechanischen oder elektronischen Gebers 27, der ein elektrisches Ausgangssignal erzeugt, das ein Maß für die Auslenkung des Steuerpedals 28 aus seiner dem nicht betätigten Zustand der Bremsanlage 20 zugeordneten Grundstellung und damit ein Maß für die vom Fahrer gewünschte Fahrzeugverzögerung ist. Das Geber-Ausgangssignal ist der elektronischen Steuereinheit 25 zugeleitet, die aus einer Verarbeitung dieses Fahrerwunsch-Signals mit weiteren Signalen, insbesondere dem Ausgangssignal eines lediglich schematisch angedeuteten Lenkwinkel-Gebers 29 und eines ebenfalls lediglich schematisch dargestellten Giergeschwindigkeitssensors 31 sowie Ausgangssignalen den Fahrzeugrädern einzeln zugeordneter Raddrehzahlsensoren $31_1$ bis $31_6$, deren Ausgangssignale jeweils ein Maß für die Drehzahlen der überwachten Fahrzeugräder sind, Ansteuersignale für den Bremskreisen I, II und III je einzeln zugeordnete elektropneumatische Druckmodulatoren $32_1$, $32_2$ und $32_3$ erzeugt, über die die Betätigungs-Druckzumessung aus den Druckluftbehältern $26_1$, $26_2$ und $26_3$ zu den Bremskreisen I, II und III erfolgt. Diese Druckmodulatoren $32_1$ bis $32_3$ können, wie in der Fig. 2 durch die Ventilsymbol-Darstellungen angedeutet, im einfachsten Fall als gepulst ansteuerbare 2/2-Wege-Magnetventile ausgebildet sein, über die die Druckluftbehälter $26_1$ bis $26_3$ an die sich zu den jeweiligen Bremsdruck-Regelventilen $23_1$ bis $23_6$ hin verzweigenden Hauptbremsleitungen $33_1$ und $33_2$ bzw. 333 der Bremskreise I und II des Zugfahrzeuges 11 bzw. des Aufliegers 12 angeschlossen sind.

Die insoweit erläuterte Bremsanlage 20 ermöglicht, gesteuert durch Ausgangssignale der elektronischen Steuereinheit 25 sowohl eine Steuerung einer erwünschten Bremskraft-Verteilung auf die verschiedenen Bremskreise I, II und III als auch eine Aktivierung einzelner oder mehrerer Radbremsen des Fahrzeuges, unabhängig davon, ob der Fahrer das Bremspedal 28 betätigt oder nicht und erfüllt insoweit die für eine Fahrdynamik-Regelung notwendigen Voraussetzungen.

Damit der Sattelzug 10 auch bei einer Störung des elektronischen Steuerungssystems oder gar Ausfall des elektrischen Bordnetzes gebremst werden kann, ist eine ebenfalls mittels des Bremspedals 28 betätigbare Bremsventil-Einheit 34 vorgesehen, mittels derer im Notbetriebs-Fall Steuerdruck aus den Druckbehältern $26_1$, $26_2$ und $26_3$ "direkt" in die Hauptbremsleitungen $33_1$, $33_2$ und $33_3$ der Bremskreise I bis III einkoppelbar ist. Diese Bremsventil-Einheit 34 ist beim zur Erläuterung gewählten Ausführungsbeispiel gemäß Fig. 2 durch drei, den Bremskreisen I bis III je einzeln zugeordnete Proportionalventile $34_1$, $34_2$ und $34_3$ repräsentiert, deren durch die entsprechend bezeichneten Ventilsymbole repräsentierte Ventilkolben mechanisch fest miteinander verbunden und formschlüssig-beweglich mit dem

Bremspedal 28 sowie mit dem Pedalstellungsgeber 27 verbunden sind, wobei die Druck-Versorgungsanschlüsse $36_1$ und $36_2$ sowie $36_3$ dieser Proportionalventile je einzeln direkt mit dem zugeordneten Druckluftbehälter $26_1$, $26_2$ und $26_3$ verbunden sind, und die Steuerausgänge $37_1$, $37_2$ und $37_3$ dieser Proportionalventile $34_1$, $34_2$ und $34_3$ über je ein Umschaltventil $38_1$ und $38_2$ sowie $38_3$ an die Hauptbremsleitungen $33_1$ bzw. $33_2$ und $33_3$ der Bremskreise I, II und III angeschlossen sind. Diese Umschaltventile $36_{1,2,3}$ sind als 2/2-Wege-Magnetventile mit stromlos offener Grundstellung 0 und im angesteuerten Zustand sperrender Schaltstellung I ausgebildet, so daß im nicht angesteuerten bzw. nicht ansteuerbaren Zustand dieser Umschaltventile $38_{1,2,3}$ die Steuerausgänge $37_{1,2,3}$ der Bremsventileinheit 34 mit den Hauptbremsleitungen $33_{1,2,3}$ der Bremsanlage 20 kommunizierend verbunden sind. Im nicht angesteuerten oder nicht ansteuerbaren Zustand der Druckmodulatoren $32_{1,2,3}$ vermitteln diese ebenfalls die Funktion eines Absperrventils, wie durch die 2/2-Wege-Ventilsymbole für Ventile mit sperrender Grundstellung veranschaulicht.

Auch die Bremsdruck-Regelventile $23_1$ bis $23_6$ sind als Magnetventile ausgebildet, in deren im stromlosen Zustand ihrer Steuermagnete $39_1$ bis $39_6$ eingenommenen Grundstellung kommunizierende Verbindung zwischen den Aktuatoren $22_1$ bis $22_6$ mit den jeweiligen Hauptbremsleitungen $33_{1,2,3}$ besteht, so daß das Fahrzeug 10 im Fehlfunktions-Fall allein durch Betätigung der Bremsventil-Einheit 34 sicher gebremst werden kann.

Im "normalen", d.h. elektronisch gesteuerten und fahrdynamisch geregelten Bremsbetrieb sind die Umschaltventile $38_{1,2,3}$ in ihre sperrende Schaltstellung I gesteuert, so daß Steuerdruck nur über die elektropneumatischen Druckmodulatoren $32_{1,2,3}$, gesteuert durch Ausgangssignale der elektronischen Steuereinheit 25, in die Hauptbremsleitungen $33_{1,2,3}$ der Bremskreise I, II, III einkoppelbar ist.

Zur Erläuterung funktioneller Details der elektronischen Steuereinheit 25 sei nunmehr auf die "Einspur"-Modelldarstellung der Fig. 3a Bezug genommen, in der das Zugfahrzeug 11 durch ein einziges lenkbares Vorderrad 41 und ein einziges nicht lenkbares Hinterrad 42 repräsentiert ist, die in einem festen Achsabstand $l_z$ (Fig.1) voneinander angeordnet sind, der durch die Beziehung $l_z = l_V + l_H$ gegeben ist, in der mit $l_V$ der Abstand der Drehachse 43 des Vorderrades 41 vom Massenschwerpunkt $S_Z$ des Zugfahrzeuges 11 und mit $l_H$ der Abstand der Drehachse 44 des Hinterrades 42 vom Massenschwerpunkt $S_Z$ des Zugfahrzeuges 11 bezeichnet sind. Das Anhänger-Fahrzeug - beim gewählten Erläuterungsbeispiel der Auflieger 12 - ist durch ein einziges Fahrzeugrad 46 repräsentiert, das in einem festen Abstand $l_A$ von der vertikalen Gelenkachse 47 des Sattelgelenks 48, mittels dessen der Auflieger 12 gelenkig jedoch zugfest mit dem Zugfahrzeug 11 koppelbar ist, angeordnet ist, wobei dieser Abstand $l_A$ durch die Beziehung $l_A = l_{AV} + l_{AH}$ gegeben ist, in der mit $l_{AV}$ der Abstand des Sattelpunktes $S_p$ bzw. der Gelenkachse 47 vom Massenschwerpunkt SA des Aufliegers 12 und mit $l_{AH}$ der Abstand des Massenschwerpunktes $S_A$ des Aufliegers 12 von der Drehachse 49 des "einzigen" Aufliegerrades 46 bezeichnet sind, durch das im Prinzip ein oder mehrere Radpaare repräsentiert sein können.

Mit 51 ist in der Fig. 1 die durch den Schwerpunkt $S_z$ des Zugfahrzeuges gehende, vertikale Trägheitsachse bezeichnet, bezüglich derer das Zugfahrzeug 11 aufgrund seiner Massenverteilung das Trägheitsmoment $J_z$ hat.

Mit 52 ist die durch den Schwerpunkt $S_A$ des Aufliegers 12 gehende vertikale Trägheitsachse bezeichnet, bezüglich derer der Auflieger 12 aufgrund seiner Massenverteilung das Trägheitsmoment $J_A$ hat.

Mit $l_G$ ist der Abstand des Sattelpunktes $S_p$ bzw. der Gelenkachse 47 des Sattelgelenks 38 von der durch den Schwerpunkt $S_z$ des Zugfahrzeuges gehenden vertikalen Trägheitsachse 51 des Zugfahrzeuges 11 bezeichnet.

Zur Erläuterung des dynamischen Verhaltens des durch das Einspur-Modell gemäß Fig. 3a repräsentierten Sattelzuges 10 sei zunächst dessen Zugfahrzeug 11 (Fig. 3b) allein betrachtet, und angenommen, daß dieses sich in einer stationären "Links"-Kurvenfahrt befindet, d.h. die durch den Vektor $v_z$ repräsentierte Bahngeschwindigkeit, mit der sich der Schwerpunkt $S_z$ des Zugfahrzeuges 11 auf seinem Bahnkreis 53, der den Radius $R_z$ hat, bewegt, konstant ist, und daß sinngemäß dasselbe auch für das Vorderrad 41 gilt, dessen Aufstandspunkt 54 sich auf einem Bahnkreis 55 bewegt, dessen Radius $R_V$, bedingt durch die Kinematik des Zugfahrzeuges 11, einen etwas größeren Radius hat als der Bahnkreis 53 des Fahrzeugschwerpunktes $S_z$ des Zugfahrzeuges, und auch für das Hinterrad 42, dessen Aufstandspunkt 56 sich auf einem Bahnkreis 57 bewegt, wobei diese Kreisbahnen 53, 55 und 56 bezüglich eines gemeinsamen Momentanpols $M_{mv}$ konzentrische Kreise sind.

Bedingt durch die Fahrzeuggeometrie (Radstand $l_z$ und horizontaler Abstand $l_H$ der vertikalen Trägheitsachse 51 des Zugfahrzeuges 11 vom Aufstandspunkt 56 des Hinterrades 42) ergibt sich als Unterschied zwischen der Richtung, in der sich das Fahrzeug 11 insgesamt momentan bewegt und der Richtung, in der seine Fahrzeuglängsachse 58 verläuft, die in der Fig. 3b durch die Verbindungslinie der Aufstandspunkte 54 und 56 des Vorderrades 41 und des Hinterrades 42 des Fahrzeuges 11 repräsentiert ist, für den Grenzfall, daß sich das Vorderrad 41 in Richtung seiner Radmittelebene 59 bewegt, die um den Lenkwinkel δ, den der Fahrer einsteuert, gegenüber der Fahrzeuglängsachse 58 angestellt ist, und das Hinterrad 42 sich ebenfalls in Richtung seiner Radmittelebene 61 bewegt, d.h. in Richtung der Fahrzeuglängsachse 58, ein Schwimmwinkel $\beta_Z$, der durch die Beziehung

$$\beta_Z = \frac{\delta \cdot l_H}{l_Z}$$

gegeben ist und für den Fall gilt, daß die Bahngeschwindigkeit $v_z$ des Fahrzeuges 11 so niedrig ist, daß der Einfluß aus der Kurvenfahrt resultierender Fliehkräfte auf das Fahrzeug für dessen Querdynamik vernachlässigbar ist.

In diesem Grenzfall wäre der Momentanpol $M_{m0}$ der Fahrzeugbewegung durch den Schnittpunkt der Drehachse 43 des Vorderrades 41 mit der Drehachse 44 des Hinterrades 42 gegeben. Dieser Grenzfall entspricht gemäß dem zur Erläuterung gewählten Einspur-Modell seitenschlupffreiem Abrollen des Vorderrades 41 und des Hinterrades 42 des Zugfahrzeuges 11 in Richtung der jeweiligen Radmittelebene 59 bzw. 61.

In einer Kurvenfahrt mit von 0 signifikant verschiedener Geschwindigkeit $v_z$ treten jedoch Querbeschleunigungen auf, die zu einer Zentrifugalkraft $F_C$ führen, die dem Betrage nach durch die Beziehung

$$F_c = m_z \cdot v_z \cdot \left(\dot{\Psi}_z + \dot{\beta}_z\right)$$

in der mit $\dot{\psi}_Z$ die Giergeschwindigkeit bezeichnet ist, mit der sich das Fahrzeug um seine durch den Schwerpunkt $S_z$ gehende vertikale Trägheitsachse 51 dreht und mit $\dot{\beta}_Z$ die zeitliche Änderung des Schwimmwinkels, die jedoch bei einer stationären Kurvenfahrt dem Betrage nach 0 ist.

Diesen Seitenkräften, die das Zugfahrzeug 11 in Richtung der durch den Pfeil 64 repräsentierten Zentrifugelkraft $F_c$ "nach außen" drängen, entsprechen Schräglaufwinkel $\alpha_V$ und $\alpha_H$ des Vorderrades 41 bzw. des Hinterrades 42 des Zugfahrzeuges 11, um die sich die Bewegungsrichtungen des Vorderrades 41 und des Hinterrades 42, die durch die Richtungen ihrer Bahn-Geschwindigkeitsvektoren $v_V$ und $v_H$ repräsentiert sind, von den durch die Radmittelebenen 59 und 61 repräsentierten Richtungen unterscheiden.

Als Folge dieses Schräglaufs des Vorderrades 41 und des Hinterrades 42 treten im Aufstandsbereich (Latsch) des jeweiligen Radreifens elastische Verformungen auf, aus denen am Vorderrad 41 und am Hinterrad 42 als Seitenführungsfkräfte $F_{VS}$ und $F_{HS}$ wirkende Rückstellkräfte resultieren, die mit zunehmenden Beträgen der Schräglaufwinkel $\alpha_V$ und $\alpha_H$ ihrerseits zunehmen und im Ergebnis das Fahrzeug 11 auf der Bahn halten, deren gewünschten Radius der Fahrer durch Einsteuerung des Lenkwinkels $\delta$ vorgeben kann.

Die das Fahrzeug in der Kurve gleichsam haltenden Seitenführungskräfte $F_{VS}$ und $F_{HS}$ können demgemäß durch die folgenden Beziehungen angegeben werden:

$$F_{VS} = C_V \cdot \alpha_V \qquad (1)$$

und

$$F_{HS} = C_H \cdot \alpha_H \qquad (2)$$

durch die die Koeffizienten $C_V$ und $C_H$ im Sinne eines elastischen Radmodells als Schräglaufsteifigkeiten definiert sind.

Für das Aufliegerrad 46 des Sattelzuges 10 (Fig. 3a) gilt die entsprechende Beziehung

$$F_{AS} = C_A \cdot \alpha_A \qquad (3)$$

Auch die zunächst nur für das Zugfahrzeug angestellten kinematischen Betrachtungen gelten für den Auflieger 12 analog, da der Auflieger 12 als ein gleichsam im Sattelpunkt 48 gelenktes Fahrzeug angesehen werden kann, wobei wegen dieser gelenkigen Kopplung, der Gleichheit der Geschwindigkeitsrichtung des Zugfahrzeuges 11 und des Aufliegers 12 im Sattelgelenk 48 entspricht, die Beziehung gilt:

$$\beta_Z - \frac{l_G}{v} \cdot \dot{\Psi}_Z + \Psi_Z = \beta_A + \frac{l_{AV}}{v} \dot{\Psi}_A + \Psi_A \qquad (4)$$

Für die in den Beziehungen (1), (2) und (3) anzusetzenden Schräglaufwinkel $\alpha_V$ und $\alpha_H$ und $\alpha_A$ ergeben sich aus der Kurvenfahrt-Kinematik des Sattelzuges 10 unmittelbar die folgenden Beziehungen:

$$\alpha_V = \delta - \beta_Z - \frac{l_V}{v} \cdot \dot{\Psi}_Z \qquad (5)$$

$$\alpha_H = \beta_Z - \frac{l_H}{v} \cdot \dot{\Psi}_Z \qquad (5)$$

und

$$\alpha_A = \beta_A - \frac{l_{AH}}{v} \cdot \dot{\Psi}_Z \qquad (7)$$

Aus den dynamischen Stabilitätskriterien der Ausgeglichenheit der am Sattelzug angreifenden Querkräfte und der durch die möglichen Gierbewegungen des Zugfahrzeuges 11 und des Aufliegers 12 bedingten Drehmomente ergeben sich für das Zugfahrzeug 11 die folgenden Relationen:

$$m_z \cdot v \cdot \left(\dot{\beta}_z + \dot{\Psi}_z\right) = F_v + F_H - F_G \qquad (8)$$

bezüglich des Kräftegleichgewichts am Zugfahrzeug 11 und

$$J_Z \cdot \dot{\Psi}_Z = F_V \cdot l_V - F_H \cdot l_H - F_G \cdot l_G \qquad (9)$$

bezüglich des Momentengleichgewichts.

Für den Auflieger 12 ergeben sich die Beziehungen:

$$m_A \cdot v \cdot \left(\dot{\beta}_A + \dot{\Psi}_A\right) = F_G + F_A \qquad (10)$$

bezüglich des Kräftegleichgewichts und

$$J_A \cdot \dot{\Psi}_A = F_G \cdot l_{AV} - F_A \cdot l_{AH} \qquad (11)$$

bezüglich des Momentengleichgewichts, wobei in den Beziehungen (8) bis (11) mit $F_G$ der Betrag der im Sattelgelenk 48 des Sattelzuges 10 wirksamen Querkräfte bezeichnet ist.

Eine Elimination der Größe $F_G$ in den Beziehungen (8), (9) und (11) anhand der Beziehung (10) ergibt das folgende Gleichungssystem:

$$m_z \cdot v \cdot \dot{\beta}_z + m_z \cdot v \cdot \dot{\Psi}_z = F_v + F_H + F_A - m_A \cdot v \cdot \dot{\beta}_A - m_A \cdot v \, \dot{\Psi}_A \qquad (8')$$

$$J_z \cdot \ddot{\Psi}_z = F_v \cdot l_V - F_H \cdot l_H - m_A \cdot v \cdot \dot{\beta}_A \cdot l_G - m_A \cdot v \cdot \dot{\Psi}_A \cdot l_G \qquad (9')$$

sowie

$$J_A \cdot \ddot{\Psi}_A = m_A \cdot v \cdot \beta_A \cdot l_{AV} + m_A \cdot v \cdot \dot{\Psi}_A \cdot l_v - F_A \cdot l_{AV} - F_A \cdot l_{AH} \qquad (11')$$

Wird diesem Gleichungssystem als vierte Gleichung (4') die zeitliche Ableitung der Beziehung (4) hinzugefügt, die gleichsam die Kopplung der Dynamik des Zugfahrzeuges 11 mit der Dynamik des Aufliegers 12 beschreibt, so ergibt sich für die dynamischen Zustands-Größen $\dot{\Psi}_A$, $\dot{\Psi}_Z$, $\beta_A$ und $\beta_Z$ ein System von insgesamt vier gekoppelten linearen Differentialgleichungen erster Ordnung, das, wenn die Größen $F_V$, $F_H$ und $F_A$ durch die Beziehungen (1), (2) und (3) und hierin die Schräglaufwinkel $\alpha_V$, $\alpha_H$ und $\alpha_A$ durch die Beziehungen (4), (5) und (6) ersetzt werden, in der folgenden Form angegeben werden kann:

$$m_Z \cdot v \cdot \dot{\beta}_Z + m_A \cdot v \cdot \dot{\beta}_A = -(C_V + C_H) \cdot \beta_Z + \left(\frac{C_H \cdot l_H - C_V l_V}{v} - m_Z \cdot v\right) \cdot \dot{\Psi}_Z$$

$$- C_A \cdot \beta_A + \left(\frac{C_A \cdot l_{AH}}{v} - m \cdot v\right) \cdot \dot{\Psi}_A + C_V \cdot \delta \qquad (8'')$$

$$J_Z \cdot \ddot{\Psi}_Z = m_A \cdot v \cdot l_G \cdot \dot{\beta}_A + (C_H \cdot l_H - C_V \cdot l_V) \cdot \beta_Z - \left(\frac{C_V \cdot l_V^2 + C_H l_H^2}{v}\right) \cdot \dot{\Psi}_Z$$

$$+ C_A \cdot l_G \cdot \beta_A + \left(m_A \cdot v \cdot l_G - \frac{C_A \cdot l_{AH} \cdot l_G}{v}\right) \dot{\Psi}_A + C_V \cdot l_V \cdot \delta \qquad (9'')$$

$$J_A \cdot \ddot{\Psi}_A = m_A \cdot v \cdot l_{VA} \cdot \dot{\beta}_A + C_A (l_{AV} + l_{AH}) \cdot \beta_A$$

$$+ \left(m_A \cdot v \cdot l_{AV} - \frac{C_A \cdot l_{AH}(l_{AV} + l_{AH})}{v}\right) \cdot \dot{\Psi}_A, \qquad (11'')$$

$$\dot{\beta}_Z - \frac{l_G}{v} \cdot \ddot{\Psi}_Z - \dot{\beta}_A - \frac{l_{AV}}{v} \cdot \ddot{\Psi}_A = \dot{\Psi}_A - \dot{\Psi}_Z \qquad (4'')$$

Dieses Differential-Gleichungs-System (8"), (9"), (11"), (4"), das in der Einspur-Modellbetrachtung des Fahrzeuges 10 dessen Fahrdynamik allgemein beschreibt, d.h. auch unter Berücksichtigung zeitlicher Änderungen der Fahrzeuggeschwindigkeit v, des Lenkwinkels $\delta$, der Gier-Geschwindigkeiten $\dot{\Psi}_Z$ und $\dot{\Psi}_A$ sowie der Schwimmwinkel $\beta_Z$ und $\beta_A$ des Zugfahrzeuges 11 und des Aufliegers 12, geht für den Fall einer stationären Kurvenfahrt, bei der der Lenkwinkel $\delta$ und die Fahrzeuggeschwindigkeit v konstant sind und Änderungen der Giergeschwindigkeiten sowie der Schwimmwinkel nicht auftreten, in die folgende Form über:

$$0 = -\left(C_V + C_H\right)\cdot\beta_Z + \left(\frac{C_H l_H - C_C l_V}{v} - m_Z\cdot v\right)\dot{\Psi}_Z$$
$$-C_A\beta_A + \left(\frac{C_A\cdot l_{AH}}{v} - m_A\cdot v\right)\cdot\dot{\Psi}_A + C_v\cdot\delta \qquad (8''')$$

$$0 = +\left(C_H\cdot l_H - C_V\cdot l_V\right)\cdot\beta_Z - \left(\frac{C_V l_v^2 + C_H l_H^2}{v}\right)\cdot\dot{\Psi}_Z + C_A\cdot l_G\cdot\beta_A$$
$$+\left(m_A\cdot v\cdot l_G - \frac{C_A\cdot l_{AH}\cdot l_G}{v}\right)\cdot\dot{\Psi}_A + C_v\cdot l_V\cdot\delta \qquad (9''')$$

$$0 = C_A\cdot\left(l_{AV} + l_{AH}\right)\cdot\beta_A + \left(m_A\cdot v\cdot l_{AV} - \frac{C_A\cdot l_{AH}\cdot\left(l_{AV} + l_{AH}\right)}{v}\right)\dot{\Psi}_A \qquad (11''')$$

$$0 = \dot{\Psi}_A - \dot{\Psi}_Z \qquad (4'')$$

Unter den als erfüllbar unterstellbaren Voraussetzungen, daß die Größen $m_z$, $l_H$, $l_V$, für das Zugfahrzeug 11 und die Größen $m_A$ sowie $l_{AH}$ und $l_{AV}$ sowie $l_G$ für den Auflieger 12 bekannt sind, der Lenkwinkel $\delta$, die Fahrzeuggeschwindigkeit v und die im Falle stationärer Kurvenfahrt gemäß der Beziehung (4") identischen Giergeschwindigkeiten $\dot{\Psi}_Z = \dot{\Psi}_A$ hinreichend genau meßbar sind, und die Schwimmwinkel $\beta_Z$ und $\beta_A$ des Zugfahrzeuges 11 und des Aufliegers 12 mit hinreichender Genauigkeit abschätzbar oder bestimmbar sind, bilden die Beziehungen (8'''), (9''') und (11''') ein lineares algebraisches Gleichungssystem, aus dem die drei "unbekannten" Schräglaufstreifigkeiten $C_V$, $C_H$ und $C_A$ der Räder des Sattelzuges 10 auf einfache Weise bestimmbar sind, wobei die diesbezüglich erforderlichen Rechenoperationen mittels einer digitalen Rechnerstufe der elektronischen Steuereinheit 25 durchgeführt werden.

Wegen der kinematischen Kopplung des Aufliegers 12 mit dem Zugfahrzeug 11 gilt für den Schwimmwinkel $\beta_A$ des Aufliegers 12 die folgende Beziehung:

$$\beta_A = \varphi + \beta_Z - \frac{\dot{\Psi}\left(l_G + l_{AV}\right)}{v}$$

in der mit $\varphi$ der Knickwinkel bezeichnet ist, den bei Kurvenfahrt die Längsmittelebenen des Zugfahrzeuges 11 und des Aufliegers 12 miteinander einschließen, und mit $\dot{\Psi}$ die gemeinsame Giergeschwindigkeit des Zugfahrzeuges und des Aufliegers.

Für das Zugfahrzeug 11 eines Sattelzuges 10 oder einen zweiachsigen Lastkraftwagen allein ergibt sich das folgende "reduzierte" Gleichungssystem":

$$0 = -\left(C_V + C_H\right)\cdot\beta_Z + \left(\frac{C_H\cdot l_H - C_V\cdot l_V}{v} - m_Z\cdot v\right)\cdot\dot{\Psi}_Z + C_V\cdot\delta \qquad (8^{IV})$$

$$0 = \left(C_H \cdot l_H - C_V \cdot l_V\right) \cdot \beta_Z - \frac{\left(C_V \cdot l_V^2 + C_H \cdot l_H^2\right)}{v} \cdot \dot{\Psi}_Z + C_V \cdot l_V \cdot \delta \qquad (9^{IV})$$

Eine Möglichkeit, den Schwimmwinkel $\beta_Z$ des Zugfahrzeuges 11 zu bestimmen ist die folgende:
Ausgehend von der Beziehung

$$F_C = m_Z \cdot v \cdot \left(\dot{\Psi}_Z + \dot{\beta}_Z\right)$$

für die im Schwerpunkt des Zugfahrzeuges angreifende Zentrifugalkraft $F_C$ ergibt sich für die am Fahrzeug angreifende Querbeschleunigung $a_q$ die folgende Beziehung:

$$a_q = \frac{F_C}{m_Z} = \left(\dot{\Psi}_Z + \dot{\beta}_Z\right) \cdot v$$

und durch einfache Umformung für die Schwimmwinkeländerung $\dot{\beta}_Z$ die Beziehung:

$$\dot{\beta}_Z = \frac{a_q}{v} - \dot{\Psi}_Z$$

Ausgehend von einer Geradeausfahrt, die durch Konstanthaltung des Lenkwinkels $\delta$=0 erkennbar ist, baut sich, wenn der Fahrer ab einem Zeitpunkt $t_0$ eine Kurvenfahrt durch Einstellung eines Lenkwinkels $\delta$ einleitet, der Schwimmwinkel $\beta_Z$ gemäß der Beziehung:

$$\beta_Z = \int_{t_{0(\delta=0)}}^{t_C(\delta=\delta_C)} \left(\frac{a_q}{v} - \dot{\Psi}_Z\right) dt$$

auf, der solange zunimmt, bis bei stationärer Kurvenfahrt (v = const., $\dot{\Psi}_Z$ = const.) der Integrand 0 wird.
Die elektronische Steuereinheit 25 verarbeitet diese Beziehung z.B. wie folgt:
Es wird fortlaufend für kleine Zeitschritte [k=1,2,...,n], deren Dauer $\delta_t$ klein gegen die Zeit ist, innerhalb derer der Fahrer die Lenkung "betätigt", d.h. den Lenkwinkel $\delta$ ändert, bis dieser wieder konstant ist, der Wert

$$\left(\frac{a_q(k)}{v(k)} - \dot{\Psi}_Z(k)\right) \cdot \delta t$$

gebildet.
Durch Aufsummation der solchermaßen repräsentierten Änderungsbeträge des Schwimmwinkels $\beta_Z$ wird schließlich dessen Betrag gebildet, wobei die Aufsummation abgebrochen werden kann, sobald gilt:
$a_q$=const., $\delta$=const. und $\dot{\Psi}_Z$=const.
da ab diesem "Zeitpunkt", zu dem diese drei Bedingungen erfüllt sind, das Integral nicht mehr anwachsen kann.
Mit dem solchermaßen ermittelten Schwimmwinkel $\beta_Z$ können aus dem Gleichungssystem (8'''), (9'''), (11''') für die stationäre Fahrt des Sattelzuges die schräglaufsteifigkeiten $C_V$, $C_H$, $C_A$ durch rein algebraische Operationen, die die elektronische Steuereinheit 25 rasch durchführen kann, ermittelt werden.
Entsprechend können aus dem Gleichungssystem ($8^{IV}$), ($9^{IV}$) für das Zugfahrzeug allein die Schräglaufsteifigkeiten $C_V$ und $C_H$ des Zugfahrzeuges ermittelt werden, so daß, falls diese bekannt sind, die Schräglaufsteifigkeit $C_A$ des Aufliegers 12 des Sattelzuges 10 ggf. allein aus der Beziehung (11''') des Gleichungssystems (8'''), (9'''), (11'''), das für den Sattelzug insgesamt gilt, berechnet werden kann.

Zur Erfassung der in der vorgenannten Beziehung für den Schwimmwinkel $\beta_Z$ des Zugfahrzeuges auftretenden Querbeschleunigung $a_q$ ist beim dargestellten Ausführungsbeispiel ein Sensor 70 vorgesehen, der fortlaufend ein für die Querbeschleunigung $a_q$ charakteristisches, von der elektronischen Steuereinheit 25 verarbeitbares elektrisches Ausgangssignal liefert.

Alternativ hierzu oder zusätzlich kann die Querbeschleunigung $a_q$ auch rechnerisch aus den bekannten Abmessungen des Fahrzeuges, der Bahngeschwindigkeit v der Fahrzeugräder und der daraus errechenbaren Bahngeschwindigkeit des Fahrzeug-Schwerpunktes ermittelt werden.

Werden die Größen $\beta_A$ (Schwimmwinkel des Aufliegers), $\beta_Z$ (Schwimmwinkel des Zugfahrzeags), $\dot{\Psi}_A$ (Giergeschwindigkeit des Aufliegers) und $\dot{\Psi}_Z$ (Giergeschwindigkeit des Zugfahrzeuges) zu einem 4-Komponenten(Spalten-) Vektor $\bar{X}$, die zeitlichen Ableitungen dieser Größen ebenfalls zu einem Vier-Komponenten-(Spalten)-Vektor $\dot{\bar{x}}$ sowie die Schräglaufsteifigkeit $C_V$ des Vorderrades 41 des Einspur-Modellfahrzeuges und deren Produkt $C_V l_V$ mit dem Abstand des Vorderrades vom Schwerpunkt des Zugfahrzeuges 11 ebenfalls zu einem Vier-Komponenten(Spalten)-Vektor C zusammengefaßt, wobei der Vektor $\bar{X}$ den momentanen Bewegungszustand des Fahrzeuges zu einem Zeitpunkt k repräsentiert und der Vektor $\dot{\bar{x}}$ die zeitliche Änderung der Zustandsgrößen, so ist mit dem Gleichungssystem (8''), (9''), (11''), (4'') die folgende Matrizengleichung äquivalent:

$$[P]\cdot\left(\dot{\bar{X}}\right)=[Q]\cdot\left(\bar{X}\right)+\left(\bar{C}\right)\cdot\delta$$

in der die Matrizen **[P]** und **[Q]** jeweils (4x4)-Matrizen sind und der Spalten-Vektor $\bar{C}$ lediglich die Komponenten $c_1$ und $c_2$ als von 0 verschiedene Komponenten hat.

Die Matrixelemente $p_{ij}$ (i,j=1-4) der Matrix [P] sind durch die folgenden Relationen gegeben:

$p_{11} = m_A.v$; $p_{12} = m_z.v$; $p_{13} = p_{14}=0$;
$p_{21}= -m_A.v.l_G$; $p_{22} = p_{23}=0$; $p_{24} = J_z$;
$p_{31} = -m_A.v.l_{AV}$; $p_{32} = 0$; $p_{33} = J_A$; $p_{34} = 0$;
$p_{41} = 1$; $p_{42} = -1$; $p_{43} = l_{AV}/v$; $p_{44} = l_G/v$.

Die Matrixelemente $q_{ij}$ (i,j=1-4) der Matrix, **[Q]** sind durch die folgenden Relationen gegeben:

$q_{11} = -C_A$; $q_{12} = -C_v-C_H$; $q_{13} = -m_A.v + C_A . l_{AH}/v$;
$q_{14} = -m_z.v - C_v.l_V/v + C_H.l_H/v$;
$q_{21} = C_A.l_G$; $q_{22} = C_H.l_H - C_V.l_V$;
$q_{23} = m_A.v.l_G - C_A.l_G.l_{AH}/v$; $q_{24} = - (l^2{}_v\cdot C_v + l^2{}_H\cdot C_H)/v$;
$q_{31} = C_A.l_{AV} + C_A.l_{AH}$; $q_{32} = 0$;
$q_{23} = m_A.v.l_{AV} - (C_A.l_{AV}.l_{AH} + C_A\cdot l^2{}_{AH})/v$; ${}_{34} = 0$;
$q_{41} = q_{42} = 0$; $q_{43} = -1$; $q_{44} = 1$.

Die Komponenten $c_1$ bis $c_4$ des Spaltenvektors $\bar{C}$ sind durch die folgenden Relationen gegeben:

$C_1 = C_V$; $C_2 = C_V\cdot l_V$; $C_3 = C_4 = 0$.

Die elektronische Steuereinheit 25 der Bremsanlage 20 des Sattelzuges 10 ist dahingehend ausgelegt, daß sie fortlaufend, jeweils nach einer Taktzeit T eine Lösung der Matrizengleichung 12 vermittelt, d.h. in der durch das Einspurmodell des Sattelzuges 10 bedingten Näherung Ausgaben für den Wert $\beta_A$ des Schwimmwinkels des Aufliegers 12, den Schwimmwinkel $\beta_Z$ des Zugfahrzeuges 11, die Giergeschwindigkeit $\dot{\Psi}_A$ des Aufliegers 12 sowie für die Giergeschwindigkeit $\dot{\Psi}_Z$ des Zugfahrzeuges 11 generiert. Für einen Vergleich mit meßbaren Größen interessant ist hierbei insbesondere die Giergeschwindigkeit $\dot{\Psi}_Z$ des Zugfahrzeuges 11, das mit dem Giergeschwindigkeitssensor 31 ausgerüstet ist, gegebenenfalls auch die Giergeschwindigkeit $\dot{\Psi}_A$ des Aufliegers 12, wenn dieser ebenfalls mit einem Giergeschwindigkeitssensor 66 ausgerüstet ist.

Wenn das Zugfahrzeug 11 des Sattelzuges 10 mit einem Giergeschwindigkeits-Sensor 31, wie vorausgesetzt, ausgerüstet ist, und auch die Giergeschwindigkeit $\dot{\Psi}_A$ des Aufliegers 12 erfaßbar sein soll, kann es zu deren Erfassung - Messung - ausreichend sein, wenn ein vergleichsweise einfach realisierbarer Winkel-Stellungsgeber 67 vorgesehen

ist, mittels dessen der Winkel φ (Fig. 3d) erfaßbar ist, den die Längsmittelebene 68 des Zugfahrzeuges 11 mit der Längsmittelebene 69 des Aufliegers 12 momentan einschließt. Die zeitliche Konstanz des Ausgangssignals des Winkelstellungsgebers 67 zeigt an, daß die Giergeschwindigkeit des Aufliegers 12 dieselbe ist wie die des Zugfahrzeuges 11, während ein sich änderndes Ausgangssignal des Winkelstellungsgebers 67 im Sinne einer Vergrößerung oder Verkleinerung des Winkels φ anzeigt, daß die Giergeschwindigkeit $\dot{\Psi}_A$ des Auflieger 12 größer oder kleiner ist als diejenige des Zugfahrzeuges 11. In Kombination mit einem Giergeschwindigkeitssensor 31 für das Zugfahrzeug 12 ist daher durch den Winkelstellungsgeber 67 auch die Giergeschwindigkeits-Information für den Auflieger 12 gewinnbar.

Die elektronische Steuereinheit 25 vermittelt die Funktion eines Simulationsrechners, der in einem Takt vorgegebener Dauer von z.B. 5 bis 10 ms fortlaufend eine Aktualisierung der Matrixelemente $p_{ij}$ der Matrix P sowie der Matrixelemente $q_{ij}$ der Matrix Q der gleichsam das Fahrzeugmodell repräsentierenden Matrizengleichung (12) ausführt, und mit der durch die Taktdauer T bestimmten Periodizität Lösungen dieser Matrizengleichungen ausgibt, mit denen direkt oder indirekt gemessene Istwert-Daten der Gierwinkelgeschwindigkeit $\dot{\Psi}_Z$ und der Gierwinkelgeschwindigkeit $\dot{\Psi}_A$ des Aufliegers zur Erkennung eines fahrdynamischen Regelungsbedarfes verglichen werden, der sich im übrigen nach gängigen, dem Fachmann vertrauten Kriterien der Fahrdynamik-Regelung vollzieht.

Die elektronische Steuereinheit 25 vermittelt durch Lösung der Matrizengleichung (12) sowohl die Funktion eines Sollwertgenerators als auch die Funktion eines Komparators, der aus einem Soll-Istwert-Vergleich die im Sinne der Fahrdynamik-Regelung erforderlichen Ansteuersignale für die jeweiligen Aktuatoren $22_1$ bis $22_6$ sowie die elektropneumatischen Druckmodulatoren $32_1$, $32_2$ und $32_3$ erzeugt.

Im Fahrbetrieb des Sattelzuges 10 bedürfen die Matrixelemente $p_{11}$, $p_{12}$, $P_{21}$, $P_{31}$, $p_{43}$ und $p_{44}$ der Matrix **[P]** sowie die Matrixelemente $q_{13}$, $q_{14}$, $q_{23}$, $q_{24}$ und $q_{33}$ der Matrix **[Q]** der Matrizengleichung 12, die das Referenz-Modell des Sattelzuges 10 beschreibt, ständig einer Aktualisierung bezüglich der Fahrzeuggeschwindigkeit v. Die hierfür erforderlichen Geschwindigkeitsdaten ermittelt die elektronische Steuereinheit 25 aus einer Verarbeitung der Ausgangssignale der Raddrehzahlsensoren $30_1$ bis $30_6$, zweckmäßigerweise durch Mittelwertsbildung nur eines Teils der Raddrehzahlsensor-Ausgangssignale, z.B. derjenigen der nicht angetriebenen Vorderräder des Zugfahrzeuges 11.

Die Beladung des Sattelzuges 10, die von Fahrt zu Fahrt sehr unterschiedlich sein kann, ist in der Matrix **[P]** der Matrizengleichung (12) durch deren zur Masse $m_A$ des Aufliegers 12 proportionalen Elemente $p_{11}$, $p_{21}$ und $p_{31}$, das das Gierträgheitsmoment $J_A$ des Aufliegers repräsentierende Matrixelement $p_{33}$ und das die Schwerpunktslage des Aufliegerschwerpunkts $S_A$ zwischen dem Sattelgelenk 48 und der Auflieger-Achse 49 berücksichtigende Matrixelement $p_{43} = l_{AV}/v$ und in der Matrix Q durch deren Matrixelemente $q_{13}$, $q_{23}$, $q_{31}$ und $q_{33}$ berücksichtigt, die die Schwerpunktslage berücksichtigende Glieder (Faktoren $l_{AV}$ und $l_{AH}$) und - mit Ausnahme des Matrixelements $q_{31}$ - auch zur Aufliegermasse $m_A$ direkt proportionale Glieder als Summanden enthalten.

Bei unterstellbarer Kenntnis der Masse $m_z$ des Zugfahrzeuges, seines Radstandes $l_z$, seiner Schwerpunkts-Anordnung zwischen den Fahrzeugachsen 42 und 44, und seines Trägheitsmoments $J_Z$ sowie bei unterstellbarer Kenntnis des Abstandes $l_A$ der Hinterachse 49 des Aufliegers 12 vom Sattelgelenk 48 und auch des Abstandes $l_G$ des Sattelgelenks von der Gier-Trägheitsachse 51 des Zugfahrzeuges 11 ist eine Erfassung der Aufliegermasse $m_A$ und deren Berücksichtigung in dem durch die Matrizengleichung (12) repräsentierten Fahrzeugmodell, z.B. dadurch möglich, daß der Auflieger 12 und das Zugfahrzeug 11 mit je einem nicht dargestellten Achslastsensor ausgerüstet sind, deren last-proportionale Ausgangssignale unter Berücksichtigung der Fahrzeuggeometrie sowohl die Berechnung der Aufliegermasse $m_A$ als auch der Anordnung des Massenschwerpunktes SA des Aufliegers 12 zwischen dessen Hinterachse 49 und dem Sattelgelenk 43 erlauben.

Die Aufliegermasse $m_A$ ist, alternativ zu der geschilderten Bestimmung anhand der Ausgangssignale zweier Achslastsensoren auch anhand des Ausgangssignals eines einzigen Achslastsensors des Zugfahrzeuges 11 durch einen Beschleunigungsbetrieb ermittelbar, in dem bei bekanntem Betrag des an den angetriebenen Fahrzeugrädern wirksamen Drehmoments, das aus den Betriebsdaten des Motors und bekanntem Betrag der wirksamen Getriebe-Übersetzungen ermittelbar ist, die Fahrzeuggeschwindigkeit ermittelt und hieraus auf die Gesamtmasse ($m_z + m_A$) geschlossen wird und die Anhängermasse $m_A$ als Differenz zwischen Gesamtmasse und Zugfahrzeugmasse ermittelt wird. Die elektronische Steuereinheit 25 ist zweckmäßigerweise auf die Implementierung beider geschilderter Arten der Bestimmung der Aufliegermasse $m_A$ ausgelegt.

Das das Gier-Trägheitsmoment $J_A$ des Aufliegers 12 berücksichtigende Matrixelement $p_{33}$ der Matrix **[P]** wird durch die Beziehung

$$p_{33} = \left(A_V \cdot l_{AV}^2 + A_H \cdot l_{AH}^2\right) \cdot 1{,}1$$

angenähert, in der mit $A_V$ die Auflieger-Last im Sattelgelenk 48 und mit $A_H$ die Achslast an der Aufliegerachse 49 bezeichnet sind. Diese Beziehung ergibt für die statistisch überwiegende Anzahl möglicher Ladungsanordnungen im

Auflieger 12 eine gute Näherung seines Trägheitsmoments in Abhängigkeit von der Schwerpunktsanordnung und den Auflieger-Lasten.

Die Schräglaufsteifigkeiten $C_V$, $C_H$ und $C_A$ der Räder des Zugfahrzeuges 11 und des Aufliegers 12 als Konstante unterstellt, sind anhand einer durch die elektronische Steuereinheit 25 vermittelten Verarbeitung der jeweiligen Sensor-Ausgangssignale die Matrixelemente der Matrizen P und Q des Referenzmodell-Gleichungssystems (12) durch einfache Operationen bestimmbar, deren Durchführung in kurzen Taktzeiten ohne weiteres möglich ist, so daß auch die Aktualisierung der Matrixelemente situationsgerecht rasch erfolgen kann.

Um das durch die Matrizengleichung (12) repräsentierte Fahrzeugmodell für eine zeitnahe Simulation des realen Fahrzeugverhaltens nutzen zu können, vermittelt die elektronische Steuereinheit 21 eine Behandlung dieses Gleichungssystems (12) mit dem folgenden Lösungsansatz:

$$\dot{\bar{X}}(k) = \frac{\bar{X}(k) - \bar{X}(k-1)}{T}$$

in dem mit $\bar{X}(k)$ der Lösungsvektor des Gleichungssystems (12) bezeichnet ist, der auf der Basis der für die mit "k" numerierte Taktzeitspanne zu ermittelnde Lösungsvektor der Matrizengleichung (12), mit $\bar{X}(k-1)$ der für die unmittelbar vorausgehende Taktzeitspanne ermittelte Lösungsvektor dieses Gleichungssystems (12) und mit $\dot{\bar{x}}(k)$ die zeitliche Ableitung des zu ermittelnden Lösungsvektors $\bar{X}(k)$ bezeichnet sind.

Dieser Ansatz (13) als Matrizenoperation auf die Matrizengleichung (12) angewandt führt auf die Matrizengleichung

$$\frac{[P]}{T} \cdot \bar{X}(k) - \frac{[P]}{T} \cdot \bar{X}(k-1) = [Q] \cdot \bar{X}(k) + \bar{C} \cdot \delta(k) \tag{14}$$

in der mit δ(k) der aktuell eingesteuerte, mittels des Lenkwinkelgebers (29) erfaßte Lenkeinschlag bezeichnet ist.

Die Zusammenfassung der den "unbekannten" Zustandsvektor $\bar{X}(k)$ enthaltenden Terme und die Zusammenfassung der bekannten, den Zustandsvektor $\bar{X}(k-1)$ und den aktuellen Lenkwinkel δ(k) beinhaltenden Terme ergibt unmittelbar die Beziehung

$$\frac{[P]}{T} \cdot \bar{X}(k) - [Q] \cdot \bar{X}(k) = \frac{[P]}{T} \cdot \bar{X}(k-1) + \bar{C} \cdot \delta(k) \tag{15}$$

bzw.

$$\left(\frac{[P]}{T} - [Q]\right) \cdot \bar{X}(k) = \frac{[P]}{T} \cdot \bar{X}(k-1) + \bar{C} \cdot \delta(k) \tag{15'}$$

als Matrizengleichung für den Lösungsvektor $\bar{X}(k)$, für den aus der Beziehung (15') unmittelbar folgt:

$$\bar{X}(k) = \left(\frac{[P]}{T} - [Q]\right)^{-1} \cdot \left(\frac{[P]}{T} \cdot \bar{X}(k-1) + \bar{C} \cdot \delta(k)\right)$$

Zur Bestimmung des Schwimmwinkels β eignet sich auch ein sog. Luenberger Beobachter (vgl. Otto Füllinger, Regelungstechnik, Einführung in die Methoden und ihre Anwendung, Dr. Alfred Lüthig Verlag Heidelberg, 1985, fünfte Auflage, S.340 ff.), der durch die elektronische Steuereinheit 25 implementierbar ist und nachfolgend mit Bezug auf die Fig. 4 hinsichtlich seiner prinzipiellen Funktionen kurz erläutert wird, wobei durch die Erläuterung dieser Funktionen auch die elektronischschaltungstechnische Realisierung dieses Beobachters wiederum als hinreichend offenbart angesehen wird, da ein Fachmann der Regelungstechnik den Beobachter bei Kenntnis seiner Funktionen aufgrund seines Fachwissens realisieren kann.

In der Fig. 4 ist wiederum mit 10 das lediglich schematisch dargestellte Fahrzeug, das als Sattelzug vorausgesetzt ist, bezeichnet, das durch Vorgabe des Lenkwinkels δ, das Fahrerwunsches nach einer bestimmten Fahrzeuggeschwindigkeit v und/oder einer bestimmten Fahrzeugverzögerung z vom Fahrer gesteuert wird. Mit 10' ist ein "elektronisches" Modell des Fahrzeuges innerhalb des insgesamt mit 75 bezeichneten Beobachters bezeichnet. Diesem Fahrzeugmodell 10' sind Steuer-Eingangssignale zugeleitet, durch die die Vorgaben δ,v und z repräsentiert sind, mit denen das reale Fahrzeug 10 momentan betrieben wird. Aus diesen Eingaben erzeugt das Fahrzeugmodell einen Zustandsvektor $\hat{\bar{X}}$, der als Komponenten diejenigen Zustandsgrößen ($\hat{\dot{\Psi}}_Z$, $\hat{\dot{\Psi}}_A$, β und $\beta_Z$) enthält, die mit den realen Zustandsgrößen, repräsentiert durch den Zustandsvektor $\bar{X} = (\dot{\Psi}_Z, \dot{\Psi}_A, \beta_A, \beta)$, der durch das Verhalten des realen Fahrzeuges 10 zustande kommt, zu vergleichen sind.

Durch den Block 71 ist die gesamte Sensorik des realen Fahrzeuges repräsentiert, die aus dem Zustandsvektor $\bar{X}$ Meßwerte für mit diesem Zustandsvektor korrelierte Größen liefert, insbesondere Werte für die Giergeschwindigkeit $\dot{\Psi}_Z$ des Zugfahrzeuges 11 und/oder einen Meßwert für die bei Kurvenfahrt auftretende Querbeschleunigung $a_{qz}$. Wesentlich ist, daß die Sensorik 71 mindestens einen in eindeutiger Weise mit dem Zustandsvektor $\bar{X}$ verknüpften Meßwert erzeugt, bzw. einen hiermit verknüpften Satz $\bar{Y} = (\dot{\Psi}_Z, a_{qz})$ von Meßwerten.

Der Beobachter 75 ist seinerseits mit einer Simulations-Stufe 72 ausgestattet, die ihrerseits eine "Sensorik" simuliert, die aus den Zustandsvektor-Ausgaben ($\hat{\dot{\Psi}}_Z$, $\hat{\dot{\Psi}}_A$, $\beta_A$, $\beta_Z$) des Fahrzeugmodells 10' mit den Meßwert-Ausgaben der Sensorik 71 des realen Fahrzeuges 10 vergleichbare Ausgaben, bei dem zur Erläuterung gewählten Beispiel den "Meßsignal-Vektor" $\hat{\bar{Y}}$ mit den Werten $\hat{\dot{\Psi}}_Z$ und $a_{qz}$ in den Meßwert-Ausgaben der Sensorik 71 direkt vergleichbarem Format erzeugt.

Aus den solchermaßen erzeugten Meßsignalvektoren $\bar{Y}$ und $\hat{\bar{Y}}$ bildet eine Vergleichsstufe 74 des Beobachters 75 den Differenzvektor $\Delta\bar{Y} = \bar{Y} - \hat{\bar{Y}}$, der als Eingabe einer Rückführung 76 des Beobachters 75 zugeleitet wird, die hieraus durch Multiplikation der Eingabe $\Delta\bar{Y}$ mit einer Rückführmatrix **[L]** als Ausgaben Ansteuersignale für das Fahrzeugmodell 10' erzeugt, die dessen "Simulations"-Verhalten dahingehend beeinflussen, daß sein Zustands-Ausgangsvektor $\hat{\bar{X}}$ an den realen Zustandsvektor $\bar{X}$ angeglichen wird, derart, daß diese Angleichung möglichst rasch erfolgt, jedoch auch mit hinreichender Dämpfung, daß das Fahrzeugmodell 10' nicht "überschwingt".

Bei dieser Art der Regelung des Fahrzeugmodells 10', für das die Meßwert-Ausgaben des realen Fahrzeuges 10 gleichsam Sollwert-Vorgaben sind, kann davon ausgegangen werden, daß Größen, die am realen Fahrzeug 10 nicht meßbar sind, mittels des Fahrzeugmodells 10' jedoch "rechnerisch" ohne weiteres darstellbar sind, auch den hiermit korrespondierenden Größen des realen Fahrzeuges, im gegebenen Anwendungsfall den Schwimmwinkeln $\beta_A$ und $\beta_Z$ entsprechen.

Damit das im wesentlichen durch die Gleichungen (8''), (9''), (11'') und (4') repräsentierte Fahrzeugmodell, anhand dessen die elektronische Steuereinheit die fahrdynamischen Zustands-Größen $\dot{\Psi}_Z$ und $\beta_Z$ sowie $\dot{\Psi}_A$ und $\beta_A$ ermittelt, gleichsam selbsttätig an die Realität angepaßt wird, insbesondere den Beladungszustand des Fahrzeuges 10 adäquat berücksichtigt, ist durch die Sensorik des Fahrzeuges und die elektronische Steuereinheit 25 auch die Fähigkeit einer adaptiven Bestimmung solcher Größen ($m_Z$, $m_A$, $l_V$, $l_H$, $l_{AV}$, $l_{AH}$ und $l_G$) implementiert, anhand derer die Matrixelemente $p_{ij}$ der Matrix **[P]** sowie die Matrixelemente $q_{ij}$ der Matrix **[Q]** sowie die Komponente $c_2$ des Spaltenvektors $\bar{C}$ der Beziehung (12) bestimmbar sind, deren Kenntnis auch Voraussetzung für die Bestimmbarkeit der Schräglaufsteifigkeiten $C_V$, $C_H$ und $C_A$ ist. Zweckmäßigerweise umfaßt die elektronische Steuereinheit 25 auch eine Eingabe-Einheit 77, mittels derer berechnete und gemessene, ggf. auch realistisch geschätzte Werte der vorgenannten, für die Bestimmung der Matrix-Elemente $q_{ij}$ und $q_{ij}$ erforderlichen Größen der elektronischen Steuereinheit eingegeben werden können, die zumindest als realistische "Anfangs"-Werte genutzt werden können, so daß von vornherein ein realitätsnahes Fahrzeugmodell vorliegt.

Für die nachfolgende Erläuterung einer adaptiven Aktualisierung des Fahrzeugmodells sei zunächst eine Ausbildung des Fahrzeuges 10 als Sattelzug vorausgesetzt.

Bei einem solchen sind die Masse $m_z$ des Zugfahrzeuges, die Abstände $l_V$ und $l_H$ des Schwerpunktes des Zugfahrzeuges von der Vorderachse und der Hinderachse, der Abstand $l_G$ des Sattelpunktes vom Schwerpunkt des Zugfahrzeuges und dessen Trägheitsmoment $J_Z$ um die durch den Schwerpunkt gehende Hochachse des Zugfahrzeuges konstruktiv bedingte Größen, die von vornherein in einem Festwert-Speicher einer elektronischen Steuereinheit abrufbar abgelegt sein können, wobei eine durch den Fahrer bedingte Zusatzmasse als kleine Korrektur berücksichtigt sein kann.

Des weiteren ist vorausgesetzt, daß der Sattelzug mit dem Winkelstellungsgeber 67 ausgerüstet ist und am Zugfahrzeug 11 ein Achslastsensor 78 vorgesehen ist, der ein von der elektronischen Steuereinheit 25 verarbeitbares elektrisches Ausgangssignal erzeugt, das ein Maß für den über der Hinterachse abgestützten Anteil $m_{ZHA}$ der Gesamtmasse $m_{ges}$ des Sattelzuges 10 ist, oder, wenn der Auflieger nicht angehängt ist, ein Maß für den über die Hinterachse abgestützten Massenanteil des Zugfahrzeuges allein. Mit dieser Sensorik (Raddrehzahlfühler $30_1$ bis $30_6$ an sämtlichen Fahrzeugrädern, Achslastsensor 78 für die Hinterachse des Zugfahrzeuges und Winkelstellungsgeber 67) sind die zur Bestimmung der Matrixelemente $p_{ij}$ und $q_{ij}$ des Fahrzeugmodells, noch benötigten Größen $l_v$, $l_H$, $l_{AV}$, $l_{AH}$ und $m_A$ wie folgt bestimmbar:

Es folgt zunächst eine Ermittelung der Gesamtmasse $m_{ges}$ des Sattelzuges 10 durch Auswertung der Beziehung

$$m_{ges} = \frac{M_{mot} \cdot \frac{n_{mot}}{v} \cdot \eta}{Z_{HSP} - Z_{ist}} \qquad (17)$$

in der mit $M_{mot}$ das in [Nm] gemessene Motor-Ausgangsdrehmoment bezeichnet ist, mit $n_{mot}$ die in [s-1] gemessene Motordrehzahl, mit v die in [$ms^{-1}$] gemessene Fahrzeuggeschwindigkeit, mit η, der durch eine dimensionslose Zahl ≤1 bezeichnete Gesamtwirkungsgrad des Vortriebs-Übertragungsstranges, mit $Z_{HSP}$ die Verzögerung des Fahrzeuges in einer - antriebslosen -Hoch-Schalt-Pause, in der der Fahrer von einer Schaltstufe in die nächsthöhere schaltet und mit $Z_{ist}$ die - negative Verzögerung - Beschleunigung des Fahrzeuges bezeichnet sind, die sich nach dem "Gang"-Wechsel einstellt, nachdem das Fahrzeug in der nächsten Getriebe-Schaltstufe beschleunigt wird.

Hierbei ist vorausgesetzt, daß aus der elektronischen Motorsteuerung ein von der elektronischen Steuereinheit 25 verarbeitbares Signal vorliegt, das ein Maß für das Motor-Moment $M_{mot}$ ist, desgleichen ein Signal, das ein Maß für die Motordrehzahl $n_{mot}$ ist, das ebenfalls aus der sogenannten elektronischen Motorsteuerung vorliegt, und daß anhand der Ausgangssignale der Raddrehzahl-Sensoren, die zur Realisierung einer Antiblockier-Regelung vorgesehen sind, die Fahrzeuggeschwindigkeit v und die Verzögerungs- bzw. Beschleunigungswerte $Z_{HSP}$ und $Z_{ist}$ mit hinreichender Genauigkeit bestimmbar sind.

Der anhand der Beziehung (17), die auch für einen Gliederzug gilt, ermittelte wert $m_{ges}$ für die Gesamtmasse des Zuges 10 wird in einem Speicher der elektronischen Steuereinheit abgelegt und wird, so oft die Meßvoraussetzungen gegeben sind, selbsttätig überprüft, so daß jede Massenänderung, z.B. durch Teilentladung des Aufliegers 12 erfaßt und im Fahrzeugmodell berücksichtigt werden kann.

Die Teilmasse $m_A$ des Aufliegers 12 des Sattelzuges 10 oder eines Anhängers eines Gliederzuges, dessen Zugfahrzeug seinerseits ein Lastkraftwagen ist, ergibt sich bei bekannter Teilmasse $m_Z$ des Zugfahrzeuges aus der Beziehung

$$m_A = m_{ges} - m_z \qquad (18),$$

wobei im Falle eines Gliederzuges, bei dem als Zugfahrzeug ein Lastkraftwagen dient, der seinerseits eine im allgemeinen unbekannte Nutzlast trägt, die Teilmasse $m_Z$ ihrerseits gemäß der Beziehung (17) in einem Solo-Betrieb des Lastkraftwagens durch Auswertung der Beziehung (17) bestimmt werden muß, falls der Lastkraftwagen nicht mit einer eigenen Last-Sensorik, z.B. Achslast-Sensoren ausgerüstet ist, deren von der elektronischen Steuereinheit 25 verarbeitbare Ausgangssignale die Information über die Masse des Zugfahrzeuges enthalten.

Auch bei einem Sattelzug kann es zweckmäßig sein, die Masse $m_Z$ des Zugfahrzeuges durch eine Auswertung der Beziehung (17) für den Solobetrieb desselben zu bestimmen, zumindest um die diesbezügliche Eingabe der elektronischen Steuereinheit 25 zu überprüfen.

Mit Bezug auf das Zugfahrzeug 11 des Sattelzuges 10 zunächst davon ausgehend, daß für dieses aufgrund seiner konstruktiven Daten die Größen $l_V$ (Abstand des Fahrzeugschwerpunktes von der Vorderachse), $l_H$ (Abstand des Fahrzeug-Schwerpunktes von der Hinterachse) und $l_G$ (Abstand des Sattelpunktes 47 vom Schwerpunkt 51 des Zugfahrzeuges 11) und auch dessen Masse $m_Z$ sowie das Trägheitsmoment $J_Z$ um die vertikale Trägheitsachse 51 des Zugfahrzeuges 11 bekannt sind, und daß auch die Masse $m_A$ des Aufliegers 12 und auch dessen zwischen dem Sattelpunkt 47 und der Aufliegerachse 49 gemessene Länge $l_A$ bekannt sind, ist es, um die Matrixelemente $p_{ij}$ der Matrix **[P]** und die Matrixelemente $q_{ij}$ der Matrix **[Q]** der Matrizengleichung (12) bestimmen zu können, lediglich noch erforderlich, für den Auflieger 12 die Größen $l_{AV}$ (Abstand seines Schwerpunktes 52 vom Sattelpunkt 47 des Sattelzuges 10) und den Abstand $l_{AH}$ des Aufliegerschwerpunktes 52 von seiner Hinterachse zu bestimmen, woraus sich in guter Näherung auch der Wert $J_A$ des Trägheitsmomentes gemäß der als Schätzung anzusehenden Beziehung

$$J_A = \left(m_{AV} \cdot l_{AV}^2 + m_{AH} \cdot l_{AH}^2\right) \cdot 1{,}1 \qquad (19)$$

ergibt, in der mit $l_{AV}$ der Abstand des Sattelpunktes 47 vom Schwerpunkt 52 des Aufliegers 12 und mit $l_{AH}$ der Abstand des Aufliegerschwerpunktes 52 von der Hinterachse 49 des Aufliegers 12, mit $m_{AV}$ die im Sattelpunkt 47 abgestützte Teilmasse des Aufliegers 12 und mit $m_{AH}$ die über die Hinterachse 49 des Aufliegers. "12 abgestützte Teilmasse desselben bezeichnet sind.

Die beiden Größen $l_{AV}$ und $l_{AH}$ sind durch die Beziehung

$$l_{AH} = l_A - l_{AV} \tag{20}$$

miteinander verknüpft, in der $l_{AV}$ der Beziehung

$$l_{AV} = l_A \cdot \left(1 - \frac{m_{ZHA} - m_{ZHAleer}}{m_A} \cdot \frac{l_Z}{l_{SV}}\right) \tag{21}$$

genügt, in der mit $m_{ZHA}$ die Hinterachslast am Zugfahrzeug 11 bei angehängtem Auflieger, mit $m_{ZHAleer}$ die Hinterachslast am Zugfahrzeug ohne Auflieger, mit $m_A$ die Gesamtmasse des Aufliegers 12, mit $l_Z$ der Rastand des Zugfahrzeuges und mit $l_{SV}$ der Abstand des Sattelpunktes 47 von der Vorderachse 43 des Zugfahrzeuges 11 bezeichnet sind.

Ist, wie zum Zweck der Erläuterung vorausgesetzt, die Hinterachslast $m_{ZHA}$ des Zugfahrzeuges 11 bei angehängtem Auflieger 12 durch das Ausgangssignal des Achslastsensors 78 bekannt, sind die Matrixelemente $p_{ij}$ und $q_{ij}$ der Matrizen [P] und [Q] der Matrizengleichung (12) bestimmbar und das Fahrzeugmodell, das durch diese Matrizengleichung (12) repräsentiert ist, komplett.

Dasselbe gilt sinngemäß, wenn das Zugfahrzeug 11 oder der Auflieger 12 mit einem Sattelpunkt-Lastsensor 79 versehen ist, der ein von der elektronischen Steuereinheit 25 verarbeitbares elektrisches Ausgangssignal erzeugt, das ein Maß für die Auflieger-Last im Sattelpunkt 47 des Sattelzuges 10 ist.

In diesem Falle ist die Größe $l_{AV}$ durch die Beziehung

$$l_{AV} = l_A - \frac{m_{AS} \cdot l_A}{m_A} = l_A\left(1 - \frac{m_{AS}}{m_A}\right) \tag{22}$$

gegeben, in der mit $m_{AS}$ die Aufliegerlast des Aufliegers 12 im Sattelpunkt 47 bezeichnet ist.

Auch in diesem Falle ist die Größe $l_{AH}$ durch die Beziehung (20) gegeben.

Die Größe $l_{AV}$ ist auch dann - adaptiv - bestimmbar, wenn der Auflieger 12 mit einem Auflieger-Achslast-Sensor 81 versehen ist, der ein von der elektronischen Steuereinheit verarbeitbares elektrisches Ausgangssignal abgibt, das ein Maß für die Aufliegerlast an dessen Hinterachse(n) 49 abgestützte Aufliegerlast $m_{AHA}$ ist.

In diesem Falle ist die Größe $l_{AV}$ durch die Beziehung

$$l_{AV} = l_A \cdot \frac{m_{AHA}}{m_A} \tag{23}$$

gegeben und die Größe $l_{AH}$ wieder durch die Beziehung (20).

Wenn, wie für das zur Erläuterung gewählte Ausführungsbeispiel vorausgesetzt, ein "Knick"-Winkel ($\varphi$)-Sensor 67 vorhanden ist, kann die zwischen dem Sattelpunkt 47 und der Aufliegerachse 49 gemessene Länge $l_A$ des Aufliegers 12 gemäß der Beziehung

$$l_A = \frac{R_H - R_A\sqrt{1 + \tan^2\varphi}}{\sin\varphi} + R_A \tan\varphi \tag{24}$$

adaptiv bestimmt werden, in der mit $\varphi$ der Knickwinkel bezeichnet ist, den bei Kurvenfahrt die Längsmittelebenen 68 und 69 des Zugfahrzeuges 11 und des Aufliegers 12 miteinander einschließen, mit $R_H$ der mittlere Bahnradius der Hinterräder des Zugfahrzeuges und mit $R_A$ der mittlere Bahnradius der Räder der Aufliegerachse 49 bezeichnet sind, die sich bei stationärer Kurvenfahrt mit geringer Geschwindigkeit und Querbeschleunigung aus der folgenden Bezie-

hung ergeben:

$$R_{H,A} = \frac{b_{H,A}}{v_{H,Alinks} - v_{H,Arechts}} \cdot \frac{\left(v_{H,Alinks} + v_{H,Arechts}\right)}{2} \qquad (25)$$

in der mit $b_H$ die Spurweite der Hinterachse des Zugfahrzeuges 11 und mit $b_A$ die Spurweite der Aufliegerachse 49 bezeichnet sind und mit $v_{H,Alinks}$ und $v_{H,Arechts}$ die Radgeschwindigkeiten an der jeweiligen Achse bezeichnet sind.

Hierbei ist vorausgesetzt, daß die Spurweiten $b_{H,A}$ bekannt und als Hilfswerte in einem Speicher der elektronischen Steuereinheit abrufbar abgelegt sind.

Die Beziehung (25) gilt in der Näherung, daß sämtliche Fahrzeugräder auf konzentrischen Kreisen abrollen.

Des weiteren gilt für den Abstand $l_{SH}$ des Sattelpunktes 47 von der Hinterachse 44 des Zugfahrzeuges die Beziehung

$$l_{SH} = \frac{R_H - R_A\sqrt{\tan^2\varphi + 1}}{\tan\varphi} \qquad (26)$$

Dadurch ist bei bekannter Schwerpunktslage ($l_V$, $l_H$) die Größe $l_G$ gemäß der Beziehung

$$l_G = l_H - l_{SH} \qquad (27)$$

bestimmbar, die, je nach der Auslegung des Sattelgelenks, mit dem das Zugfahrzeug ausgerüstet ist, variieren kann.

Zweckmäßigerweise ist die elektronische Steuereinheit so ausgelegt, daß sie eine Auswertung der Beziehung (25) auch für die Vorderräder des Zugfahrzeuges vermittelt, so daß zusätzlich zum mittleren Kurvenradius RH der Hinterräder auch der mittlere Bahnradius bestimmt wird und hiernach gemäß der Beziehung

$$l_Z = \sqrt{R_v^2 - R_H^2} \qquad (28)$$

der Radstand $l_Z$ des Zugfahrzeuges 11 ermittelbar ist. Dieser kann bei Kurvenfahrt mit geringer Beschleunigung auch gemäß der Beziehung

$$l_Z = \frac{\delta}{\dot{\Psi}_Z} \cdot v \qquad (29)$$

ermittelt werden, in der mit $\delta$ der Lenkwinkel, mit $\dot{\Psi}_Z$ die Giergeschwindigkeit des Zugfahrzeuges 11 und mit v die Fahrgeschwindigkeit bezeichnet sind, die jeweils mittels der diesbezüglichen Sensoren ermittelt werden.

Die elektronische Steuereinheit 25 ist auch für einen Betriebsmodus ausgelegt, in dem das Zugfahrzeug 11 des Sattelzuges 10 gleichsam als sein "eigener" Achslastsensor benutzt wird.

Voraussetzung dafür ist, daß für das Zugfahrzeug allein seine Masse $m_Z$, das Verhältnis $f_{MZ}$ der Auslegung der Vorderradbremsen in Relation zu derjenigen der Hinterradbremsen, das gleiche Bremsenkennwerte $C_{VA}$ und $C_{HA}$ an den Vorderradbremsen und an den Hinterradbremsen vorausgesetzt, angibt, um welchen Faktor ($f_{MZ}$) die Vorderachs-Bremskraft $B_{VA}$ größer ist als die Hinterachs-Bremskraft $B_{HA}$, sowie Reifenkonstanten $k_{HA}$ und $k_{VA}$ bekannt sind, über die der Bremsschlupf $\lambda_{HA}$ und $\lambda_{VA}$ mit dem über die Radbremsen ausübbaren Bremskräften $B_{HA}$ und $B_{VA}$ durch die Beziehung

$$\lambda_{HA,VA} = k_{HA,VA} \cdot B_{HA,VA} / P_{HA,VA} = k_{HA,VA} \cdot \mu_{HA,VA} \qquad (30)$$

verknüpft ist, in der mit $P_{HA}$ die Hinterachslast und mit $P_{VA}$ die Vorderachslast des Zugfahrzeuges 11 bezeichnet sind, die sich ergeben, wenn der Auflieger 12 an das Zugfahrzeug 11 angekoppelt ist.

Desweiteren wird vorausgesetzt, daß die Gesamtmasse $m_{ges}$ bekannt, z.B. gemäß der Beziehung (17) ermittelt worden ist.

Eine Erfassung - "Messung" - der Hinterachs-Last $P_{HA}$ ist dann in der Weise möglich, daß die elektronische Steuereinheit bei einer Bremsung, bei der nur eine mäßige Fahrzeugverzögerung Z erzielt werden soll, in der Weise steuert, daß nur die Hinterradbremsen aktiviert werden, so daß die Beziehung gilt:

$$m_{ges} \cdot Z = \mu_{HA} \cdot P_{HA} \qquad (31)$$

in der mit $\mu_{HA}$ der an der Hinterachse des Zugfahrzeuges maßgebliche Kraftschlußbeiwert zwischen der Fahrbahn und den gebremsten Fahrzeugrädern bezeichnet ist, der gemäß der Beziehung

$$\lambda_{HA} = k_{HA} \cdot \mu_{HA} \qquad (32)$$

mit dem hierbei an der Hinterachse auftretenden Bremsschlupf $\mu_{HA}$ verknüpft ist, der seinerseits durch die Beziehung

$$\lambda_{HA} = \frac{n_o - n_{HA}}{n_o}\,[\%] \qquad (33)$$

definiert ist, in der mit $n_0$ die mittels der Radrehzahlfühler erfaßten Raddrehzahlen nicht gebremster Fahrzeugräder, z.B. der Vorderräder des Zugfahrzeuges, und mit $n_{HA}$ die mittlere Raddrehzahl der gebremsten Hinterräder des Fahrzeuges bezeichnet ist.

Die Fahrzeugverzögerung Z ist durch eine differenzierende Verarbeitung der Raddrehzahlen der nicht gebremsten Fahrzeugräder erfaßbar gemäß der Beziehung

$$Z = \left(\frac{dn_0}{dt}\right) \qquad (34)$$

deren Auswertung ebenfalls durch die elektronische Steuereinheit erfolgt.

Durch Auswertung der Beziehung

$$P_{HA} = \frac{m_{ges} \cdot Z \cdot k_{HA}}{\lambda_{HA}} \qquad (35)$$

die unmittelbar aus den Beziehungen (31) und (32) folgt, wird in diesem Betriebsmodus der Bremsanlage aus den gemessenen Größen z und $\lambda_{HA}$ die Hinterachslast $P_{HA}$ ermittelt, die sich beim angekuppeltem Auflieger 12 an der Hinterachse des Zugfahrzeuges 11 ergibt.

Im Verlauf von Bremsungen, bei denen ebenfalls nur mäßige Fahrzeugverzögerungen eingesteuert werden und auf im wesentlichen gleiche Momentanwerte der Raddrehzahlen geregelt wird, was auch im wesentlichen gleichen Momentanwerten des Bremsschlupfes $\lambda_{VA}$ und $\lambda_{HA}$ an der Vorderachse und der Hinterachse des Zugfahrzeuges entspricht, so daß die folgende Relation gilt:

$$\frac{\lambda_{HA}}{\lambda_{VA}} = \frac{k_{HA} \cdot \mu_{HA}}{k_{VA} \cdot \mu_{VA}} = \frac{k_{HA} \cdot \frac{B_{HA}}{P_{HA}}}{k_{VA} \cdot \frac{B_{VA}}{P_{VA}}} = \frac{k_{HA}\ \frac{P_{HA} \cdot C_{HA}}{P_{HA}}}{k_{VA} \cdot \frac{P_{VA} \cdot f_{MZ} \cdot C_{VA}}{P_{VA}}} \qquad (36)$$

bzw. , wenn $C_{HA} = C_{VA}$ angenommen werden kann,

$$\frac{\lambda_{HA}}{\lambda_{VA}} = \frac{k_{HA} \cdot p_{HA} \cdot P_{VA}}{k_{VA} \cdot p_{VA} \cdot f_{MZ} \cdot P_{HA}} = 1 \qquad (36')$$

wird durch Messung der Drücke $p_{VA}$ und $p_{HA}$, mit denen die Aktuatoren der Vorderachs-Bremsen und die Aktuatoren der Hinterachs-Bremsen angesteuert werden, das entsprechende Druckverhältnis

$$p_{VA}/p_{HA} = a \qquad (37)$$

und hieraus durch Auswertung der Beziehung (36') das Verhältnis der Vorderachslast $P_{VA}$ zur Hinterachslast $P_{HA}$ des Zugfahrzeuges gemäß der Beziehung

$$\frac{P_{VA}}{P_{HA}} = \frac{k_{VA} \cdot f_{MZ} \cdot a}{k_{HA}} \qquad (38)$$

ermittelt, aus der unmittelbar die Beziehung

$$P_{VA} = \frac{k_{VA} \cdot f_{MZ} \cdot a}{k_{HA}} \cdot P_{HA} \qquad (39)$$

folgt, und in Verbindung mit der Beziehung (35) die Beziehung

$$P_{VA} = k_{VA} \cdot f_{MZ} \cdot a \cdot m_{ges} \cdot \frac{Z}{\lambda_{HA}}$$

Bei Kenntnis der Achslasten $P_{VA}$ und $P_{HA}$ ergibt sich für die Achslast $P_{AL}$ des Aufliegers die Beziehung

$$P_{AL} = m_{ges} \cdot g - \left(P_{VA} + P_{HA}\right) \qquad (40)$$

Zur Erläuterung einer adaptiven Bestimmung der Reifenkonstanten $k_{VA}$ und $k_{HA}$, über die im Sinne der Proportionalitätsbeziehung (30) der Bremsschlupf $\lambda$ mit der Bremskraft und daher mit dem bei einer Bremsung an dem gebremsten Fahrzeugrad genutzten Kraftschlußbeiwert $\mu$ verknüpft ist, sei nunmehr auf das Diagramm der Fig. 5 Bezug genommen, die qualitativ den Verlauf einer insgesamt mit 85 bezeichneten Reifenkennlinie ($\mu/\lambda$-Kurve) zeigt, bei der in Abhängigkeit vom Bremsschlupf $\lambda$, der als Abszisse aufgetragen ist, der Verlauf des jeweils genutzten Kraftschlußbeiwerts $\mu$ dargestellt ist, der als Ordinate aufgetragen ist.

Diesem Diagramm ist qualitativ entnehmbar, daß bei einer Steigerung der Bremsen-Betätigungskraft mit der eine Vergrößerung des Schlupfes $\lambda$ einhergeht, bis zu einem optimalen Wert $\lambda_{OM}$ der für die Fahrzeugverzögerung nutzbare Anteil der am Rad wirksamen Normalkraft, der durch den Kraftschlußbeiwert $\mu$ angegeben ist, bis zu einem Maximalwert $\mu_{max}$ ansteigt und sodann, d.h. bei weiterer Vergrößerung des Bremsschlupfes $\lambda$ wieder abfällt, um schließlich bei dem Wert $\lambda$=1 einen Grenzwert $\mu_G$ zu erreichen, der dem Reibbeiwert der Gleitreibung bei blockiertem Fahrzeugrad entspricht.

Im Bereich kleiner Werte des Bremsschlupfes $\lambda$ ist der nutzbare Kraftschlußbeiwert $\mu$ zum Bremsschlupf in der Beziehung $\mu \cdot k = \lambda$, wie durch den in dem Diagramm geradlinig verlaufenden Anfangsabschnitt 86 der $\mu/\lambda$-Kurve 85 wiedergegeben, durch dessen Steigung $k=\Delta\lambda/\Delta\mu$ somit die Reifenkonstante repräsentiert ist, die in der Beziehung (30) achsbezogen mit $k_{HA}$ und $k_{VA}$ bezeichnet ist. Diese Reifenkonstante ist im Allgemeinen von Rad zu Rad verschieden und ändert in der Regel auch über längere Betriebszeit des Fahrzeuges hinweg ihren Betrag, z.B. aufgrund von Alterungserscheinungen des Reifenmaterials und/oder aufgrund von Temperatureinflüssen, die die Reibungseigenschaften eines Reifens verändern können.

Um derartige Einflüsse radbezogen adäquat berücksichtigen zu können, werden, wann immer das Zugfahrzeug 11 im Solobetrieb - bei bekannter Masse $m_Z$ und Achslastverteilung $P_V/P_H$ gefahren wird, die Reifenkonstanten

$k_{VAl}$, $k_{VAr}$, $k_{HAl}$ und $k_{HAr}$ des linken Vorderrades (VAl), des rechten Vorderrades (VAr), des linken Hinterrades (HAl) und des rechten Hinterrades (HAr) des Zugfahrzeuges 11 adaptiv bestimmt.

Davon ausgehend, daß die Vorderräder des Zugfahrzeuges nicht angetrieben sind und die Hinterräder des Fahrzeuges über ein übliches Ausgleichsgetriebe miteinander antriebs-gekoppelt sind, ist eine adaptive Bestimmung der Reifenkonstanten der Vorderräder des Fahrzeuges 10, selbsttätig gesteuert durch die elektronische Steuereinheit, wie folgt möglich:

Während einer Bremsung, durch die der Fahrer eine nur mäßige Fahrzeugverzögerung von z.B. 0,2g ($g=9{,}8lms^{-1}$) erreichen will, und dabei das Bremspedal auch nur mit mäßiger Geschwindigkeit $\dot{\varphi}$ betätigt, werden sowohl in der Anfangsphase der Bremsung, in der sich die Verzögerungs-Sollwertvorgabe "langsam" ändert, als auch in der stationären Phase der Bremsung, während derer der Fahrer die Bremspedal-Stellung nicht mehr ändert, werden in kurzen Zeitabständen die Fahrzeugverzögerung Z ($\lambda_{VAl,r}$) und der mit der jeweils gemessenen Fahrzeugverzögerung korrelierte Bremsschlupf $\lambda_{VAl,r}$ bestimmt und aus einer mittelnden oder interpolierenden Verarbeitung der jeweiligen Wertepaare die Reifenkonstante $k_{VAl}$ bzw. $k_{VAr}$ des jeweiligen Vorderrades bestimmt.

Hierbei wird, wenn das linke Vorderrad gebremst wird, dessen Schlupf $\lambda_{VAL}$ gemäß der Beziehung

$$\lambda_{VAl} = \frac{n_{VAr} - n_{VAl}}{n_{VAr}} \qquad (41)$$

bestimmt, und, falls das rechte Vorderrad allein gebremst wird, dessen Schlupf $\lambda_{VAr}$ gemäß der Beziehung

$$\lambda_{VAr} = \frac{n_{VAl} - n_{VAr}}{n_{VAl}} \qquad (42),$$

wobei die im Nenner der Beziehungen (41) und (42) stehenden Raddrehzahlen $n_{VAr}$ bzw. $n_{VAl}$ jeweils diejenige des nicht gebremsten Vorderrades als Referenzdrehzahl ist.

Die Reifenkonstanten $k_{VAl}$ und $k_{VAr}$ ergeben sich für die Anfangsphase der Bremsung, in der jeweils nur ein Vorderrad gebremst ist, durch Auswertung der Beziehung

$$k_{VAl,r} = \frac{\lambda_{VAl,r} \cdot P_{VA}}{Z_f \cdot m_Z \cdot 2} \qquad (43)$$

in der mit $P_{VA}$ die Vorderachslast bezeichnet ist.

Auf analoge Weise werden die Reifenkonstanten $k_{HAl,r}$ genäß der Beziehung

$$k_{HAl,r} = \frac{\lambda_{HAl,r} \cdot P_{HA}}{Z_f \cdot m_Z \cdot 2} \qquad (44)$$

bestimmt, in der mit $P_{HA}$ die Hinterachslast bezeichnet ist.

Die bei einer Auswertung der Beziehung 44 berücksichtigten Werte $\lambda_{HAl}$ und $\lambda_{HAr}$ des Bremsschlupfes des jeweils gebremsten Hinterrades werden gemäß den Beziehungen

$$\lambda_{HAl} = \frac{n_{VAl,r} - n_{HAl}}{n_{VAl,r}} \qquad (45)$$

bzw.

$$\lambda_{HAr} = \frac{n_{VAl,r} - n_{HAr}}{n_{VAl,r}} \qquad (46)$$

bestimmt, durch die die Antriebskopplung der Hinterräder über ein Ausgleichs-Getriebe erfolgt, das bei einer Bremsung eines der Hinterräder zu einer Beschleunigung des jeweils anderen - nicht gebremsten - Hinterrades führt.

Unter der im allgemeinen realistischen Annahme, daß die als angetrieben vorausgesetzten Hinterräder dieselbe Bereifung haben, und daß solches auch für die Vorderräder des Fahrzeugs gilt, können bei bekannter Gesamtmasse und Achslastverteilung des Zugfahrzeuges für dieses auch "achsweise" Reifenkonstanten $k_{VA}$ und $k_{HA}$ ermittelt werden, wobei die Hinterachs-Reifenkonstante $k_{HA}$ im Traktionsbetrieb des Zugfahrzeuges ermittelt wird und bei hiernach bekanntem Wert der Hinterachs-Reifenkonstante im Bremsbetrieb die Vorderachs-Reifenkonstante $k_{VA}$ ermittelt wird.

Die Bestimmung der Hinterachs-Reifenkonstanten $k_{HA}$ erfolgt in einer Betriebssituation des Fahrzeuges, in der seine Vorwärtsbeschleunigung $Z_{vorwärts}$ konstant ist. Die Vorwärtsbeschleunigung $Z_{vorwärts}$ ist hierbei durch die Beziehung

$$Z_{vorwärts} = \frac{F_{vorwärts}}{m_{ges}} = \frac{P_{HA} \cdot \lambda_{HAntrieb}}{k_{HA} \cdot (P_{VA} + P_{HA})} \qquad (47)$$

und der Antriebsschlupf $\lambda_{HAntrieb}$ durch die Beziehung

$$\lambda_{HAntrieb} = \frac{n_{HA} - n_{VA}}{n_{HA}} [\%] \qquad (48)$$

gegeben. Die Vorwärts-Beschleunigung $Z_{vorwärts}$ wird zweckmäßigerweise aus einer differenzierenden Verarbeitung der Raddrehzahlen $n_{VA}$ der Vorderräder ermittelt.

Aus der für die Vorwärtsbeschleunigung $Z_{vorwärts}$ geltenden Beziehung (47) folgt für die Hinterachs-Reifenkonstante $k_{HA}$ unmittelbar die Beziehung:

$$k_{HA} = \frac{\lambda_{HAntrieb} \cdot P_{HA}}{Z_{vorwärts} \cdot (P_{VA} + P_{HA})} \qquad (49),$$

die anhand der gemessenen Werte der Vorwertsbeschleunigung $Z_{vorwärts}$ und des Antriebsschlupfes auswertbar ist.

Aus der Beziehung (49) für die Hinterachs-Reifenkonstante $k_{HA}$ erfolgt für das Verhältnis des Antriebs-Schlupfes zur Vorwärtsbeschleunigung unmittelbar die Beziehung:

$$k_{HA} \left( \frac{P_{VA}}{P_{HA}} + 1 \right) = \frac{\lambda_{HAntrieb}}{Z_{vorwärts}} \qquad (49'),$$

aus der ersichtlich ist, daß dieses Verhältnis eine fahrzeugsspezifische Konstante $m_k$ repräsentiert, die der Beziehung genügt:

$$m_k = k_{HA} \cdot \left( \frac{P_{VA}}{P_{HA}} + 1 \right) \qquad (49'')$$

Unter Berücksichtigung der für das Achslastverhältnis $P_{VA}/P_{HA}$ geltenden Beziehung (38):

$$\frac{P_{VA}}{P_{HA}} = \frac{k_{VA} \cdot f_{MZ} \cdot a}{k_{HA}}$$

ergibt sich für die Vorderachs-Reifenkonstante $k_{VA}$ die Beziehung

$$k_{VA} = \frac{m_k - k_{HA}}{f_{MZ} \cdot a} \qquad (50).$$

In dieser Beziehung (50) ist mit a das der Beziehung (37) entsprechende Druckverhältnis $p_{VA}/p_{HA}$ bezeichnet, das in einem Bremsbetrieb des Fahrzeuges ermittelbar ist, bei dem die Bremskräfte so geregelt werden, daß sich Gleichheit der Raddrehzahlen sämtlicher Fahrzeugräder ergibt.

## Patentansprüche

1. Verfahren zur Fahrdynamik-Regelung an einem als Sattelzug oder Gliederzug, der aus einem Zugfahrzeug und einem Anhängerfahrzeug besteht, ausgebildeten Straßenfahrzeug, wonach taktgesteuert in zeitlich aufeinanderfolgenden Zyklen vorgebbarer Dauer $T_K$ von z.B. 5 bis 10 ms mittels eines Simulationsrechners einer einen selbsttätigen Ablauf der Regelung vermittelnden elektronischen Steuereinheit auf der Basis eines das Straßenfahrzeug hinsichlich seiner konstruktiv bedingten Kenngrößen und seines Beladungszustandes sowie seiner Betriebsdaten repräsentierenden Modells aus gemessenen aktuellen Werten mindestens des Lenkwinkels $\delta$ und der Fahrzeuggeschwindigkeit $v_x$ Referenzgrößen für mindestens die Giergeschwindigkeit $\dot{\Psi}$ und den Schwimmwinkel $\beta$ des Straßenfahrzeugs generiert werden und aus einem Vergleich der Referenzgröße $\dot{\Psi}_{so}$ als Sollwert der Giergeschwindigkeit des Straßenfahrzeugs mit mittels einer Giergeschwindigkeits-Sensoreinrichtung fortlaufend erfaßten Ist-Werten $\dot{\Psi}_I$ der Giergeschwindigkeit des Straßenfahrzeugs Ansteuersignale zu einer Abweichungen des jeweiligen Ist-Wertes vom jeweils maßgeblichen Sollwert kompensatorisch beeinflussenden Aktivierung mindestens einer Radbremse des Straßenfahrzeugs und/oder zur Reduzierung des Motor-Antriebsmoments erzeugt werden, wobei das Fahrzeugmodell für das Zugfahrzeug durch ein lineares Differentialgleichungssystem der Form

$$[P] \cdot (\dot{\bar{X}}) = [Q] \cdot (\bar{X}) + (\bar{C}) \cdot \delta(t)$$

implementiert ist, in dem [P] eine 4x4-Matrix mit Elementen $p_{ij}$ ($p_{ij}$ = 0, $m_z v$, 0,0; 0,0,0,$J_z$;0,0,0,0; 0,-1,0,0) repräsentiert, in denen mit $m_z$ die Masse des Zugfahrzeugs, mit $J_z$ sein Gier-Trägheitsmoment und mit v die Fahrzeuglängsgeschwindigkeit bezeichnet sind,
[Q) eine 4x4-Matrix mit Elementen $q_{ij}$
($q_{ij}$ = .0, $-C_v$ $-C_H$, 0, $-m_z \cdot v - (C_v l_v - C_H l_H)/v$; 0, $C_H l_H - C_V l_V$, 0, $(-l_y^2\ C_v - l_H^2 C_H)/v$; 0,0,0,0;0,0,0,1) repräsentiert, in denen mit $C_v$ und $C_H$ die Schräglaufsteifigkeiten der Vorderräder bzw. der Hinterräder des Zugfahrzeugs, und mit $l_V$ und $l_H$ der Abstand des Fahrzeugschwerpunktes von der Vorderachse bzw. der Hinterachse bezeichnet sind, $\bar{C}$ einen 4-Komponenten-Spaltenvektor mit den Komponenten $c_i$
($c_i = C_v, C_v l_v$.,0,0) repräsentiert, $\bar{X}$ einen aus den Zustandsgrößen $\beta_z$ und $\dot{\Psi}_Z$ gebildeten 4-Komponenten-Spaltenvektor mit den Komponenten $x_i$ ($x_i$ = 0, $\beta_z$, 0, $\dot{\Psi}_Z$) und $\dot{\bar{X}}$ dessen zeitliche Ableitung $d\bar{X}/dt$ repräsentieren, wobei zur fahrdynamischen Erfassung der Zustandsgrößen Schwimmwinkel $\beta_A$ und Giergeschwindigkeit $\dot{\Psi}_A$ des mit dem Zugfahrzeug Sattelzuges gekoppelten Aufliegers (12) Null-Elemente $p_{11}$, $p_{21}$, $p_{31}$, $p_{33}$, $p_{41}$, $p_{43}$ und $p_{44}$ der das Zugfahrzeug allein repräsentierenden Matrix [P] durch die Elemente
$p_{11} = m_A$ v, $p_{22} = - m_A v l_G$, $P_{31} = -m_A v l_{AV}$, $P_{33} = J_A$, $p_{41} = 1$, $P_{43} = l_{AV}/v$ und $p_{44} = l_G/v$ ersetzt sind, sowie Null-Elemente $q_{11}$, $q_{13}$, $q_{22}$, $q_{23}$, $q_{31,}$ $q_{33}$ und $q_{43}$ der das Zugfahrzeug allein repräsentierenden Matrix [Q] durch die Matrixelemente $q_{11} = -C_A$, $q_{13} = -m_A v + C_A l_{AH}/v$,
$q_{21} = C_A l_G$, $q_{23} = m_A v l_G - C_A l_G l_{AH}/v$, $q_{31} = C_A l_{AV} + C_A l_{AH}$,
$q_{33} = m_A v l_{AV} - (C_A l_{AV} l_{AH} + C_A l_{AH}^2$ /v und $q_{43}$ = -1 ersetzt sind und der Zustandsvektor $\bar{X}$ und dessen zeitliche Ableitung $\dot{\bar{X}}$ um die Komponenten $x_1 = \beta_A$ und $x_2 = \dot{\Psi}_A$ bzw. $\dot{x}_1 = \dot{\beta}_A$ und $\dot{x}_3 = \ddot{\Psi}_A$ ergänzt sind, wobei mit $m_A$ die Masse des Aufliegers, mit $l_G$ der in Fahrzeuglängsrichtung gemessene Abstand der Sattelgelenkachse vom Schwerpunkt des Zugfahrzeuges, mit $l_{AV}$ der Abstand des Schwerpunktes des Aufliegers (12) von der Sattelgelenkachse, mit $l_{AH}$ der Abstand des Aufliegerschwerpunktes von der Aufliegerachse, mit $C_A$ die Schräglaufsteifigkeit der Räder der Aufliegerachse und mit $J_A$ das Gierträgheitsmoment des Aufliegers (12) bezeichnet sind, wobei die Aktualisierung der fahrdynamischen Zustandsgrößen $\beta_z$(k-1), $\beta_A$(k-1), $\dot{\Psi}_Z$(k-1) und $\dot{\Psi}_A$(k-1) die zu einem Zeitpunkt t(k-1) ermittelt worden sind, auf den um die Taktzeitspanne $T_k$ späteren Zeitpunkt t(k) durch Auswertung des Gleichungssystems

$$\bar{X}(k) = \left\{ \frac{[P]}{T_k} - [Q] \right\}^{-1} \cdot \left\{ \frac{[P]}{T_k} \cdot \bar{X}(k-1) + \bar{C} \cdot \delta(k) \right\}$$

mit auf den Zeitpunkt t(k) aktualisierten Werten der Matrixelemente $p_{ij}$ und $q_{ij}$ erfolgt.

2. Verfahren nach Anspruch 1, **dadurch gekennzeichnet, daß** der Schwimmwinkel $\beta_Z$ bei konstanter Geschwindigkeit des Straßenfahrzeugs auch durch eine Auswertung der Beziehung

$$\beta_Z = \delta \cdot \frac{l_H}{l_Z}$$

überprüft wird.

3. Verfahren nach Anspruch 1 oder Anspruch 2, **dadurch gekennzeichnet, daß** der Schwimmwinkel $\beta_Z$ des Zugfahrzeugs auch durch eine Auswertung der Beziehung

$$\beta_z = \int_{t_0(\delta=0)}^{t_c(\delta=\delta_c)} \left( \frac{a_q}{v} - \dot{\Psi} \right) dt$$

für die Integrationszeitspanne $t_i = t_c - t_o$ gewonnen wird, innerhalb derer der Fahrer den für Kurvenfahrt erforderlichen Lenkwinkel $\delta$ einstellt, wobei mit $a_q$ die auf das Straßenfahrzeug wirkende Querbeschleunigung bezeichnet ist.

4. Verfahren nach einem der Ansprüche 1 bis 3 für einen Sattelzug mit zweiachsigem Zugfahrzeug und einachsigem Auflieger, **dadurch gekennzeichnet, daß** der Schwimmwinkel $\beta_A$ des Aufliegers (12) durch eine Auswertung der Beziehung

$$\beta_A = \varphi \div \beta_Z - \frac{\dot{\Psi}(l_G + l_{AV})}{v}$$

gewonnen wird, in der mit $\varphi$ der mit zunehmendem Betrag des Lenkwinkels $\delta$ ebenfalls zunehmende Knickwinkel bezeichnet ist, den die in der Sattelgelenkachse sich schneidenden Längsmittelebenen des Zugfahrzeuges (11) und des Aufliegers (12) miteinander einschließen.

5. Verfahren nach Anspruch 4, **dadurch gekennzeichnet, daß** der Knickwinkel $\varphi$ durch eine Auswertung der Beziehung

$$\varphi = 180° - \arccos\left( \frac{l_A}{\sqrt{R_A^2 \div l_A^2}} \right) - \arccos\left( \frac{R_A^2 - R_v^2 \div l_V^2 - l_A^2}{2 \cdot l_V \sqrt{R_A^2 \div l_A^2}} \right)$$

ermittelt wird, in der mit $R_v$ der mittlere Kurvenbahnradius der Vorderräder des Zugfahrzeuges (11) und mit $R_A$ der mittlere Kurvenbahnradius der Räder des Aufliegers (12) bezeichnet sind, wobei $R_v$ und $R_A$ durch die Beziehung

$$R_{V,A} = \frac{b_{spurV,A} \cdot v_{AchseV,A}}{\left(v_{Rl} - v_{Rr}\right)_{V,A}}$$

gegeben sind, in der mit $b_{spurV,A}$ die Spurweiten an der Vorderachse des Zugfahrzeuges ($b_{spurV}$) bzw. an der Aufliegerachse ($b_{spurA}$), mit $v_{R1}$ und $v_{Rr}$ die Radumfangsgeschwindigkeiten am linken und am rechten Rad der jeweiligen Fahrzeugachse und mit $v_{AchseV,A}$ jeweils deren algebraische Mittelwerte bezeichnet sind.

**6.** Verfahren nach einem der Ansprüche 1 bis 5 für einen Sattelzug mit zweiachsigem Zugfahrzeug und einachsigem Auflieger, **dadurch gekennzeichnet, daß** die Schräglaufsteifigkeiten $C_V$ und $C_H$ der Räder des Zugfahrzeugs und die Schräglaufsteifigkeit $C_A$ der Räder des Aufliegers (12) bei stationärer Kurvenfahrt des Zugfahrzeuges bzw. des Zuges durch Auswertung der folgenden Beziehungen ermittelt werden:

$$0 = -\left(C_V + C_H\right)\beta_Z + \left(\frac{C_H l_H - C_V l_V}{v} - m_Z v\right)\dot{\psi} - C_A \beta_A + \left(\frac{C_A L_{AH}}{v} - m_A v\right)\dot{\psi} + C_V \delta$$

$$0 = \left(C_H l_H - C_V l_V\right)\beta_Z - \frac{C_V l_V^2 + C_H l_H^2}{v}\dot{\psi} + C_A l_G \beta_A + \left(m_A v l_G - \frac{C_A l_{AH} l_G}{v}\right)\dot{\psi} + C_V l_V \delta .$$

$$0 = C_A\left(l_{AV} + l_{AH}\right)\beta_A + \left(m_A v l_{AV} - \frac{C_A l_{AH}\left(l_{AV} + l_{AH}\right)}{v}\right)\dot{\psi} ,$$

in denen mit $\dot{\psi}$ die für das Zugfahrzeug (11) und den Auflieger (12) identische Giergeschwindigkeit bezeichnet ist.

**7.** Einrichtung zur Fahrdynamik-Regelung an einem als Sattelzug oder Gliederzug, der aus einem Zugfahrzeug und einem Anhängerfahrzeug besteht, ausgebildeten Straßenfahrzeug unter Anwendung des Verfahrens nach einem der Ansprüche 1 bis 6, insbesondere bei einem. Nutzfahrzeug, dessen Radbremsen, gesteuert durch Ausgangssignale einer elektronischen Steuereinheit, zum einen im Sinne eines vom Fahrer durch Betätigung eines Sollwert-Gebers einsteuerbaren Fahrerwunsches nach Fahrzeugverzögerung, andererseits aber auch unabhängig von einer Aktivierung der Bremsanlage durch den Fahrer im Sinne der Aufrechterhaltung eines dynamisch stabilen Fahrverhaltens einzeln oder zu mehreren aktivierbar sind, derart, daß Abweichungen der bei einer Kurvenfahrt durch Vorgabe des Lenkwinkels $\delta$ eingesteuerten Giergeschwindigkeit $\dot{\Psi}$, zu deren fortlaufender Erfassung ein Giergeschwindigkeitssensor vorgesehen ist, von einem aus der Lenkwinkel-Vorgabe und der gemessenen Fahrzeuggeschwindigkeit sich ergebenden Sollwert im Sinne einer Annäherung an den Sollwert kompensatorisch beeinflußt werden, wobei zur Sollwertvorgabe ein Simulationsrechner vorgesehen ist, der auf der Basis eines das Straßenfahrzeug hinsichtlich seiner konstruktiv bedingten Kenngrößen, seines Beladungszustandes sowie seiner Betriebsdaten repräsentierenden Fahrzeugmodells aus gemessenen Werten mindestens des Lenkwinkels $\delta$ und der Fahrzeuglängsgeschwindigkeit $v_x$ Referenzgrößen für mindestens die Giergeschwindigkeit $\dot{\Psi}$ generiert, **dadurch gekennzeichnet, daß** der Simulationsrechner auf eine taktgesteuerte Auswertung der Bewegungsgleichungen eines Sattelzuges als Fahrzeug-Referenzmodell ausgelegt ist, wobei durch die elektronische Steuereinheit (25) Routinen zu einer adaptiven Bestimmung mindestens der folgenden Größen aus im Fahrbetrieb des aus dem Zugfahrzeug und dem Anhängerfahrzeug bestehenden Zuges meßbaren Parametern ($n_{Vl}$, $n_{Vr}$, $n_{Hl}$, $n_{Hr}$, $n_{Al}$, $n_{Ar}$, $M_{mot}$, $p_{VA}$, $p_{HA}$) implementiert sind:

a) Gesamtmasse $m_{ges}$ des Zuges
b) Masse $m_Z$ des Zugfahrzeuges
c) Masse $m_A$ des Anhängerfahrzeuges
d) Radstand $l_z$ des Zugfahrzeuges
e) Achslast-Verteilung $P_{VA}/P_{HA}$ des Zugfahrzeuges
f) Achslast-Verteilung des Zuges bzw. Hinterachslast $P_A$ des Anhängerfahrzeuges,
sowie Routinen zur Abschätzung
g) des Trägheitsmoments $J_Z$ des Zugfahrzeuges um seine Hochachse und
h) des Trägheitsmoments $J_A$ des Anhängerfahrzeuges um seine Hochachse.

**8.** Einrichtung nach Anspruch 7, **dadurch gekennzeichnet, daß** die Bestimmung der Masse $m_z$ des Zugfahrzeuges (11) und der Gesamtmasse $m_{ges}$ eines Sattel- oder Gliederzuges durch eine Auswertung der Beziehung

$$m_{ges} = \frac{M_{mot} \cdot \frac{n_{mot}}{v} \cdot \eta}{(Z_{HSP} - Z_{ist})}$$

erfolgt, in der mit $M_{mot}$ das in [Nm] gemessene Motor-Ausgangsmoment, mit $n_{mot}$ die in [$s^{-1}$] gemessene Motordrehzahl, mit v die in [$ms^{-1}$] gemessene Fahrzeuggeschwindigkeit, mit $\eta$ der durch eine dimensionslose Zahl < 1 charakterisierte Gesamtwirkungsgrad des Vortriebs-Übertragungsstranges des Zugfahrzeuges, mit $Z_{HSP}$ die in einer antriebslosen Hoch-Schalt-Pause, in der der Fahrer eine einer niedrigeren Motordrehzahl entsprechende Getriebestufe einlegt, sich ergebende Fahrzeugverzögerung und mit $Z_{ist}$ die Beschleunigung (als negative Verzögerung) bezeichnet ist, die sich in dem nach dem Schaltstufenwechsel sich einstellenden Beschleunigungsbetrieb des Zugfahrzeugs ergibt, wobei die Masse $m_A$ des Anhängerfahrzeuges durch Auswertung der Beziehung $m_A = m_{ges} - m_z$ ermittelbar ist.

**9.** Einrichtung nach Anspruch 7 oder Anspruch 8, **dadurch gekennzeichnet, daß** die elektronische Steuereinheit (25) aus einer Auswertung der Ausgangssignale den Rädern des Zugfahrzeuges einzeln zugeordneter Raddrehzahlsensoren den Radstand $l_z$ des Zugfahrzeuges gemäß der Beziehung

$$l_Z = \sqrt{R_y^2 - R_H^2}$$

ermittelt, in der $R_V$ und $R_H$ die bei stationärer Kurvenfahrt (Lenkwinkel $\delta$ konstant) und mäßiger Fahrzeuggeschwindigkeit (v < 20 km/h) gemäß der Beziehung

$$R_{V,H} = \frac{b_{V,H} \cdot (v_{V,Hl} + v_{V,Hr})}{(v_{V,Hl} - v_{V,Hr}) \cdot 2}$$

ermittelten, mittleren Bahnradien der Vorder- und der Hinterräder des Zugfahrzeuges, mit $b_{V,H}$ die Spurweite $b_V$ und $b_H$ an der Vorder- und der Hinterachse des Zugfahrzeuges (11) und mit $v_{V,H1}$ sowie $v_{V,Hr}$ die Radgeschwindigkeiten des linken und des rechten Vorder- bzw. Hinterrades des Zugfahrzeuges bezeichnet sind.

**10.** Einrichtung nach einem der Ansprüche 7 bis 9, **dadurch gekennzeichnet, daß** die elektronische Steuereinheit den Radstand $l_z$ des Zugfahrzeuges durch Auswertung der Beziehung

$$l_Z = \frac{\delta}{\Psi_Z} \cdot v_z$$

ermittelt.

**11.** Einrichtung nach einem der Ansprüche 7 bis 10 für einen Sattelzug, bei dem sämtlichen Fahrzeugrädern je ein Raddrehzahlsensor ($30_1$ bis $30_6$) zugeordnet ist, **dadurch gekennzeichnet, daß** ein elektronischer oder elektromechanischer Knickwinkelsensor (67) vorgesehen ist, mittels dessen der Winkel φ erfaßbar ist, unter dem sich bei Kurvenfahrt die vertikalen Längsmittelebenen des Zugfahrzeuges (11) und des Aufliegers (12) des Sattelzuges in dessen Sattelgelenkachse schneiden, und daß die elektronische Steuereinheit (25) die zwischen dem Sattelgelenk und der Aufliegerachse (49) gemessene Länge $l_A$ des Aufliegers aus einer Auswertung der Beziehung

$$l_A = \frac{R_H - R_A \sqrt{1 + \tan^2 \varphi}}{\sin \varphi} + R_A \tan \varphi$$

ermittelt, in der $R_H$ und $R_A$ die mittleren Bahnradien $R_{H,A}$ der Hinterräder des Zugfahrzeuges und der Räder der Aufliegerachse bezeichnet sind, die ihrerseits gemäß der Beziehung

$$R_{H,A} = \frac{b_{H,A}\left(v_{H,Al} + v_{H,Ar}\right)}{\left(v_{H,Al} - v_{H,Ar}\right) \cdot 2}$$

ermittelbar sind, in der mit $b_{H,A}$ die Spurweiten $b_H$ und $b_A$ der Hinterachse des Zugfahrzeuges bzw. des Aufliegers bezeichnet sind.

**12.** Einrichtung nach Anspruch 11, **dadurch gekennzeichnet, daß** die elektronische Steuereinheit (25) den Abstand $l_{SH}$ des Sattelpunktes von der Hinterachse des Zugfahrzeuges (11) durch eine Auswertung der Beziehung

$$l_{SH} = \frac{R_H - R_A \sqrt{\tan^2 \varphi + 1}}{\tan \varphi}$$

ermittelt.

**13.** Einrichtung nach einem der Ansprüche 7 bis 12, **dadurch gekennzeichnet, daß** das Zugfahrzeug (11) mit mindestens einem Achslastsensor ausgerüstet ist, der ein von der elektronischen Steuereinheit verarbeitbares elektrisches Ausgangssignal erzeugt, das ein Maß für die über die lastüberwachte Fahrzeugachse auf der Fahrbahn abgestützte Last $P_{VA}$ oder $P_{HA}$ ist.

**14.** Einrichtung nach Anspruch 13, **dadurch gekennzeichnet, daß** die elektronische Steuereinheit (25) eine Bestimmung des Abstands $l_v$ des Schwerpunktes des Zugfahrzeuges von dessen Vorderachse gemäß der Beziehung

$$l_v = l_z \cdot \frac{P_{HA}}{m_Z}$$

vermittelt, wenn der Achslastsensor der Hinterachse des Zugfahrzeugs zugeordnet ist und eine Bestimmung dieses Abstands $l_v$ gemäß der Beziehung

$$l_v = l_z \cdot \left(1 - \frac{P_{VA}}{m_Z}\right)$$

vermittelt, wenn der Achslastsensor der Vorderachse des Zugfahrzeugs zugeordnet ist.

**15.** Einrichtung nach einem der Ansprüche 7 bis 14, an einem Sattelzug, dessen Auflieger mit einem Achslastsensor ausgerüstet ist, der ein für die über die Aufliegerachse auf der Fahrbahn abgestützte Last $p_{AHA}$ charakteristisches, von der elektronischen Steuereinheit verarbeitbares elektrisches Ausgangssignal erzeugt, **dadurch gekennzeichnet, daß** die elektronische Steuereinheit den Abstand $l_{AV}$ des Schwerpunktes des Aufliegers (12) vom Sattelgelenk gemäß der Beziehung

$$l_{AV} = l_A \cdot \frac{P_{HA}}{m_A}$$

bestimmt, in der mit $l_A$ der Abstand der Aufliegerachse vom Sattelpunkt und mit $m_A$ die Aufliegermasse bezeichnet sind.

**16.** Einrichtung nach einem der Ansprüche 7 bis 15, an einem Sattelzug, dessen Zugfahrzeug mit einem Achslastsensor ausgerüstet ist, der ein für die über die Hinterachse des Zugfahrzeuges auf der Fahrbahn abgestützte Masse $m_{ZHA}$ charakteristisches, von der elektronischen Steuereinheit (25) verarbeitbares elektrisches Ausgangssignal erzeugt, **dadurch gekennzeichnet, daß** die elektronische Steuereinheit (25) den Abstand $l_{AV}$ des Aufliegerschwerpunktes vom Sattelgelenk gemäß der Beziehung

$$l_{AV} = l_A \cdot \left(1 - \frac{(m_{ZHA} - m_{ZHAleer})}{m_A}\right) \cdot \frac{l_Z}{l_{SV}}$$

bestimmt, in der mit $m_{ZHAleer}$ die über die Hinterachse des Zugfahrzeuges ohne Auflieger abgestützte Masse, mit $m_A$ die Aufliegermasse und mit $l_{SV}$ der Abstand des Sattelgelenks von der Vorderachse des Zugfahrzeuges bezeichnet sind.

**17.** Einrichtung nach einem der Ansprüche 7 bis 16, an einem Sattelzug, der mit einem Sensor ausgerüstet ist, der ein für den im Sattelgelenk am Zugfahrzeug abgestützten Massenanteil $m_{AS}$ des Aufliegers (12) charakteristisches, von der elektronischen Steuereinheit (25) verarbeitbares elektrisches Ausgangssignal erzeugt, **dadurch gekennzeichnet, daß** die elektronische Steuereinheit (25) den Abstand $l_{AV}$ des Aufliegerschwerpunktes vom Sattelgelenk gemäß der Beziehung

$$l_{AV} = l_A \cdot \left(1 - \frac{m_{AS}}{m_A}\right)$$

bestimmt.

**18.** Einrichtung nach einem der Ansprüche 7 bis 17, **dadurch gekennzeichnet, daß** die elektronische Steuereinheit eine Abschätzung des Gier-Trägheitsmoments $J_z$ des Zugfahrzeuges (11) und des Gier-Trägheitsmoments $J_A$ des Anhängerfahrzeuges (12) gemäß der/den Beziehung(en)

$$J_Z = \left(m_V \cdot l_V^2 + m_H \cdot l_H^2\right) \cdot 1{,}1$$

und

$$J_A = \left(m_{AV} \cdot l_{AV}^2 \div m_{AH} \cdot l_{AH}^2\right) \cdot 1{,}1$$

vermittelt, in der/denen mit $m_V$ der über die Vorderachse des Zugfahrzeuges abgestützte Massenanteil, mit $m_H$ der über dessen Hinterachse auf der Fahrbahn abgestützte Massenanteil des Zugfahrzeuges und mit $l_H$ der Abstand ($l_z$ - $l_V$) des Zugfahrzeugschwerpunktes von der Hinterachse des Zugfahrzeuges sowie mit $m_{AV}$ der im Sattelgelenk abgestützte Massenanteil des Aufliegers, mit $m_{AH}$ der über die Auflieger-Hinterräder auf der Fahrbahn abgestützte Massenanteil des Aufliegers und mit $l_{AH} = l_A - l_{AV}$ der Abstand des Aufliegerschwerpunktes von der Hinterachse (49) des Aufliegers (12) bezeichnet sind.

**19.** Einrichtung nach Anspruch 13 oder Anspruch 13 und einem der Ansprüche 14 bis 18 an einem Lastkraftwagen oder -Zug, der mit einer pneumatischen Federung ausgerüstet ist, **dadurch gekennzeichnet, daß** die Achslast-Sensierung durch eine Druck-Sensierung des Federungsdruckes an der überwachten Fahrzeugachse implementiert ist.

**20.** Einrichtung nach einem der Ansprüche 7 bis 19, **dadurch gekennzeichnet, daß** die elektronische Steuereinheit (25) die Hinterachslast $P_{HA}$ des Zugfahrzeuges (11) in einem Bremsmodus, in dem bei mäßiger Fahrzeugverzögerung nur die Hinterradbremsen betätigt werden (Z < 0,2 g), aus einer Auswertung der Beziehung

$$P_{HA} = \frac{m_{Z,ges} \cdot k_{HA} \cdot Z}{\lambda_{HA}}$$

bestimmt, in der mit Z die gemessene Fahrzeugverzögerung, mit $\lambda_{HA}$ der gemäß der Beziehung

$$\lambda_{HA} = \frac{n_{VA} - n_{HA}}{m_{VA}} \, [\%]$$

ermittelte Bremsschlupf und mit $k_{HA}$ eine Reifenkonstante bezeichnet ist, die dem Verhältnis $\lambda/\mu$ des genutzten Kraftschlußbeiwerts $\mu$ zu dem durch die Bremsenbetätigung erzeugten Bremsschlupf $\lambda$ entspricht, wobei, gleichen Raddurchmesser der Vorder- und der Hinterräder vorausgesetzt, mit $n_{VA}$ die Raddrehzahlen der nicht gebremsten (Vorder-)Räder und mit $n_{HA}$ die Raddrehzahlen der gebremsten (Hinter-) Räder des Zugfahrzeuges (11) bezeichnet sind.

**21.** Einrichtung nach Anspruch 20, **dadurch gekennzeichnet, daß** die elektronische Steuereinheit (25) die Vorderachslast $P_{VA}$ des Zugfahrzeuges (11) durch eine Auswertung der Beziehung

$$P_{VA} = \frac{k_{VA} \cdot f_{MZ} \cdot a \cdot P_{HA}}{k_{HA}}$$

ermittelt, in der mit $k_{VA}$ die Reifenkonstante (n) der Vorderräder des Zugfahrzeuges (11), mit $f_{MZ}$ das Auslegungsverhältnis der Vorderrad- und der Hinterradbremsen bezeichnet ist, das dem Verhältnis $B_{VA}/B_{HA}$ der Vorderachs-Bremskraft $B_{VA}$ und der Hinterachsbremskraft $B_{HA}$ entspricht, wenn sämtliche Radbremsen mit demselben Steuerdruck angesteuert werden, und mit a das Betätigungsdruckverhältnis $p_{VA}/p_{HA}$ bezeichnet ist, das sich ergibt, wenn bei einer Bremsung alle gebremsten Fahrzeugräder durch Bremskraftverteilungsregelung auf gleiche Momentangeschwindigkeit geregelt werden.

**22.** Einrichtung nach Anspruch 20 oder Anspruch 21, **dadurch gekennzeichnet, daß** eine adaptive Ermittelung der Reifenkonstanten $k_{VAl}$ und $k_{VAr}$ des linken und des rechten Vorderrades des Zugfahrzeuges und der Reifenkonstanten $k_{HAl}$ und $k_{HAr}$ des linken und des rechten Hinterrades durch Auswertung der Beziehungen

$$k_{VAl,r} = \frac{\lambda_{VAl,r} - P_{VA}}{2 \cdot Z \cdot m_Z}$$

und

$$k_{HAl,r} = \frac{\lambda_{HAl,r} \cdot p_{HA}}{2 \cdot Z \cdot m_Z}$$

für Bremsungen mit mäßiger Fahrzeugverzögerung ($Z < 0{,}2$ g) erfolgt.

**23.** Einrichtung nach Anspruch 22, **dadurch gekennzeichnet, daß** die Bestimmung der Reifenkonstanten $k_{VAl,r}$ und $k_{HAl,r}$ in alternierenden Zyklen erfolgt, in denen die Reifenkonstanten $k_{VAl}$ und $k_{HAr}$ bzw. $k_{VAr}$ und $k_{HAl}$ je eines vorderrades und des diesem diagonal gegenüberliegenden Hinterrades des Zugfahrzeuges ermittelt werden.

**24.** Einrichtung nach einem der Ansprüche 7 bis 19 bei einem Fahrzeug, das mit einer Regelungseinrichtung versehen ist, die das Verhältnis

$$\Phi = \frac{B_{VA}}{B_{HA}}$$

der Vorderachs-Bremskraft $B_{VA}$ zur Hinterachs-Bremskraft $B_{HA}$ gemäß einer Beziehung

$$\Phi = a + b \cdot Z_{soll}$$

dahingehend regelt, daß bei einer Bremsung sämtliche Fahrzeugräder im wesentlichen dieselbe Radumfangsgeschwindigkeit haben, **dadurch gekennzeichnet, daß** die elektronische Steuereinheit (25) zu einer adaptiven Ermittelung einer achsbezogenen Reifenkonstante $k_{HA}$ für die angetriebenen Fahrzeugräder, z.B. die Hinterräder des Fahrzeuges eine Auswertung der Beziehung

$$k_{HA} = \frac{\lambda_{HAntrieb} \cdot P_{HA}}{Z_{vorwärts} \cdot (P_{VA} + P_{HA})}$$

vermittelt, in der mit $\lambda_{HA}$ der Antriebsschlupf und mit $Z_{vorwärts}$ die Fahrzeugbeschleunigung bezeichnet sind, und zu einer adaptiven Ermittelung einer achsbezogenen Reifenkonstante $k_{VA}$ für die nicht angetriebenen Fahrzeugräder eine Auswertung der Beziehung

$$k_{VA} = \frac{m_k - k_{HA}}{f_{MZ} \cdot a}$$

vermittelt, in der mit $m_k$ eine Konstante bezeichnet ist, die ihrerseits durch die Beziehung

$$m_k = \frac{k_{HA} \cdot (P_{VA} + P_{HA})}{P_{HA}}$$

gegeben ist.

**25.** Einrichtung nach einem der Ansprüche 7 bis 24 für einen als Gliederzug ausgebildeten Lastzug, **dadurch gekennzeichnet, daß** sowohl das Zugfahrzeug als auch das Anhängerfahrzeug mit je einem Giergeschwindigkeitssensor ausgerüstet sind.

## Claims

1. Method for regulating the driving dynamics of a road vehicle configured as a semitrailer or articulated road train consisting of a tractor vehicle and a trailer vehicle, in accordance with which, according to a time sequence of fixed cycles having a specifiable duration $T_K$, for example of 5 to 10 ms, and by means of a simulation computer of an electronic control unit that establishes an automatic operating sequence for regulation on the basis of a model that represents the road vehicle in relation to characteristics determined by its design and loading condition and its operating data, reference magnitudes are generated from measured actual values of at least the steering angle $\delta$ and the vehicle's speed $v_x$ for at least the yaw velocity $\dot{\Psi}$ and the lateral drift angle $\beta$ of the road vehicle, and from a comparison of the reference magnitude $\dot{\Psi}_{SO}$ taken as the nominal value of the road vehicle's yaw velocity with actual values $\dot{\Psi}_I$ of the road vehicle's yaw velocity determined continuously by a yaw velocity sensor device, control signals are produced for the actuation of at least one wheel brake and/or for a reduction of the engine drive torque in such manner as to have a compensating influence on the deviation of the actual value concerned from its respective determinant nominal value, the said vehicle model for the tractor vehicle being implemented by a linear differential equation system of the form:

$$[P] \cdot (\dot{\bar{X}}) = [Q] \cdot (\bar{X}) + (\bar{C}) \cdot \delta(t)$$

in which [P] represents a 4 x 4 matrix with elements $p_{ij}$ ($p_{ij}$ = 0, $m_Z v$, 0, 0; 0, 0, 0, $J_Z$; 0, 0, 0, 0; 0, -1, 0, 0), in which $m_Z$ denotes the mass of the tractor vehicle, $J_Z$ its moment of yaw inertia and v its forward speed,
[Q] represents a 4 x 4 matrix with elements $q_{ij}$ ($q_{ij}$ = 0, $-C_V - C_H$, 0, $-m_Z v - (C_V l_V - C_H l_H)/v$; 0, $C_H l_H - C_V l_V$, 0, $(-l_V^2 C_V - l_H^2 C_H) / v$; 0, 0, 0, 0; 0, 0, 0, 1),
in which $C_V$ and $C_H$ denote the respective lateral drift rigidities of the front and rear wheels of the tractor vehicle, and $l_V$ and $l_H$ the respective distances of the vehicle's centre of gravity from the front and rear axles, $\bar{C}$ represents a 4-component column vector with components $c_i$ ($c_i$ = $C_V$, $C_V l_V$, 0, 0), $\bar{X}$ represents a 4-component column vector formed from the condition magnitudes $\beta_z$ and $\Psi_Z$ and having components $x_i$ ($x_i$ = 0, $\beta_Z$, 0, $\dot{\Psi}_Z$), and $\dot{\bar{X}}$ is its time differential $d\bar{X}$ / dt,
such that for the drive-dynamical determination of the condition magnitudes of lateral drift angle $\beta_A$ and yaw velocity $\dot{\Psi}_A$ of the semitrailer (12) of the articulated vehicle coupled to the tractor thereof, zero-elements $p_{11}$, $p_{21}$, $p_{31}$, $p_{33}$ $p_{41}$, $p_{43}$ and $p_{44}$ of the matrix [P] that represents the tractor vehicle alone are replaced by the elements $p_{11} = m_A v$, $p_{21} = - m_A v l_G$, $p_{31} = -m_A v l_{AV}$, $P_{33} = J_A$, $p_{41} = 1$, $p_{43} = l_{AV}/v$ and $p_{44} = l_G/v$, and zero-elements $q_{11}$, $q_{13}$, $q_{21}$, $q_{23}$, $q_{31}$, $q_{33}$ and $q_{43}$ of the matrix [Q] that represents the tractor vehicle alone are replaced by the matrix elements $q_{11} = -C_A$, $q_{13} = - m_A V + C_A l_{AH}/v$, $q_{21} = C_A l_G$, $q_{23} = m_A v l_G - C_A l_G l_{AH}/v$, $q_{31} = C_A l_{AV} + C_A l_{AH}$, $q_{33} = m_A v l_{AV} - (C_A l_{AV} l_{AH} + C_A l_{AH}^2) / v$ and $q_{43} = - 1$, and the condition vector $\bar{X}$ and its time derivative $\dot{\bar{X}}$ are increased by the components $x_1 = \beta_A$ and $x_3 = \dot{\Psi}_A$ or $\dot{x}_1 = \dot{\beta}_A$ and $\dot{x}_3 = \ddot{\Psi}_A$ respectively, wherein $m_A$ denotes the mass of the semitrailer, $l_G$ the distance of the semitrailer's steered axle from the centre of gravity of the tractor vehicle measured along the longitudinal direction of the vehicle, $l_{AV}$ the distance of the centre of gravity of the semitrailer (12) from the semitrailer's steered axle, $l_{AH}$ the distance of the semitrailer's centre of gravity from the semitrailer's axle, $C_A$ the lateral drift rigidity of the wheels on the semitrailer's axle, and $J_A$ the moment of yaw inertia of the semitrailer (12), such that the drive-dynamical condition magnitudes $\beta_Z$(k-1), $\beta_A$(k-1), $\dot{\Psi}_Z$(k-1) and $\dot{\Psi}_A$(k-1) determined at a time t(k-1) are updated to the time t(k) a cycle period $T_K$ later, by evaluation of the equation system:

$$\bar{X}(k) = \left\{ \frac{[P]}{T_k} - [Q] \right\}^{-1} \cdot \left\{ \frac{[P]}{T_k} \cdot \bar{X}(k-1) + \bar{C} \cdot \delta(k) \right\}.$$

with values of the matrix elements $p_{ij}$ and $q_{ij}$ updated to the time t(k).

2. Method according to Claim 1, **characterised in that** the lateral drift angle $\beta_Z$ at constant speed of the road vehicle is also checked by evaluating the relation:

$$\beta_z = \delta \cdot \frac{l_H}{l_z}$$

**3.** Method according to Claims 1 or 2, **characterised in that** the lateral drift angle $\beta_Z$ of the tractor vehicle is also obtained by evaluating the relation:

$$\beta_z = \int_{t_0(h=0)}^{t_c(h=\delta_c)} \left( \frac{a_q}{v} - \dot{\psi} \right) dt$$

for the integration time interval $t_i = t_c - t_0$ within which the driver steers the steering angle $\delta$ required for driving round a curve, wherein $a_q$ denotes the transverse acceleration acting upon the road vehicle.

**4.** Method according to any of Claims 1 to 3, for an articulated vehicle with a two-axle tractor and a one-axle semitrailer, **characterised in that** the lateral drift angle $\beta_A$ of the semitrailer (12) is obtained by evaluating the relation:

$$\beta_A = \varphi + \beta_Z - \frac{\dot{\Psi}(l_G + l_{AV})}{v}$$

wherein $\phi$ denotes the angle of inclination, which also increases as the size of the steering angle $\delta$ increases, enclosed between the longitudinal mid-planes of the tractor vehicle (11) and the semitrailer (12) that intersect one another along the semitrailer articulation axis.

**5.** Method according to Claim 4, **characterised in that** the inclination angle $\phi$ is determined by evaluating the relation:

$$\varphi = 180° - \arccos\left( \frac{l_A}{\sqrt{R_A^2 + l_A^2}} \right) - \arccos\left( \frac{R_A^2 - R_V^2 + l_V^2 - l_A^2}{2 \cdot l_V \sqrt{R_A^2 + l_A^2}} \right)$$

in which $R_V$ denotes the mean radius of the curved path of the front wheels of the tractor vehicle (11) and $R_A$ the mean curved path radius of the wheels of the semitrailer (12), $R_V$ and $R_A$ being given by the relation:

$$R_{V,A} = \frac{b_{spurV,A} \cdot v_{AchseV,A}}{(v_{Rl} - v_{Rr})_{V,A}}.$$

in which $b_{spurV,A}$ are the track widths at the front axle of the tractor ($b_{spurV}$) and at the axle of the semitrailer ($b_{spurA}$), $v_{Rl}$ and $v_{Rr}$ are the wheel circumferential speeds of the left and right wheel of the vehicle axle concerned, and $v_{AchseV,A}$ are their respective mean values.

**6.** Method according to any of Claims 1 to 5 for an articulated vehicle with a two-axle tractor and a one-axle semitrailer, **characterised in that** the side drift rigidities $C_V$ and $C_H$ of the tractor's wheels and the lateral drift rigidity $C_A$ of the wheels of the semitrailer (12) while the tractor or the road train is driving steadily round a curve, are determined by evaluating the following relations:

$$0 = -(C_v + C_H)\beta_Z + \left(\frac{C_H l_H - C_V l_v}{v} - m_z v\right)\dot{\psi} - C_A\beta_A + \left(\frac{C_A L_{AH}}{v} - m_A v\right)\dot{\psi} + C_V\delta$$

$$0 = (C_H l_H - C_V l_v)\beta_Z - \frac{C_V l_v^2 + C_H l_H^2}{v}\dot{\psi} + C_A l_G \beta_A + \left(m_A v l_G - \frac{C_A l_{AH} l_G}{v}\right)\dot{\psi} + C_v l_v \delta$$

$$0 = C_A(l_{AV} + l_{AH})\beta_A + \left(m_A v l_{AV} - \frac{C_A l_{AH}(l_{AV} + l_{AH})}{v}\right)\dot{\psi}$$

in which $\dot{\Psi}$ denotes the yaw velocity that is identical for the tractor (11) and the semitrailer (12).

**7.** Device for regulating the driving dynamics of a road vehicle configured as a semitrailer or articulated vehicle consisting of a tractor vehicle and a trailer vehicle using the method according to any of Claims 1 to 6, in particular in a goods vehicle whose wheel brakes can be actuated individually or several at a time in a controlled way by output signals from an electronic control unit, on the one hand in response to a driver's wish to slow down the vehicle which the driver can implement by actuating a nominal value emitter, but on the other hand also independently of any actuation of the brake equipment by the driver, in the sense of maintaining dynamically stable driving behaviour, in such manner that deviations of the yaw velocity $\dot{\Psi}$ produced by setting the steering angle $\delta$ when driving round a curve, for the continuous determination of which a yaw velocity sensor is provided, from a nominal value given by the steering angle setting and the measured speed of the vehicle, are influenced correctively so as to approach the said nominal value, such that to specify the nominal value a simulation computer is provided, which, on the basis of a model representing the road vehicle in relation to the characteristics determined by its design, its loading condition and its operating data, generates reference magnitudes from measured values of at least the steering angle 8 and the forward speed $v_x$ of the vehicle for at least the yaw velocity $\dot{\Psi}$, **characterised in that** the simulation computer is designed to carry out a fixed-cycle evaluation of the equations that describe the movement of the articulated vehicle as the vehicle reference model, so that the electronic control unit (25) implements routines for an adaptive determination of at least the following magnitudes from parameters ($n_{Vl}$, $n_{Vr}$, $n_{Hl}$, $n_{Hr}$, $n_{Al}$, $n_{Ar}$, $M_{mot}$, $P_{VA}$, $P_{HA}$) that can be measured during the driving operation of the articulated vehicle consisting of the tractor and the trailer:

a) total mass $m_{ges}$ of the articulated vehicle
b) mass $m_Z$ of the tractor vehicle
c) mass $m_A$ of the trailer vehicle
d) wheelbase $l_Z$ of the tractor
e) axial load distribution $P_{VA}/P_{HA}$ of the tractor
f) axial load distribution of the road train or rear axle load $P_A$ of the trailer vehicle
and routines to estimate
g) the moment of inertia $J_Z$ of the tractor about its vertical axis, and
h) the moment of inertia $J_A$ of the trailer about its vertical axis.

**8.** Device according to Claim 7, **characterised in that** the mass $m_Z$ of the tractor (11) and the total mass $m_{ges}$ of the

semitrailer or articulated vehicle are determined by evaluating the relation:

$$m_{ges} = \frac{M_{mot} \cdot \frac{n_{mot}}{v} \cdot \eta}{(Z_{HSP} - Z_{ist})}$$

in which $M_{mot}$ denotes the engine output torque measured in [Nm], $n_{mot}$ the engine speed measured in [$s^{-1}$], v the speed of the vehicle measured in [$ms^{-1}$], $\eta$ the total efficiency of the propulsion transmission line of the tractor **characterised by** a dimensionless number < 1, $Z_{HSP}$ the vehicle deceleration occurring during an upshift pause in which the driver is engaging a gear that corresponds to a lower engine speed, and $Z_{ist}$ the acceleration (as a negative deceleration) of the tractor that occurs during accelerating operation after the gearshift, the mass $m_A$ of the trailer vehicle being determined by evaluation of the relation $m_A = m_{ges} - m_Z$.

**9.** Device according to Claims 7 or 8, **characterised in that** from an evaluation of the output signals from wheel speed sensors associated with individual wheels of the tractor, the electronic control unit (25) determines the wheelbase $l_Z$ of the tractor in accordance with the relation:

$$l_Z = \sqrt{R_y^2 - R_H^2}$$

in which $R_V$ and $R_H$ are the mean path radii of the tractor's front and rear wheels while driving steadily (with constant steering angle $\delta$) round a curve at moderate speed (v < 20 km/h), determined in accordance with the rotation:

$$R_{V,H} = \frac{b_{V,H} \cdot (v_{V,Hl} + v_{V,Hr})}{(v_{V,Hl} - v_{V,Hr}) \cdot 2}$$

in which $b_{V,H}$ denotes the track width $b_V$ and $b_H$ at the front and rear axles of the tractor (11), and $v_{V,Hl}$ and $v_{V,Hr}$ the respective wheel speeds of the left and right front and rear wheels of the tractor.

**10.** Device according to any of Claims 7 to 9, **characterised in that** the electric control unit determines the wheelbase $l_Z$ of the tractor vehicle by evaluating the relation:

$$l_Z = \frac{\delta}{\Psi_Z} \cdot v_z$$

**11.** Device according to any of Claims 7 to 10 for an articulated vehicle, in which a wheel speed sensor ($30_1$ to $30_6$) is associated with each of the vehicle's wheels, **characterised in that** an electronic or electro-mechanical inclination angle sensor (67) is provided, by means of which the angle $\phi$ can be detected at which, when the vehicle is driving round a curve, the vertical longitudinal mid-planes of the tractor (11) and the semitrailer (12) of the articulated vehicle intersect along its semitrailer articulation link axis, and the electronic control unit (25) determines the length $l_A$ of the semitrailer between the articulation link and the semitrailer's axle (49) by evaluating the relation:

$$l_A = \frac{R_H - R_A \sqrt{1 + \tan^2\varphi}}{\sin\varphi} + R_A \tan\varphi$$

in which $R_H$ and $R_A$ denote the mean path radii $R_{H,A}$ of the rear wheels of the tractor and the wheels of the semitrailer's axle, which for their part can be determined from the relation:

$$R_{H,A} = \frac{b_{H,A}\left(v_{H,Al} + v_{H,Ar}\right)}{\left(v_{H,Al} - v_{H,Ar}\right) \cdot 2}$$

in which $b_{H,A}$ denotes the track widths $b_H$ and $b_A$ of the rear axle of the tractor and the axle of the trailer respectively.

**12.** Device according to Claim 11, **characterised in that** the electronic control unit (25) determines the distance $l_{SH}$ of the articulation link from the rear axle of the tractor (11) by evaluating the relation:

$$l_{SH} = \frac{R_H - R_A \sqrt{\tan^2\varphi + 1}}{\tan\varphi}$$

**13.** Device according to any of Claims 7 to 12, **characterised in that** the tractor vehicle (11) is equipped with at least one axle load sensor, which produces an electric output signal that can be processed by the electronic control unit, said signal being a measure of the load $P_{VA}$ or $P_{HA}$ supported on the road by the vehicle axle whose loading is being monitored.

**14.** Device according to Claim 13, **characterised in that** the electronic control unit (25) determines the distance $l_V$ of the tractor vehicle's centre of gravity from its front axle in accordance with the relation:

$$l_v = l_z \cdot \frac{P_{HA}}{m_Z}$$

when the axle load sensor is associated with the rear axle of the tractor, and determines this distance $l_V$ from the relation:

$$l_v = l_z \cdot \left(1 - \frac{P_{VA}}{m_Z}\right)$$

when the axle load sensor is associated with the front axle of the tractor.

**15.** Device according to any of Claims 7 to 14, on an articulated vehicle whose semitrailer is equipped with an axle load sensor which produces an electric output signal that can be processed by the electronic control unit and that characterises the load $P_{AHA}$ supported on the road by the semitrailer axle, **characterised in that** the electronic control unit determines the distance $l_{AV}$ of the centre of gravity of the semitrailer (12) from the articulation link from the relation:

$$l_{AV} = l_A \cdot \frac{P_{HA}}{m_A}$$

in which $l_A$ denotes the distance of the semitrailer's axle from the articulation link and $m_A$ the mass of the semitrailer.

**16.** Device according to any of Claims 7 to 15, on an articulated vehicle whose tractor is equipped with an axle load sensor which produces an electric signal that can be processed by the electronic control unit (25) and which characterises the mass $m_{ZHA}$ supported on the road by the rear axle of the tractor, **characterised in that** the electronic control unit (25) determines the distance $l_{AV}$ of the semitrailer's centre of gravity from the articulation link in accordance with the relation:

$$l_{AV} = l_A \cdot \left(1 - \frac{(m_{ZHA} - m_{ZHAleer})}{m_A}\right) \cdot \frac{l_Z}{l_{SV}}$$

in which $m_{ZHAleer}$ denotes the mass supported by the rear axle of the tractor vehicle without any semitrailer, $m_A$ the mass of the semitrailer, and $l_{SV}$ the distance of the articulation link from the front axle of the tractor.

**17.** Device according to any of Claims 7 to 16, on an articulated vehicle equipped with a sensor which produces an electric output signal that can be processed by the electronic control unit (25) and that characterises the mass fraction $m_{AS}$ of the semitrailer (12) supported at the articulation link on the tractor vehicle, **characterised in that** the electronic control unit (25) determines the distance $l_{AV}$ of the semitrailer's centre of gravity from the articulation link in accordance with the relation:

$$l_{AV} = l_A \cdot \left(1 - \frac{m_{AS}}{m_A}\right)$$

**18.** Device according to any of Claims 7 to 17, **characterised in that** the electronic control unit estimates the moment of yaw inertia $J_Z$ of the tractor (11) and the moment of yaw inertia $J_A$ of the trailer (12) in accordance with the relation(s):

$$J_Z = \left(m_V \cdot l_V^2 + m_H \cdot l_H^2\right) \cdot 1{,}1$$

and

$$J_A = \left(m_{AV} \cdot l_{Av}^2 + m_{AH} \cdot l_{AH}^2\right) \cdot 1{,}1$$

in which $m_V$ denotes the mass fraction supported by the front axle of the tractor, $m_H$ the mass fraction of the tractor supported on the road by its rear axle, $l_H$ the distance ($l_Z$ - $l_V$) of the tractor's centre of gravity from its rear axle, $m_{AV}$ the mass fraction of the semitrailer supported at the articulation link, $m_{AH}$ the mass fraction of the semitrailer supported on the road by the rear wheels of the semitrailer, and $l_{AH} = l_A - l_{AV}$ is the distance of the semitrailer's centre of gravity from the rear axle (49) of the semitrailer (12).

**19.** Device according to Claim 13, or Claim 13 and any of Claims 14 to 18, on a goods vehicle or road train equipped with pneumatic suspension, **characterised in that** the axial load sensing system functions by sensing the suspension pressure on the vehicle axle being monitored.

**20.** Device according to any of Claims 7 to 19, **characterised in that** the electronic control unit (25) determines the rear axle load $P_{HA}$ of the tractor (11) in a braking mode in which, during a moderate vehicle deceleration, only the rear wheel brakes are actuated ($Z < 0.2$ g), by evaluating the relation:

$$P_{HA} = \frac{m_{Z,ges} \cdot k_{HA} \cdot Z}{\lambda_{HA}}$$

in which Z denotes the measured vehicle deceleration, $\lambda_{HA}$ the brake slip determined from the relation:

$$\lambda_{HA} = \frac{n_{VA} - n_{HA}}{n_{VA}} [\%]$$

and $k_{HA}$ denotes a tyre constant that corresponds to the ratio $\lambda/\mu$ of the friction coefficient $\mu$ to the brake slip $\lambda$ produced when the brakes are actuated, assuming that the front and rear wheels have the same wheel diameter, $n_{VA}$ denotes the wheel speed of the unbraked (front) wheels and $n_{HA}$ the speed of the braked (rear) wheels of the tractor vehicle (11).

**21.** Device according to Claim 20, **characterised in that** the electronic control unit (25) determines the front axle load $P_{VA}$ of the tractor (11) by evaluating the relation:

$$P_{VA} = \frac{k_{VA} \cdot f_{MZ} \cdot a \cdot P_{HA}}{k_{HA}}$$

in which $k_{VA}$ denotes the tyre constant(s) of the front wheels of the tractor (11), $f_{MZ}$ the differential ratio of the front wheel and rear wheel brakes that corresponds to the ratio $B_{VA}/B_{HA}$ of the front axle brake force $B_{VA}$ to the rear axle brake force $B_{HA}$ when all the wheel brakes are acted upon by the same control pressure, and a denotes the actuation pressure ratio $P_{VA}/P_{HA}$ obtained when, during braking, all the braked vehicle wheels are adjusted to the same momentary speed by regulating the brake force distribution.

**22.** Device according to Claims 20 or 21, **characterised in that** for braking with moderate vehicle deceleration ($Z < 0.2$ g), the tyre constants $k_{VAl}$ and $k_{VAr}$ of the left and right front wheels of the tractor vehicle and the tyre constants $k_{HM}$ and $k_{HAr}$ of the left and right rear wheels are determined adaptively by evaluation the relations:

$$k_{VAl,r} = \frac{\lambda_{VAl,r} - P_{VA}}{2 \cdot Z - m_Z}$$

and

$$k_{HAl,r} = \frac{\lambda_{HAl.r} \cdot P_{HA}}{2 \cdot Z \cdot m_Z}$$

**23.** Device according to Claim 22, **characterised in that** the tyre constants $k_{VAl,r}$ and $k_{HAl,r}$ are determined in alternating cycles, in which the tyre constants $k_{VAl}$ and $k_{HAr}$ or $k_{VAr}$ and $k_{HAl}$ respectively, in each case of a front wheel and the diagonally opposite rear wheel of the tractor vehicle, are determined.

**24.** Device according to any of Claims 7 to 19 in a vehicle, which is equipped with a regulating device which regulates the ratio:

$$\Phi = \frac{B_{VA}}{B_{HA}}$$

of the front axle brake force $B_{VA}$ to the rear axle brake force $B_{HA}$ in accordance with a relation:

$$\Phi = a + b.Z_{soll}$$

to the effect that during braking, all the vehicle's wheels have substantially the same wheel circumferential speed, **characterised in that** to carry out an adaptive determination of an axle-related tyre constant $k_{HA}$ for the driven vehicle wheels, for example the rear wheels of the vehicle, the electronic control unit (25) evaluates the relation:

$$k_{HA} = \frac{\lambda_{HAntrieb} \cdot P_{HA}}{Z_{vorwärts} \cdot \left(P_{VA} + P_{HA}\right)}$$

in which $\lambda_{HA}$ denotes the drive slip and $Z_{vorwärts}$ the vehicle's acceleration, and for an adaptive determination of an axle-related tyre constant $k_{VA}$ for the non-driven vehicle wheels, it evaluates the relation:

$$k_{VA} = \frac{m_k - k_{HA}}{f_{MZ} \cdot a}$$

in which $m_k$ denotes a constant which, for its part, is given by the relation:

$$m_k = \frac{k_{HA} \cdot (P_{VA} + P_{HA})}{P_{HA}}$$

**25.** Device according to any of Claims 7 to 24 for a tractor-trailer unit configured as an articulated road train, **characterised in that** the tractor and the trailer vehicles are each equipped with a yaw velocity sensor.

## Revendications

**1.** Procédé pour la régulation de la dynamique de conduite sur un véhicule routier formé en tant que semi-remorque ou train articulé composé d'un véhicule tracteur et d'un véhicule remorqué, où sont cycliquement générées, en cycles consécutifs de durée $T_X$ prédéfinissable, par exemple de 5 à 10 ms, au moyen d'un calculateur de simulation d'une unité de commande électronique commutant une exécution automatique de la régulation sur la base d'un modèle représentatif du véhicule routier quant à ses caractéristiques constructives, son état de charge, et ses données de service, formé à partir des valeurs actuelles mesurées de l'angle de braquage $\delta$ et de la vitesse de véhicule $v_X$ au moins, des grandeurs de référence pour la vitesse de lacet $\dot{\psi}$ et l'angle de flottement $\beta$ du véhicule routier au moins, et où sont générés, à partir d'une comparaison de la grandeur de référence $\dot{\psi}_{so}$ en tant que valeur de consigne de la vitesse de lacet du véhicule routier avec les valeurs effectives $\dot{\psi}_I$ de la vitesse de lacet du véhicule continûment saisies par un dispositif à senseur de vitesse de lacet, des signaux de commande pour l'activation d'un frein de roue au moins du véhicule routier, influençant de manière compensatoire les variations de la valeur effective par rapport à la valeur de consigne fondamentale correspondante, et/ou pour la réduction du couple d'entraînement du moteur, le modèle de véhicule pour le véhicule routier étant implémenté par un système linéaire d'équation différentielle de la forme

$$[P] \cdot (\dot{\overline{X}}) = [Q] \cdot (\overline{X}) + (\overline{C}) \cdot \delta(t)$$

où [P] représente une matrice 4x4 avec les éléments $p_{ij}$ ($p_{ij}$ = 0, $m_2V$, 0, 0 ; 0, 0, C, $J_z$ ; 0, 0, 0, 0 ; 0, -1, 0, 0), où la masse du véhicule routier est désignée par $m_z$, par $J_z$ son moment d'inertie-de lacet et par v la vitesse longitudinale du véhicule,

[Q] représente une matrice 4x4 avec les éléments $q_{ij}$

($q_{ij}$ = 0, $-C_v$, $-C_H$, 0, $-m_zv - (C_vl_v - C_Hl_H)/v$ ; C,

$C_Hl_H - C_vl_v$, 0, $(-l_v^2C_v - l_H^2C_H)/v$; 0, 0, 0, 0 ; 0, 0, 0, 1), où $C_v$ et $C_H$ désignent respectivement les rigidités de dérive des roues avant et des roues arrières du véhicule routier et $l_v$ et $l_H$ la distance du centre de gravité du véhicule respectivement par rapport à l'essieu avant et à l'essieu arrière, $\overline{C}$ un vecteur colonne à 4 composants avec les composants $c_i$ ($c_i = C_v, C_vl_v, 0, 0$), $\overline{X}$ un vecteur colonne à 4 composants formé à partir des grandeurs d'état $\beta_z$ et $\dot{\psi}_z$, avec les composants $x_i$ ($x_i = 0, \beta_z, 0, \dot{\psi}_z$) et $\dot{\overline{X}}$ sa dérivée temporelle $d\overline{X}/dt$,

où pour la saisie des grandeurs d'état de la dynamique de conduite que sont l'angle de flottement $\beta_A$ et la vitesse de lacet $\dot{\psi}_I$, de la semi-remorque (12) couplée au véhicule tracteur du train articulé, les éléments nuls $P_{11}$, $P_{21}$, $P_{31}$, $P_{33}$, $P_{42}$, $P_{43}$ et $P_{44}$ de la matrice [P] représentant le seul véhicule tracteur sont remplacés par les éléments

$P_{11} = m_A\,v$, $P_{21} = m_A\,vl_G$, $P_{31} = -m_A\,vl_{AV}$, $P_{33} = J_A$, $P_{41} = 1$, $P_{43} = l_{AV}/v$ et $P_{44} = l_G/v$, où les éléments nuls

$q_{11}$, $q_{13}$, $q_{21}$, $q_{23}$, $q_{31}$, $q_{33}$ et $q_{43}$ de la matrice [Q] représentant le seul véhicule tracteur sont remplacés par les éléments matriciels $q_{11} = -C_A$, $q_{13} = -m_A v + C_A l_{AH}/v$, $q_{21} = C_A l_G$, $q_{23} = m_A v l_G - C_A l_G l_{AH}/v$, $q_{31} = C_A l_{AV} + C_A l_{AH}$, $q_{33} = m_A v l_{AV} - (C_A l_{AV} l_{AH} + C_A l^2_{AH})/v$ et $q_{43} = -1$, où le vecteur d'état $\bar{X}$ et sa dérivée temporelle $\dot{\bar{x}}$ sont complétés par les composants $x_i = \beta_A$ et $x_3 = \dot{\psi}_1$ ou $\dot{x}_i = \beta_A$ et $\dot{x}_3 = \ddot{\psi}_A$, $m_A$ désignant la masse de la semi-remorque, $l_G$ la distance mesurée dans le sens de la longueur du véhicule entre l'axe de sellette d'attelage et le centre de gravité du véhicule tracteur, $l_{AV}$ la distance entre le centre de gravité de la semi-remorque (12) et l'axe de sellette d'attelage, $l_{AH}$ la distance entre le centre de gravité de la semi-remorque et l'essieu de la semi-remorque, $C_A$ la rigidité de dérive des roues de l'essieu de semi-remorque et $J_A$ le moment d'inertie-de lacet de la semi-remorque (12), où l'actualisation des grandeurs d'état de la dynamique de conduite que sont $\beta_z$ (k-1), $\beta_A$ (k-1), $\dot{\psi}_Z$ (k-1) et $\dot{\psi}_A$ (k-1), ayant été saisies à un moment t(k-1) est effectuée au moment t(k), ultérieur de la durée de cycle $T_k$, par évaluation du système d'équation

$$\bar{X}(k) = \left\{\frac{[P]}{T_k} - [Q]\right\}^{-1} \cdot \left\{\frac{[P]}{T_k} \cdot \bar{X}(k-1) + \bar{C} \cdot \delta(k)\right\}$$

avec les valeurs des éléments matriciels $p_{ij}$ et $q_{ij}$ actualisées au moment t(k).

2. Procédé selon la revendication 1, **caractérisé en ce que** l'angle de flottement $\beta_z$ est aussi contrôlé à vitesse constante du véhicule routier par une évaluation de la relation

$$\beta_Z = \delta \cdot \frac{l_H}{l_Z}$$

3. Procédé selon la revendication 1 ou 2, **caractérisé en ce que** l'angle de flottement $\beta_z$ du véhicule tracteur est aussi obtenu par une évaluation de la relation

$$\beta_z = \int_{t_0(h=0)}^{t_c(h=\delta_c)} \left(\frac{a_q}{v} - \dot{\psi}\right) dt$$

pour la durée d'intégration $t_i = t_c - t_0$, pendant laquelle le conducteur règle l'angle de braquage δ exigé pour la négociation d'un virage, $a_q$ désignant l'accélération transversale subie par le véhicule routier.

4. Procédé selon l'une des revendications 1 à 3 pour un train routier articulé à véhicule tracteur à deux essieux et semi-remorque à un essieu, **caractérisé en ce que** l'angle de flottement $\beta_A$ de la semi-remorque (12) est obtenu par une évaluation de la relation

$$\beta_A = \varphi + \beta_Z - \frac{\dot{\Psi}(l_G + l_{AV})}{v}$$

où φ désigne l'angle de cassure augmentant à proportion de l'augmentation de l'angle de braquage δ et formé par les plans médians longitudinaux du véhicule tracteur (11) et de la semi-remorque (12) se coupant sur l'axe de sellette d'attelage.

5. Procédé selon la revendication 4, **caractérisé en ce que** l'angle de cassure φ est saisi par une évaluation de la relation

$$\varphi = 180° - \arccos\left(\frac{l_A}{\sqrt{R_A^2 + l_A^2}}\right) - \arccos\left(\frac{R_A^2 - R_v^2 + l_v^2 - l_A^2}{2 \cdot l_v \sqrt{R_A^2 + l_A^2}}\right)$$

où $R_V$ désigne le rayon moyen de tracé de virage des roues avant du véhicule tracteur (11) et $R_\lambda$ le rayon moyen de tracé de virage des roues de la semi-remorque (12), $R_V$ et $R_\lambda$ étant donnés par la relation

$$R_{V,A} = \frac{b_{spurV,A} \cdot v_{AchseV,A}}{\left(v_{Rl} - v_{Rr}\right)_{V,A}}$$

où $b_{spurV,A}$ désigne les voies sur l'essieu avant du véhicule tracteur ($b_{spurV}$) ou sur l'essieu de semi-remorque ($b_{spurA}$), $v_{R1}$ et $v_{Rr}$ les vitesses circonférentielles de roue sur les roues gauche et droite de l'essieu de véhicule correspondant et $v_{AchseV,A}$ leurs valeurs algébriques moyennes.

6. Procédé selon l'une des revendications 1 à 5 pour un train routier articulé à véhicule tracteur à deux essieux et semi-remorque à un essieu, **caractérisé en ce que** les rigidités de dérive $C_V$ et $C_H$ des roues du véhicule tracteur et la rigidité de dérive $C_A$ des roues de la semi-remorque (12) sont saisies par évaluation des relations suivantes lors d'une négociation de virage stationnaire du véhicule tracteur ou du train :

$$0 = -\left(C_v + C_H\right)\beta_Z + \left(\frac{C_H l_H - C_V l_v}{v} - m_z v\right)\dot{\psi} - C_A \beta_A + \left(\frac{C_A L_{AH}}{v} - m_A v\right)\dot{\psi} + C_V \delta$$

$$0 = \left(C_H l_H - C_V l_v\right)\beta_Z - \frac{C_V l_v^2 + C_H l_H^2}{v}\dot{\psi} + C_A l_G \beta_A + \left(m_A v l_G - \frac{C_A l_{AH} l_G}{v}\right)\dot{\psi} + C_v l_v \delta$$

$$0 = C_A\left(l_{AV} + l_{AH}\right)\beta_A + \left(m_A v l_{AV} - \frac{C_A l_{AH}\left(l_{AV} + l_{AH}\right)}{v}\right)\dot{\psi},$$

où $\dot{\psi}$ désigne une vitesse de lacet identique pour le véhicule tracteur (11) et la semi-remorque (12).

7. Dispositif pour la régulation de la dynamique de conduite sur un véhicule routier formé en tant que semi-remorque ou train articulé composé d'un véhicule tracteur et d'un véhicule remorqué, recourant au procédé selon l'une des revendicaticns 1 à 6, notamment pour un véhicule utilitaire dont les freins de roue, commandés par des signaux de sertie d'une unité de commande électronique, sont activables isolément ou à plusieurs dans le sens d'un souhait de ralentissement du véhicule émis par le conducteur, applicable par activation d'un émetteur de consigne, d'une part, mais aussi, indépendamment d'une activation de l'installation de frein par le conducteur, dans le sens de la

conservation d'un comportement de conduite dynamiquement stable, d'autre part, de manière à influencer de manière compensatoire les variations de la vitesse de lacet $\dot{\psi}$ réglée par prescription de l'angle de braquage $\delta$ lors d'une négociation de virage, pour la saisie continue de laquelle un senseur de vitesse de lacet est prévu, à partir d'une valeur de consigne résultant de la prescription d'angle de braquage et de la vitesse de véhicule mesurée dans le sens d'une approximation de la valeur de consigne, un calculateur de simulation étant prévu pour la prescription de valeur de consigne, lequel génère des grandeurs de référence pour la vitesse de lacet $\dot{\psi}$ au moins sur la base d'un modèle représentatif du véhicule routier quant à ses caractéristiques constructives, son état de charge, et ses données de service, formé à partir des valeurs mesurées de l'angle de braquage $\delta$ et de la vitesse de véhicule $v_X$ au moins, **caractérisé en ce que** le calculateur de simulation est conçu pour une évaluation cyclique des équations de mouvement d'un train articulé en tant que modèle de référence de véhicule, des routines étant implémentées par l'unité de commande électronique (25) pour une détermination adaptative des grandeurs suivantes au moins à partir des paramètres ($n_{V1}$, $n_{Vr}$, $n_{H1}$, $n_{Hr}$, $n_{A1}$, $n_{Ar}$, $M_{mot}$, $P_{VA}$, $P_{HA}$) mesurables pendant la conduite du train composé du véhicule tracteur et de la semi-remorque :

masse totale $m_{ges}$ du train
masse $m_Z$ du véhicule tracteur
masse $m_A$ de la semi-remorque
empattement $l_Z$ du véhicule tracteur
répartition de charge d'essieu $P_{VA}/P_{HA}$ du véhicule tracteur
répartition de charge d'essieu du train ou charge d'essieu arrière $P_A$ de la semi-remorque,
ainsi que des routines pour l'estimation
g) du moment d'inertie $J_Z$ du véhicule tracteur autour de son axe vertical
et
h) du moment d'inertie $J_A$ de la semi-remorque autour de son axe vertical.

**8.** Dispositif selon la revendication 7, **caractérisé en ce que** la masse $m_Z$ du véhicule tracteur (11) et la masse totale $m_{ges}$ d'un semi-remorque ou train articulé sont déterminées par évaluation de la relation

$$m_{ges} = \frac{M_{mot} \cdot \frac{n_{mot}}{v} \cdot \eta}{\left(Z_{HSP} - Z_{ist}\right)}.$$

où $M_{mot}$ désigne le moment de sortie du moteur mesuré en [Nm], $n_{mot}$ la vitesse de rotation du moteur mesurée en [$s^{-1}$], v la vitesse du véhicule mesurée en [$ms^{-1}$], $\eta$ le rendement global **caractérisé par** un nombre sans dimension $<1$ de la transmission de poussée du véhicule tracteur, $Z_{HSP}$ la décélération du véhicule produite pendant une pause de changement de vitesse en haut sans transmission, où le conducteur passe un rapport d'engrenage correspondant à un régime inférieur du moteur , et $Z_{ist}$ l'accélération (en tant que décélération négative) produite en régime d'accélération du véhicule tracteur réglé après le changement de rapport, la masse $m_A$ de la semi-remorque pouvant être saisie par évaluation de la relation $m_A = m_{ges} - m_Z$.

**9.** Dispositif selon la revendication 7 ou 8, **caractérisé en ce que** l'unité de commande électronique (25) saisit l'empattement 1 du véhicule tracteur à partir d'une évaluation des signaux de sortie de senseurs de vitesse de roue séparément affectés aux roues du véhicule tracteur, suivant la relation

$$l_Z = \sqrt{R_y^2 - R_H^2}$$

où $R_V$ et $R_H$ désignent les rayons moyens de tracé des roues avant et arrière du véhicule tracteur saisis lors d'une négociation de virage stationnaire (angle de braquage $\delta$ constant) avec une vitesse modérée de véhicule ($v < 20$ km/h), suivant la relation :

$$R_{V,H} = \frac{b_{V,H} \cdot \left(v_{V,Hl} + v_{V,Hr}\right)}{\left(v_{V,Hl} - v_{V,Hr}\right) \cdot 2}$$

$b_{V,H}$ les voies $b_V$ et $b_H$ sur les essieux avant et arrière du véhicule tracteur (11) et $v_{V,H1}$ ainsi que $v_{V,Hr}$ les vitesses des roues avant ou arrière gauche et droite du véhicule tracteur.

**10.** Dispositif selon l'une des revendications 7 à 9, **caractérisé en ce que** l'unité de commande électronique saisit l'empattement $l_Z$ du véhicule tracteur par évaluation de la relation

$$l_Z = \frac{\delta}{\Psi_Z} \cdot v_z$$

**11.** Dispositif selon l'une des revendications 7 à 10 pour un train articulé où un senseur de vitesse de roue ($30_1$ à $30_6$) est affecté à chacune de toutes les roues du véhicule, **caractérisé en ce qu'**est prévu un senseur électronique ou électromécanique d'angle de cassure (67), au moyen duquel peut être saisi l'angle $\varphi$ sous lequel les plans médians longitudinaux verticaux du véhicule tracteur (11) et de la semi-remorque (12) du train se coupent sur l'axe d'articulation de celui-ci, et **en ce que** l'unité de commande électronique (25) saisit la longueur $l_A$ de la semi-remorque mesurée entre la sellette d'attelage et l'essieu de la semi-remorque (49) à partir d'une évaluation de la relation

$$l_A = \frac{R_H - R_A \sqrt{1 + \tan^2\varphi}}{\sin\varphi} + R_A \tan\varphi$$

où $R_H$ et $R_A$ désignent les rayons moyens de tracé $R_{H,A}$ des roues arrière du véhicule tracteur et des roues de la semi-remorque, qui peuvent quant à eux être saisis suivant la relation

$$R_{H,A} = \frac{b_{H,A}\left(v_{H,Al} + v_{H,Ar}\right)}{\left(v_{H,Al} - v_{H,Ar}\right) \cdot 2}$$

où $b_{H,A}$ désigne les voies $b_H$ et $b_A$ respectivement de l'essieu arrière du véhicule tracteur et de la semi-remorque.

**12.** Dispositif selon la revendication 11, **caractérisé en ce que** l'unité de commande électronique (25) saisit la distance $l_{SH}$ entre le point d'attelage et l'essieu arrière du véhicule tracteur (11) par une évaluation de la relation

$$l_{SH} = \frac{R_H - R_A \sqrt{\tan^2\varphi + 1}}{\tan\varphi}$$

**13.** Dispositif selon l'une des revendications 7 à 12, **caractérisé en ce que** le véhicule tracteur (11) est muni d'au moins un senseur de charge d'essieu, générant un signal de sortie électrique traitable par l'unité de commande électronique, lequel représente une mesure pour la charge $P_{VA}$ ou $F_{HA}$ supportée par l'essieu du véhicule soumis à une surveillance de charge.

**14.** Dispositif selon la revendication 13, **caractérisé en ce que** l'unité de commande électronique (25) transmet une détermination de la distance $l_v$ entre le centre de gravité du véhicule et son essieu avant suivant la relation

$$l_v = l_z \cdot \frac{P_{HA}}{m_Z}$$

si le senseur de charge d'essieu est affecté à l'essieu arrière du véhicule tracteur et transmet une détermination de cette distance $l_v$ suivant la relation

$$l_v = l_z \cdot \left(1 - \frac{P_{VA}}{m_Z}\right)$$

si le senseur de charge d'essieu est affecté à l'essieu avant du véhicule tracteur.

**15.** Dispositif selon l'une des revendications 7 à 14 sur un train articulé dont la semi-remorque est munie d'un senseur de charge d'essieu, générant un signal de sortie électrique traitable par l'unité de commande électronique, caractéristique pour la charge $P_{AHA}$ supportée par l'essieu de la semi-remorque sur la voie de roulement, **caractérisé en ce que** l'unité de commande électronique saisit la distance $l_{AV}$ entre le centre de gravité de la semi-remorque (12) et la sellette d'attelage suivant la relation

$$l_{AV} = l_A \cdot \frac{P_{HA}}{m_A}$$

où $l_A$ désigne la distance entre l'essieu de la semi-remorque et le point d'attelage et $m_A$ la masse de la semi-remorque.

**16.** Dispositif selon l'une des revendications 7 à 15 sur un train articulé dont le véhicule tracteur est muni d'un senseur de charge d'essieu, générant un signal de sortie électrique traitable par l'unité de commande électronique (25), caractéristique pour la charge $m_{ZHA}$ supportée par l'essieu arrière du véhicule tracteur sur la voie de roulement, **caractérisé en ce que** l'unité de commande électronique (25) saisit la distance $l_{AV}$ entre le centre de gravité de la semi-remorque et la sellette d'attelage suivant la relation

$$l_{AV} = l_A \cdot \left(1 - \frac{\left(m_{ZHA} - m_{ZHAleer}\right)}{m_A}\right) \cdot \frac{l_Z}{l_{SV}}$$

où $m_{ZHAleer}$ désigne la masse supportée par l'essieu arrière du véhicule tracteur sans semi-remorque, $m_A$ la masse de la semi-remorque et $l_{SV}$ la distance entre la sellette d'attelage et l'essieu avant du véhicule tracteur.

**17.** Dispositif selon l'une des revendications 7 à 16 sur un train articulé muni d'un senseur générant un signal de sortie électrique traitable par l'unité de commande électronique (25), caractéristique pour la part de masse $m_{AS}$ de la semi-renorque (12) supportée par la sellette d'attelage du véhicule tracteur, **caractérisé en ce que** l'unité de commande électronique (25) saisit la distance $l_{AV}$ entre le centre de gravité de la semi-remorque et la sellette d'attelage suivant la relation

$$l_{AV} = l_A \cdot \left(1 - \frac{m_{AS}}{m_A}\right)$$

**18.** Dispositif selon l'une des revendications 7 à 17, **caractérisé en ce que** l'unité de commande électronique transmet une estimation du moment d'inertie-de lacet $J_Z$ du véhicule tracteur (11) et du moment d'inertie-de lacet $J_A$ de la semi-remorque (12) suivant la/les relation(s)

$$J_Z = \left(m_V \cdot l_V^2 + m_H \cdot l_H^2\right) \cdot 1{,}1$$

et

$$J_A = \left(m_{AV} \cdot l_{Av}^2 \div m_{AH} \cdot l_{AH}^2\right) \cdot 1{,}1$$

où $m_v$ désigne la part de masse supportée par l'essieu avant du véhicule tracteur, $m_H$ la part de masse du véhicule tracteur supportée par l'essieu arrière de celui-ci sur la voie de roulement, $l_H$ la distance ($l_Z$ - $l_v$) entre le centre de gravité du véhicule tracteur et l'essieu arrière du véhicule tracteur, $m_{AV}$ la part de masse de la semi-remorque supportée par la sellette d'attelage, $m_{AH}$ la part de masse de la semi-remorque supportée par les roues arrière de la semi-remorque sur la voie de roulement et $l_{AH} = l_A - l_{AV}$ la distance entre le centre de gravité de la semi-remorque et l'essieu arrière (49) de la semi-remorque (12).

**19.** Dispositif selon la revendication 13 ou selon la revendication 13 et l'une des revendications 14 à 18 sur un véhicule routier poids lourd ou train routier articulé muni d'une suspension pneumatique, **caractérisé en ce que** la sensorique de charge d'essieu est implémentée par une sensorique de pression pour la pression de suspension sur l'essieu du véhicule soumis à une surveillance.

**20.** Dispositif selon l'une des revendications 7 à 19, **caractérisé en ce que** l'unité de commande électronique (25) détermine la charge d'essieu arrière $P_{HA}$ du véhicule tracteur (11) dans un mode de freinage où seuls les freins de roue arrière sont actionnés ($z < 0{,}2$ g) pendant une décélération modérée du véhicule, à partir d'une évaluation de la relation

$$P_{HA} = \frac{m_{Z,ges} \cdot k_{HA} \cdot Z}{\lambda_{HA}}$$

où Z désigne la décélération de véhicule mesurée, $\lambda_{HA}$ le patinage de frein saisi suivant la relation

$$\lambda_{HA} = \frac{n_{VA} - n_{HA}}{n_{VA}} \, [\%]$$

et $k_{HA}$ une constante de pneu correspondant au rapport $\lambda/\mu$ entre le coefficient d'adhésion $\mu$ appliqué et le patinage de frein $\lambda$ généré par l'actionnement du frein, un diamètre de roue identique étant supposé pour les roues avant et arrière, $n_{VA}$ les vitesses de roue des roues (avant) non freinées et $n_{KA}$ les vitesses de roue des roues (arrière) freinées du véhicule tracteur (11).

**21.** Dispositif selon la revendication 20, **caractérisé en ce que** l'unité de commande électronique (25) saisit la charge d'essieu avant $P_{VA}$ du véhicule tracteur (11) par une évaluation de la relation

$$P_{VA} = \frac{k_{VA} \cdot f_{MZ} \cdot a \cdot P_{HA}}{k_{HA}}$$

où $k_{VA}$ désigne la constante de pneu (n) des roues avant du véhicule tracteur (11), $f_{MZ}$ le rapport dimensionnel des freins de roue avant et de roue arrière correspondant au rapport $B_{VA}/B_{HA}$ entre la force de freinage d'essieu avant $B_{VA}$ et la force de freinage d'essieu arrière $B_{HA}$, si la même pression de commande est appliquée sur tous les freins de roue, a le rapport de pression d'actionnement $P_{VA}/P_{HA}$ résultant de la régulation à la même vitesse instantanée, lors d'un freinage, de toutes les roues de véhicule freinées, par régulation de répartition de la force de freinage.

**22.** Dispositif selon la revendication 20 ou 21, **caractérisé en ce qu'**il est procédé à une saisie adaptative des constantes de pneu $k_{VAl}$ et $k_{VAr}$ des roues avant gauche et droite du véhicule tracteur et des constantes de pneu $k_{HAl}$ et $k_{HAr}$ des roues arrière gauche et droite par évaluation des relations

$$k_{VAl,r} = \frac{\lambda_{VAl,r} - P_{VA}}{2 \cdot Z \cdot m_Z}$$

et

$$k_{HAl,r} = \frac{\lambda_{HAl,r} \cdot P_{HA}}{2 \cdot Z \cdot m_Z}$$

pour des freinages avec décélération modérée de véhicule ($Z < 0{,}2$ g).

**23.** Dispositif selon la revendication 22, **caractérisé en ce que** les constantes de pneu $k_{Val,\,r}$ et $k_{Hal,\,r}$ sont déterminées par cycles alternés pendant lesquels les constantes de pneu $k_{Val}$ et $k_{Har}$ ou $k_{var}$ et $k_{Hal}$ sont respectivement saisies pour une roue avant et pour la roue arrière diagonalement opposée à celle-ci du véhicule tracteur.

**24.** Dispositif selon l'une des revendications 7 à 19 pour un véhicule muni d'un dispositif de régulation régulant le rapport

$$\Phi = \frac{B_{VA}}{B_{HA}}$$

entre la force de freinage d'essieu avant $B_{VA}$ et la force de freinage d'essieu arrière $B_{HA}$ suivant une relation

$$\Phi = a + b \cdot Z_{soll}$$

de manière que, lors d'un freinage de toutes les roues du véhicule, celles-ci aient essentiellement la même vitesse circonférentielle de roue, **caractérisé en ce que** l'unité de commande électronique (25) communique, pour une saisie adaptative d'une constante de pneu $k_{HA}$ se rapportant à l'essieu pour les roues de véhicule entraînées, notamment les roues arrière du véhicule, une évaluation du rapport

$$k_{HA} = \frac{\lambda_{HAntrieb} \cdot P_{HA}}{Z_{vorwärts} \cdot (P_{VA} + P_{HA})}$$

où $\lambda_{HA}$ désigne le patinage d'entraînement et $Z_{vorwärts}$ l'accélération du véhicule, et une évaluation du rapport pour une saisie adaptative d'une constante de pneu $k_{VA}$ se rapportant à l'essieu pour les roues de véhicule non entraînées,

$$k_{VA} = \frac{m_k - k_{HA}}{f_{MZ} \cdot a}$$

où $m_k$ désigne une constante donnée par la relation

$$m_k = \frac{k_{HA} \cdot (P_{VA} + P_{HA})}{P_{HA}}$$

**25.** Dispositif selon l'une des revendications 7 à 24 pour un train routier formé en tant que train articulé, **caractérisé en ce que** le véhicule tracteur ainsi que le véhicule remorqué sont chacun munis d'un senseur de vitesse de lacet.

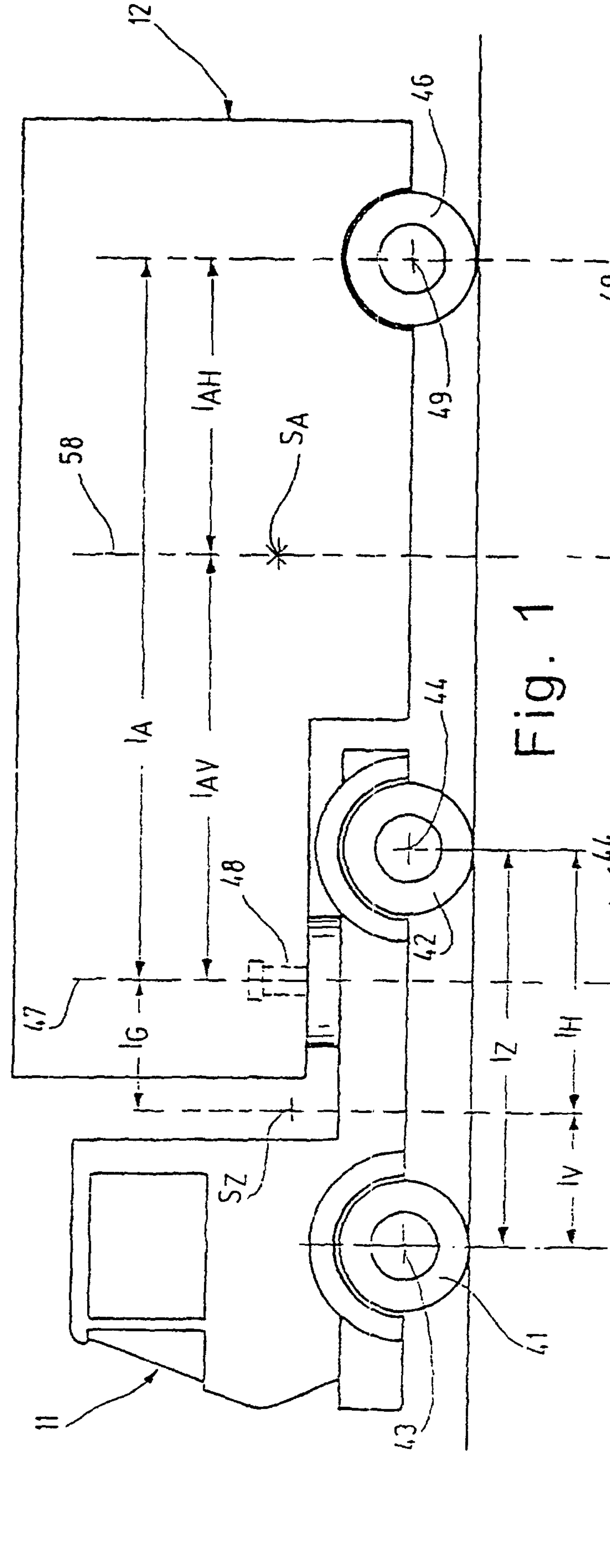
12
46
49
58
SA
lAH
lA
lAV
44
48
42
47
lG
lZ
lH
lV
SZ
41
43
11

Fig. 1

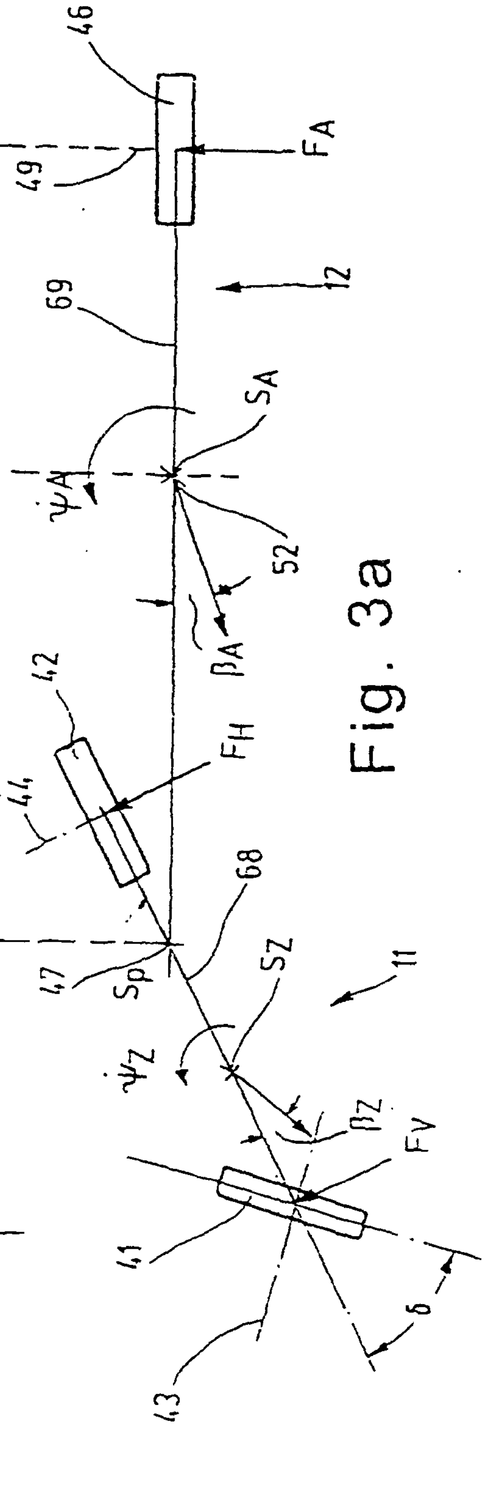
46
FA
49
12
69
SA
ψA
52
βA
42
FH
44
68
47
Sp
SZ
11
ψZ
βZ
FV
41
δ
43

Fig. 3a

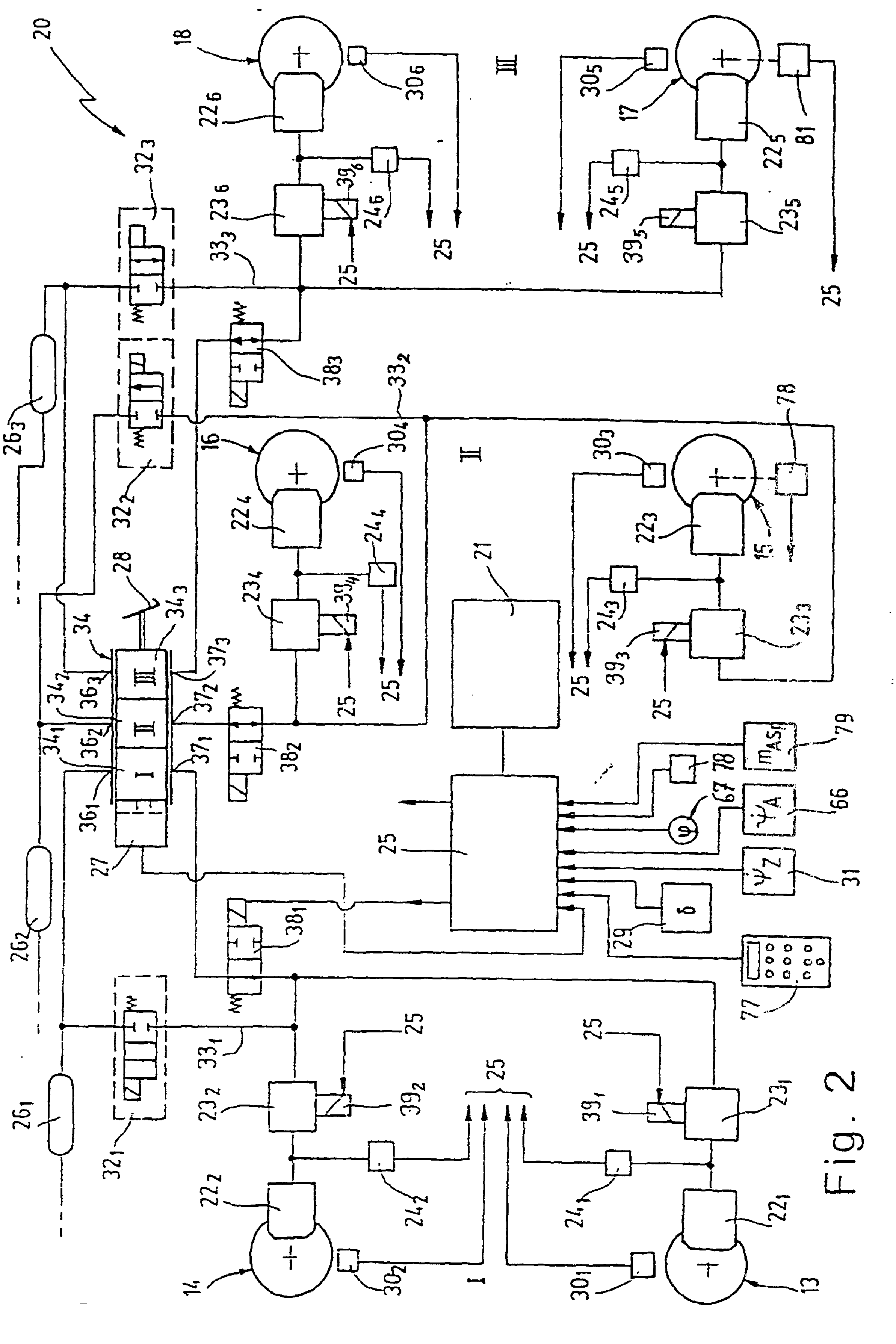

Fig. 2

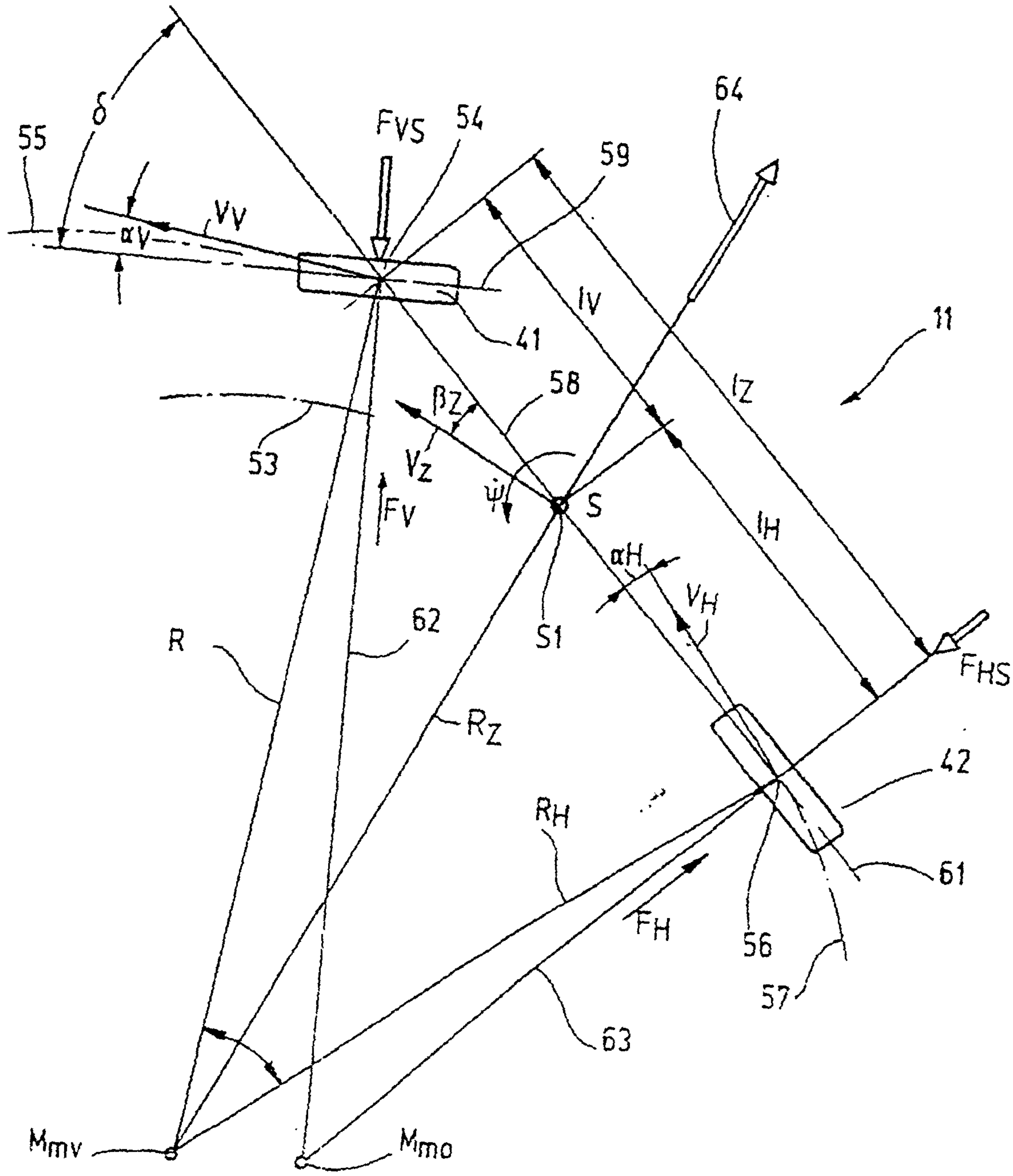
δ
55
αV
VV
FVS
54
59
64
41
lV
11
lZ
58
βZ
53
VZ
ψ̇
S
FV
lH
S1
αH
VH
R
62
FHS
RZ
42
RH
61
FH
56
57
63
Mmv
Mmo

Fig. 3b

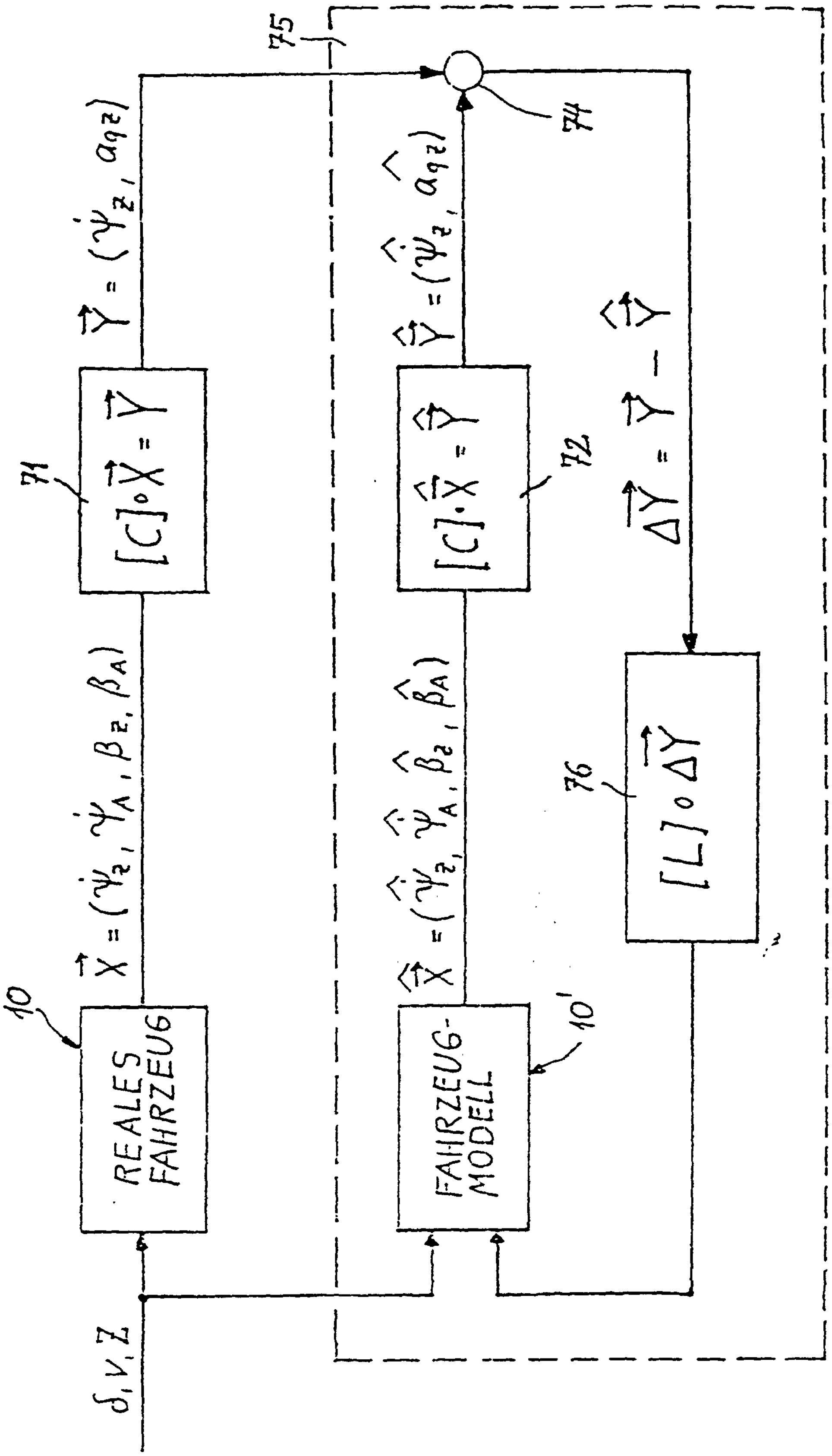


Fig. 4

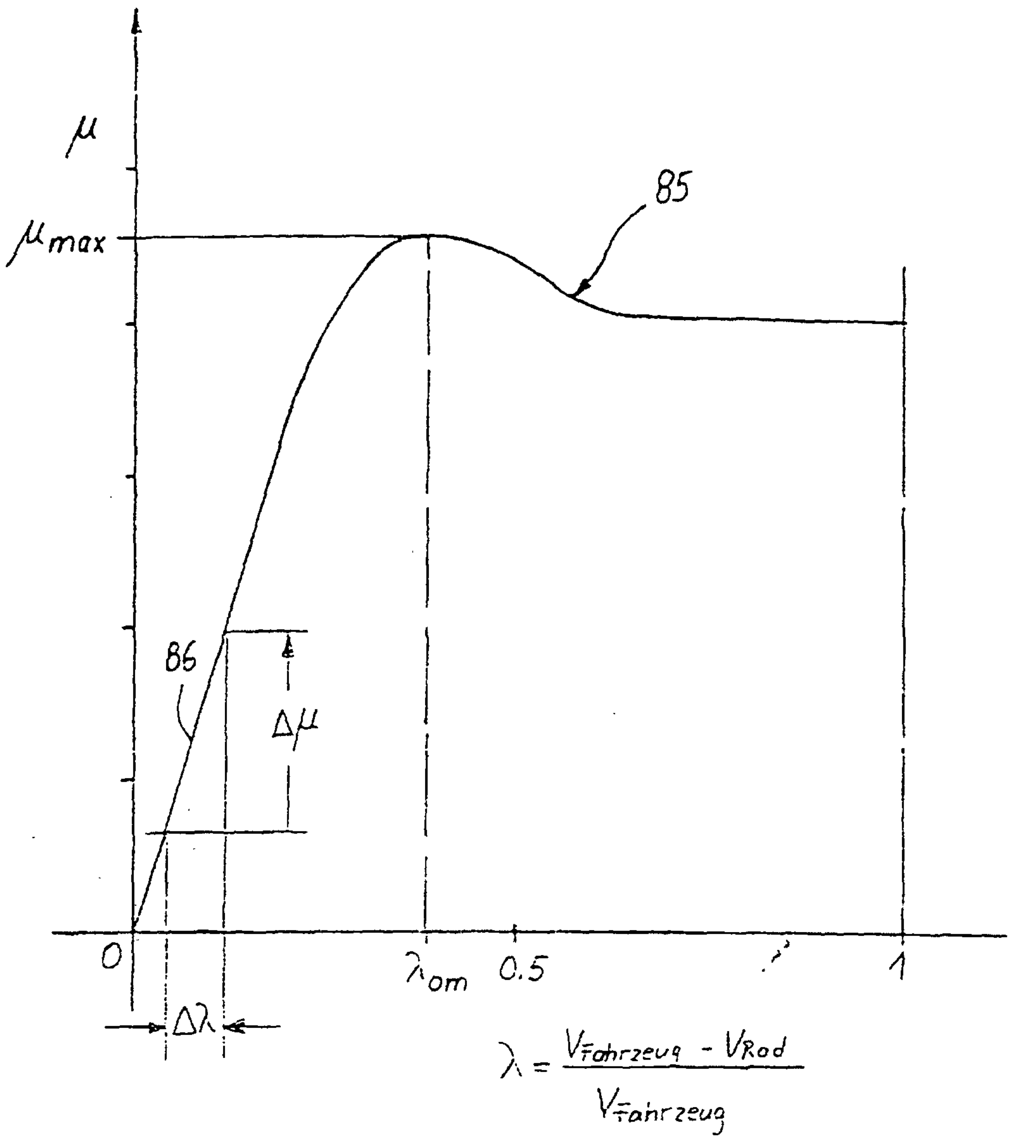


Fig. 5